(19)

Europäisches
Patentamt
European
Patent Office
Office européen
des brevets

(11) **EP 4 349 169 A1**

(12) **EUROPEAN PATENT APPLICATION**
published in accordance with Art. 153(4) EPC

(43) Date of publication:
**10.04.2024  Bulletin 2024/15**

(21) Application number: **22816144.4**

(22) Date of filing: **01.06.2022**

(51) International Patent Classification (IPC):
*A01N 43/16* (2006.01)    *A01N 25/00* (2006.01)
*A01N 25/24* (2006.01)    *A01P 3/00* (2006.01)

(52) Cooperative Patent Classification (CPC):
**A01N 25/00; A01N 25/24; A01N 43/16; A01P 3/00**

(86) International application number:
**PCT/JP2022/022264**

(87) International publication number:
**WO 2022/255398 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2021   JP 2021093226**

(71) Applicant: **Mitsui Chemicals Crop & Life Solutions,
Inc.**
**Tokyo 103-0027 (JP)**

(72) Inventors:
• **OHARA Toshiaki**
  **Yasu-shi, Shiga 520-2362 (JP)**

• **KITANO Tomoyuki**
  **Yasu-shi, Shiga 520-2362 (JP)**
• **FUKUMOTO Takeshi**
  **Mobara-shi, Chiba 297-0017 (JP)**
• **SASAKURA Niiha**
  **Shinshiro-shi, Aichi 441-1315 (JP)**
• **OKAMOTO Keita**
  **Yasu-shi, Shiga 520-2362 (JP)**
• **NOMURA Kazuki**
  **Yasu-shi, Shiga 520-2362 (JP)**

(74) Representative: **J A Kemp LLP**
**80 Turnmill Street**
**London EC1M 5QU (GB)**

(54) **COMPOSITION HAVING ENHANCED D-TAGATOSE PLANT-BLIGHT-CONTROLLING EFFECT AND RAIN RESISTANCE**

(57)    An object of the present invention is to provide a plant disease control composition with enhanced efficacy and improved rainfastness of D-tagatose, and a plant disease control method using the composition.

The present invention is a plant disease control composition comprising D-tagatose as an active ingredient, an oil component and a surfactant, and is effective against plant diseases, especially diseases caused by fungi and bacteria.

**EP 4 349 169 A1**

**Description**

TECHNICAL FIELD

The present invention relates to a plant disease control composition in which the plant disease control effect and rainfastness of an active ingredient are enhanced by blending an oil component and a surfactant in the composition comprising D-tagatose as the active ingredient, and to a plant disease control method using the composition.

BACKGROUND ART

Agricultural chemicals are used in agricultural production for the purpose of controlling diseases and pests of agricultural crops and weeds to save labor in agricultural work and to stabilize the quality and yield of agricultural products, and are indispensable in today's agriculture to ensure safe and secure agricultural products. Examples of agricultural chemicals include herbicides, insecticides, fungicides, and plant growth regulators. In addition, fungicides intended for disease control, i.e., plant disease control agents are also used, but frequent and excessive use of fungicides with the same action against specific plant diseases as a target has caused the target plant pathogens to become resistant to the fungicides, which has become a problem.

On the other hand, recently, consumer interest in crops grown with reduced agricultural chemicals and social concern for reducing the environmental impact of chemically synthesized agricultural chemicals have been on the rise. Under these circumstances, there is a need for plant disease control agents and methods that have less impact on the environment in comparison with conventional chemically synthesized agricultural chemicals, have a broad spectrum against various diseases, and are highly effective against resistant fungi for which existing fungicides are no longer effective.

D-tagatose is a monosaccharide classified as a ketose and is classified as a rare sugar that occurs in nature in only trace amounts (Non Patent Document 1). It has also been declared safe by the Food and Drug Administration (FDA) and World Health Organization (WHO) (Non Patent Documents 2 and 3) and is used as a food or food additive.

D-tagatose has been reported to be effective as a plant disease control agent (Patent Document 1 and Non Patent Document 4). For example, it has been shown to be effective in controlling diseases caused by obligate parasites, for example downy mildew (cucumber downy mildew, vine downy mildew and cabbage downy mildew, etc.), powdery mildew (cucumber powdery mildew, etc.), rust (wheat leaf rust, etc.), and diseases caused by oomycetes, for example tomato late blight and pythium seedling blight, and to be useful as a plant disease control agent (Patent Document 3 and Non Patent Document 4). It has also been shown to exhibit synergistic control effects against various plant diseases when combined with specific fungicide components (Patent Document 3).

For monosaccharides including D-tagatose, it has been shown that the plant disease control effect of monosaccharides can be significantly enhanced by combining them with nonionic surfactants, anionic surfactants, cationic surfactants, amphoteric surfactants, water-soluble polymers, amino acids, amino sugars, disaccharide alcohols or salts, and that they are effective plant disease control agents (Patent Document 2).

It is widely known that oil components can be used to enhance the efficacy of agents used as agricultural chemicals. Agricultural chemicals are usually fat-soluble compounds, and dispersing them in oil components can improve spreading power, foliar penetration, and topical migration during application. However, since agricultural chemicals may show chemical damage to crops depending on their compatibility with oil components, there are a few examples of agricultural chemicals being used as OD agents comprising oil components. Particularly in Oil Dispersion (OD agents), emulsifiability by mixing oil and surfactant is important, and it is important to find a specific surfactant combination with oil.

On the other hand, D-tagatose is a highly water-soluble compound and exists in equilibrium in aqueous solution with α-pyranose, β-pyranose, α-furanose, β-furanose, and linear structures. The effect of mixing highly water-soluble compounds including chemically synthesized agricultural chemicals with oil components on efficacy enhancement has not been clarified.

PRIOR ART DOCUMENTS

Patent Documents

Patent Document 1: WO 2010/021121
Patent Document 2: WO 2014/142074

Non Patent Documents

Non Patent Document 1: International Society of Rare Sugars. http://www.isrs.kagawa-u.ac.jp/definition.html (2002).
Non Patent Document 2: Rulis, A. M. Agency response letter GRAS notice No. GRN 000078. Washington, DC: US Food and Drug Administration: Center for Food Safety and Applied Nutrition: Office of Food Additive Safety. http://pages.citebite.com/e2f2x0h3y0tjw(2001).
Non Patent Document 3: Joint FAO/WHO expert committee on food additives sixty-third meeting. Summary and conclusions. http://www.fao.org/3/a-at878e.PDF (2004).
Non Patent Document 4: The rare sugar D-Tagatose protects plants from downy mildews and is a safe fungicidal agrochemical. Commun Biol. 2020 Aug 5; 3(1): 423.

SUMMARY OF INVENTION

Problems to be Solved by the Invention

It has been shown that monosaccharides including D-tagatose can significantly enhance the plant disease control effect of monosaccharides when combined with nonionic surfactants, anionic surfactants, cationic surfactants, amphoteric surfactants, water-soluble polymers, amino acids, amino sugars, disaccharide alcohols or salts (Patent Document 2). However, the enhancement of efficacy and the improvement of rainfastness by mixing oil components with surfactants has not been clarified.

The combination of an oil component and a surfactant, etc. that can enhance the efficacy of compositions comprising D-tagatose, the oil component, the surfactant, etc., and improve stability, emulsifiability and rainfastness of the composition has not been studied and has not been clarified.

There are no examples of studies on enhancement of efficacy and an improvement of rainfastness by mixing compositions comprising D-tagatose as an active ingredient with oil components, surfactants and the like in the garden, and this has not been clarified.

An object of the present invention is to provide a plant disease control composition with enhanced efficacy and improved rainfastness of D-tagatose, and a plant disease control method using the composition.

Means for Solving the Problems

In order to solve the above problems, the inventors examined various combinations of D-tagatose with oil components and surfactants, etc., and found that the combination of D-tagatose with oil components and surfactants can enhance the plant disease control effect of D-tagatose against various plant diseases to a degree that is not expected from the single component, and can also enhance rainfastness without showing chemical damage to plants, leading to the completion of the present invention.

The present invention relates to the compositions of the following (Invention 1) to (Invention 14).

(Invention 1)

A plant disease control composition comprising D-tagatose, at least one selected from oil components, and at least one selected from surfactants.

(Invention 2)

The plant disease control composition according to the aforementioned Invention 1, wherein the oil component is at least one selected from the group consisting of fats and oils, mineral oils and essential oils.

(Invention 3)

The plant disease control composition according to the aforementioned Invention 2, wherein the fats and oils are vegetable fats and oils.

(Invention 4)

The plant disease control composition according to the aforementioned Invention 2, wherein the mineral oil is liquid paraffin.

(Invention 5)

The plant disease control composition according to the aforementioned Invention 2, wherein the essential oil is at least one selected from the group consisting of orange oil, bergamot oil and lavender oil.

(Invention 6)

The plant disease control composition according to the aforementioned Invention 3, wherein the vegetable fats and oils are at least one selected from the group consisting of soybean oil, rapeseed oil, castor oil, flaxseed oil, macadamia nut oil, sunflower oil, olive oil, coconut oil, and fatty acid methyl esterified oil derived from vegetable fats and oils.

(Invention 7)

The plant disease control composition according to any one of the aforementioned Inventions 1 to 6, wherein the surfactant is at least one selected from the group consisting of nonionic surfactants and anionic surfactants.

(Invention 8)

The plant disease control composition according to the aforementioned Invention 7, wherein the nonionic surfactant is at least one selected from the group consisting of polyoxyalkylene alkyl ethers, polyoxyalkylene sorbit fatty acid esters, sorbitan fatty acid esters, glycerin fatty acid esters, sucrose fatty acid esters and polyoxyethylene sorbitan fatty acid esters.

(Invention 9)

The plant disease control composition according to the aforementioned Invention 7, wherein the anionic surfactant is at least one selected from the group consisting of lignin sulfonates, formalin condensates of arylsulfonates, polycarboxylates, alpha-olefin sulfonates, alkyl sulfates, sulfosuccinates and arylsulfonates.

(Invention 9a)

The plant disease control composition according to any one of the aforementioned Inventions 1 to 6, wherein the surfactant is at least one selected from the group consisting of No. 1 to 45 surfactants listed in the following table:

| No. | Surfactants |
|---|---|
| 1 | POE sorbit fatty acid ester, POE hydrogenated castor oil, Dialkyl sulfosuccinate |
| 2 | POE sorbit fatty acid esters, POE hydrogenated castor oil, Sorbitan fatty acid ester, POE sorbitan fatty acid ester, Dialkyl sulfosuccinate |
| 3 | POE sorbit fatty acid ester, POE hydrogenated castor oil, Sorbitan fatty acid ester, Dialkyl sulfosuccinate |
| 4 | Anionic/nonionic surfactant blend, Solvent naphtha, 1-hexanol, Naphthalene |
| 5 | Anionic/nonionic surfactant blend, Solvent naphtha, 1-hexanol, Naphthalene, Propylene glycol |
| 6 | POE sorbit fatty acid ester, POE hydrogenated castor oil, Sorbitan fatty acid ester |
| 7 | POE castor oil, POE sorbitan fatty acid ester, Sorbitan fatty acid ester |
| 8 | POE ether type nonionic, Sorbitan fatty acid ester |
| 9 | POE(15) castor oil |
| 10 | POE(20) castor oil |
| 11 | POE(30) castor oil |
| 12 | POE(42) castor oil |
| 13 | POE(50) castor oil |

(continued)

| No. | Surfactants |
|---|---|
| 14 | POE sorbitan laurate |
| 15 | POE sorbitan palmitate |
| 16 | POE sorbitan stearate |
| 17 | POE sorbitan oleate |
| 18 | POE sorbitan trioleate |
| 19 | Polyoxyethylene sorbitol hexaoleate, also known as Polyethoxylated sorbitol hexaoleate |
| 20 | POE(30) sorbit tetraolate |
| 21 | POE(40) sorbit tetraolate |
| 22 | POE(60) sorbit tetraolate |
| 23 | POE(6) sorbit tetraolate |
| 24 | Polyoxyethylene alkyl ether |
| 25 | Polyoxyethylene oleyl ether |
| 26 | POE alkyl ether (C12-14.2) |
| 27 | POE alkyl ether (C12-C13) |
| 28 | POA alkyl ether |
| 29 | Diglycerin monolaurate |
| 30 | Glycerin monolaurate |
| 31 | Sorbitan fatty acid ester |
| 32 | Sucrose fatty acid ester |
| 33 | Sodium dialkyl sulfosuccinate |
| 34 | Metal salt of alkylbenzenesulfonic acid |
| 35 | Sodium lauryl sulfate |
| 36 | Sodium salt of formalin condensate of alkylnaphthalenesulfonic acid |
| 37 | Sodium lignin sulfonate |
| 38 | Sodium polycarboxylate |
| 39 | Sodium alpha-olefin sulfonate |
| 40 | Polyoxyethylene alkylamine |
| 41 | POE alkyl ether |
| 42 | POE oleyl ether |
| 43 | Polyalkylene oxide modified heptamethyl trisiloxane |
| 44 | Tetrasiloxan |
| 45 | Glycerin fatty acid ester |

(Invention 10)

The plant disease control composition according to any one of the aforementioned Inventions 1 to 9 and 9a, which is a plant disease control agent against fungal diseases and bacterial diseases.

(Invention 11)

A plant disease control method, characterized by applying the plant disease control composition according to any one of the aforementioned Inventions 1 to 9, 9a and 10 to a plant.

(Invention 12)

The plant disease control method according to the aforementioned Invention 11, wherein the application to the plant is carried out by bringing the plant disease control composition into contact with a plant body, or by bringing the plant disease control composition into contact with the roots or underground stems of the plant by containing it in a cultivation soil or hydroponic culture medium.

(Invention 13)

The plant disease control method according to the aforementioned Invention 11, wherein the application to the cultivation soil or hydroponic culture medium is carried out, in the case of soil, by treatment of the soil surface with the plant disease control composition, irrigation of the composition into the soil, or incorporation of the composition into the soil, and in the case of hydroponic culture medium, by dilution of the plant disease control composition into the hydroponic culture medium.

(Invention 14)

Use of a composition comprising D-tagatose, at least one selected from oil components, and at least one selected from surfactants, as a plant disease control agent.

Effects of Invention

The plant disease control composition of the present invention comprising D-tagatose, an oil component, and a surfactant can produce more enhanced plant disease control effects against various plant diseases, and also show no chemical damage to plants and improve rainfastness, compared to D-tagatose alone. These effects are facts which could not be predicted even by those skilled in the art.

MODE FOR CARRYING OUT THE INVENTION

Various terms used herein are described below.
"D-tagatose" in the present invention is a monosaccharide that is a component of polysaccharides and rare sugars, and is classified as a hexose or ketose according to its chemical structure and functional groups. It is generally a solid powder, but includes a syrup containing D-tagatose, produced by isomerizing isomerized sugar.
The "oil components" in the present invention refer to "mineral oils" which are hydrocarbon compounds or mixtures thereof comprising impurities, derived from underground resources such as natural gas and coal; "essential oils" which are volatile oils produced by plants, and "fats and oils" which are glycerin esters of fatty acids derived from plants and animals. The "fats and oils" include "animal fats and oils" and "vegetable fats and oils".
The "surfactants" in the present invention are those added to oil components for the purpose of emulsification, solubilization, dispersion, foaming, wetting, etc. Examples of "surfactants" include nonionic surfactants, anionic surfactants, cationic surfactants, and amphoteric surfactants.
The "plant disease" in the present invention refers to that in which systemic abnormal pathological symptoms such as wilting, damping-off, yellowing, dwarfism and spindly growth, and partial pathological symptoms such as spotting, leaf blight, mosaic pattern, leaf rolling, die back, root rot, club root and knotting, are induced by pathogens in plants such as agricultural crops, ornamental plants, ornamental trees and shrubs, and trees, or in other words, that in which a plant becomes ill. Examples of pathogens that cause "plant diseases" mainly include fungi, bacteria, spiroplasmas, phytoplasmas, viruses, viroids, parasitic higher plants and nematodes. In particular, the diseases caused by fungi are "fungal diseases", and the diseases caused by bacteria are "bacterial diseases".
"Fungal diseases" account for about 80 percent of the pathogens that cause plant diseases. Examples of fungi (pathogens) that cause fungal diseases include Plasmodiophorids, Oomycetes, Zygomycetes, Ascomycetes, Basidiomycetes and Deuteromycetes. Examples thereof include, without limitation, Plasmodiophorids such as club root fungus, potato powdery scab fungus and beet necrotic yellow vein virus; Oomycetes such as blight fungus, downy mildew fungus, *Pythium* spp. and *Aphanomyces* spp.; Zygomycetes such as *Rhizopus* spp.; Ascomycetes such as peach leaf curl fungus, southern corn leaf blight fungus, rice blast fungus, powdery mildew virus, anthrax fungus, fusarium head blight fungus, bakanae fungus and stem rot fungus; Basidiomycetes such as rust fungus, smut fungus, violet root rot fungus, rice cake disease fungus and rice sheath blight fungus; and Deuteromycetes such as gray mold fungus, *Alternaria* sp., *Fusarium* sp., *Penicillium* sp., *Rhizoctonia* sp., and southern blight fungus.

"Bacterial diseases" account for about 10 percent of the pathogens that cause plant disease. Examples of bacteria (pathogens) that cause bacterial diseases include the phylum Proteobacteria, which includes Gram-negative bacteria, and the phylum Actinobacteria and phylum Firmicutes, which include Gram-positive bacteria. Examples of the phylum Proteobacteria include α-proteobacteria such as *Rhizobium* sp. and Ca. *Liberibacter* sp.; β-proteobacteria such as *Acidovarax* sp., *Burkholderia* sp. and *Ralstonia* sp.; and γ-proteobacteria such as *Pseudomonas* sp., *Xanthomonas* sp. and *Erwinia* sp.; examples of the phylum Actinobacteria include *Streptomyces* sp., *Clavibacter* sp. and Curtobacterium, and examples of the phylum Firmicutes include *Bacillus* sp. and *Clostridium* sp., but the examples are not limited to only these.

The "plant" in the present invention is one that is fixed in one place and lives by taking nutrients from the air and water, and refers to one that lives by photosynthesis. Specific examples thereof include, without limitation, agricultural and horticultural crops such as rice, wheat, barley, corn, grapes, apples, pears, peaches, yellow peaches, persimmons, citrus fruits, soybeans, kidney beans, strawberries, potatoes, cabbage, lettuce, tomatoes, cucumbers, eggplants, watermelons, sugar beets, spinach, peas, pumpkins, sugarcane, tobacco, green peppers, sweet potatoes, taros, konjac, cotton, sunflowers, tulips, chrysanthemum and lawn.

The "plant body" in the present invention collectively refers to all parts constituting the "plant," such as stems, leaves, roots, seeds, flowers, and fruits. The "seed" in the present invention refers to those that store nutrients for germination by young plants and are used for agricultural propagation. Specific examples thereof include, without limitation, seeds such as corn, soybeans, cotton, rice, sugar beet, wheat, barley, sunflower, tomato, cucumber, eggplant, spinach, peas, pumpkin, sugarcane, tobacco, green pepper, and rape; seed potato such as taro, potato, sweet potato, and konjac; bulbs such as edible lily and tulip; seed bulbs such as rakkyo, and the like; and further genetically modified crops that are produced by artificially manipulating genes, etc. and do not exist naturally in the natural world, such as soybeans, corn, and cotton, etc. that have been imparted with resistance to herbicides; rice and tobacco, etc. that have been acclimated to cold climate; seeds such as corn and cotton, and potato tubers, that have been imparted with the ability to produce insecticidal substances.

The "plant disease control composition" in the present invention is a composition that controls "plant diseases", when "plants" are diseased by various pathogens, showing systemic abnormal pathological symptoms such as wilting, damping-off, yellowing, dwarfism and spindly growth, or partial pathological symptoms such as spotting, leaf blight, mosaic pattern, leaf rolling, die back, root rot, club root, and knotting.

The following is a description of a plant disease control composition of the present invention containing D-tagatose, an oil component and a surfactant.

In addition to D-tagatose that is an active ingredient, the plant disease control composition of the present invention can contain as necessary other sugars, monosaccharides, oligosaccharides to polysaccharides, neutral sugars, acidic sugars, amino sugars, sugar alcohols, and further isomers thereof, as well as at least one or more saccharides selected from the following saccharides. They includes, but are not limited, D- and L-aldoses such as glucose, mannose, allose, altrose, talose, galactose, idose, gulose, ribose, lyxose, xylose, arabinose, erythrose, threose and glyceraldehyde; D- and L-ketose such as fructose, psicose, sorbose, xylulose, ribulose, erythrulose and dihydroxyacetone; D- and L-polytols such as glucitol, mannitol, altritol, taritol, iditol, glitol, alitol, galactitol, arabitol, xylitol, ribitol, erythritol, glycerin, maltitol, lactitol, inositol and quercitol; disaccharides such as sucrose, maltose, lactose, cellobiose, trehalose and palatinose; trisaccharides such as raffinose, panose, melezitose and gentianose; and tetrasaccharides such as stachyose.

In the plant disease control compositions of the present invention, any "oil component" can be used. In particular, examples of mineral oils include, without limitation, paraffinic solvents such as liquid paraffin, paraffin, isoparaffin, vaseline and selesin; naphthenic solvents; and aromatic hydrocarbon solvents such as xylene, alkylbenzene, naphthalene, alkylnaphthalene and phenylxilyl ethane. Examples of essential oils include, without limitation, orange oil, turpentine oil, mentha oil, bergamot oil, lavender oil, lemon oil, tea tree oil, clove oil, coriander oil, citronella oil, thyme oil, rose oil, vetiver oil, hop oil, lemongrass oil and rosemary oil. Examples of fats and oils include, without limitation, animal fats and oils and vegetable fats and oils. Examples of animal fats and oils include, without limitation, fish oil (e.g., whale oil, shark oil, and liver oil), beef fat, pork fat, and milk fat. Examples of vegetable fats and oils include, without limitation, olive oil, palm oil, castor oil, soybean oil, rapeseed oil, macadamia nut oil, corn oil, sunflower oil, coconut oil, cacao-seed oil, jojoba oil, linseed oil, rice bran oil, cottonseed oil, sesame oil, peanut oil, germ oil, angelica oil, echium oil, ethiodized oil, shea butter, jatropha oil, camellia oil, neem oil, babassu oil, grape seed oil, hazelnut oil, iodized oil, tung oil, perilla oil, walnut oil, leaf oil, algae oil, mustard oil, salad oil, unsaturated fatty acid, and fatty acid methyl esterified oil derived from vegetable fats and oils (Methylated Seed Oil). Mineral oils, fats and oils (especially vegetable fats and oils), and essential oils are preferred in terms of enhancing plant disease control effect and improving rainfastness.

The "fatty acid methyl esterified oil derived from vegetable fats and oils (Methylated Seed Oil, hereinafter also referred to as "MSO")" of the present invention refers to vegetable fats and oils, the fatty acid contained in which has been methyl esterified or esterified. Examples thereof include vegetable oils and fats such as the above-mentioned soybean oil and rapeseed oil, in which the contained fatty acids have been methyl-esterified or esterified. Examples thereof include methyl-esterified rapeseed oils, esterified rapeseed oil, methyl-esterified soybean oils, esterified soybean oil, methyl-esterified coconut oils and esterified coconut oil. The specific examples of MSO include, without limitation, MES⁻100 of Drexel; STEPAN C-25, STEPAN C-42, STEPAN C-65, STEPOSOL ME, STEPOSOL SB and STEPOSOL ROE-W of Stepan; and RCM-101 of Nisshin Oillio Group Co., Ltd. and the like.

The oil component is preferably fluid at ordinary temperature. More preferable examples thereof include, without limitation, liquid paraffin, orange oil, bergamot oil, lavender oil, soybean oil, rapeseed oil, castor oil, linseed oil, macadamia nut oil, sunflower oil, olive oil, MSO and coconut oil, and even more preferable examples thereof, without limitation, include liquid paraffin, soybean oil and MSO, in terms of enhancing plant disease control effect and improving rainfastness.

In the plant disease control composition of the present invention, a combination of two or more of the oil components may be used.

In the plant disease control compositions of the present invention, any nonionic surfactant can be used as the surfactant. Specific examples thereof include acetylene glycol surfactants, fluorosurfactants, and silicone surfactants, polyoxyalkylene alkyl ethers such as POE ether type nonionic [such as polyoxyethylene alkyl ether (such as POE oleyl ether, POE alkyl ether (C12-14.2) and POE alkyl ether (C12-C13)), polyoxyethylene castor oil ether, and polyoxyethylene hydrogenated castor oil ether], polyoxyalkylene alkylamines (such as polyoxyethylene alkylamine and polyoxyethylene fatty acid amide), alkyl polyglycosides (such as decyl polyglucoside), polyoxyalkylene aryl ethers (such as polyoxyethylene styrylphenyl ether, polyoxyethylene alkylphenol, polyoxyalkylene styrylphenyl ether, polyoxyethylene benzylphenyl ether, polyoxyalkylene benzylphenyl ether, formalin condensate of polyoxyethylene styrylphenyl ether, polyoxyethylene dialkylphenyl ether, and formalin condensate of polyoxyethylene alkyl phenyl ether), glycerin fatty acid esters (fatty acid mono- or diglycerides such as glycerin monopalmitate, glycerin mono- or distearate, glycerin monobehenate, glycerin mono 12-hydroxystearate, glycerin mono- or dioleate, glycerin mono- or dicaprylate, glycerin mono- or dicaprate, glycerin mono- or dilaurate, glycerin mono- or distearate, glycerin mono- or dipalmitate, glycerin mono- or dibehenate, glycerin mono- or dioleate, glycerin diacetomonolaurate and glycerin diacetomonooleate; glycerin organic acid fatty acid esters such as acetic acid fatty acid monoglyceride, citric acid fatty acid monoglyceride, succinic acid fatty acid monoglyceride, lactic acid fatty acid monoglyceride, and diacetyl tartrate fatty acid monoglyceride; acetylated monoglycerides; medium-chain triglycerides; and the like), polyglyceryl fatty acid esters (such as diglycerin monostearate, diglycerin monolaurate, diglycerin monomyristate, diglycerin monostearate, diglycerin monooleate, tetraglycerin stearate, decaglycerin laurate and polyglycerin polyricinolate), propylene glycol fatty acid esters (such as propylene glycol monolaurate, propylene glycol monopalmitate, propylene glycol monostearate and propylene glycol monooleate), polyoxyalkylene sorbit fatty acid esters [such as polyoxyethylene sorbit fatty acid esters (POE sorbit fatty acid esters), e.g., polyoxyethylene sorbit tetraolate], sorbitan fatty acid esters (such as sorbitan monolaurate, sorbitan monopalmitate, sorbitan monostearate, sorbitan tristearate and sorbitan monooleate), polyoxyethylene sorbitan fatty acid esters (such as polyoxyethylene sorbitan monolaurate, polyoxyethylene sorbitan monostearate, polyoxyethylene sorbitan tristearate, polyoxyethylene sorbitan oleate, polyoxyethylene sorbitan trioleate, polyoxyethylene sorbitan monopalmitate and polyoxyethylene sorbitol hexaoleate), sucrose fatty acid esters (such as sucrose mono- or dicaprate and sucrose mono- or dilaurate), polyoxyalkylene fatty acid esters (such as polyoxyethylene monolaurate, polyoxyethylene distearate, polyoxyethylene fatty acid esters, polyoxyethylene resin acid esters and polyoxyethylene fatty acid diesters), polyoxyethylene polyoxypropylene block polymers (such as polyoxyethylene polyoxypropylene block polymers, alkyl polyoxyethylene polyoxypropylene block polymer ethers, and alkyl phenyl polyoxyethylene polyoxypropylene block polymer ethers), polyoxyethylene fatty acid bisphenyl ethers, fatty acid diethanolamides, and alkyl imidazolines.

Preferred examples of nonionic surfactants include, without limitation, polyoxyalkylene alkyl ethers [especially polyoxyethylene hydrogenated castor oil ether (POE hydrogenated castor oil) and polyoxyethylene castor oil ether (POE castor oil)], polyoxyalkylene sorbit fatty acid esters [especially polyoxyethylene sorbit fatty acid esters (POE sorbit fatty acid esters)], sorbitan fatty acid esters, glycerin fatty acid esters, sucrose fatty acid esters and polyoxyethylene sorbitan fatty acid esters (POE sorbitan fatty acid esters), and polyoxyalkylene alkyl ethers such as POE ether type nonionic.

In the plant disease control composition of the present invention, a combination of two or more of the nonionic surfactants may be used.

In the plant disease control compositions of the present invention any anionic surfactant can be used as the surfactant. Specific examples thereof include lignin sulfonates (such as sodium lignin sulfonate), arylsulfonates (alkylbenzenesulfonates such as sodium dodecylbenzenesulfonate; alkyl naphthalene sulfonates such as sodium alkyl naphthalene sulfonate, sodium monoalkyl naphthalene sulfonate or sodium dialkyl naphthalene sulfonate; and the like); formalin condensates of arylsulfonates (salts of formalin condensate of naphthalenesulfonic acid such as sodium salt of formalin condensate of naphthalenesulfonic acid; salts of formalin condensate of alkylnaphthalenesulfonic acid such as sodium salt of formalin condensate of alkylnaphthalenesulfonic acid; and salts of formalin condensate of phenol sulfonic acid such as sodium salt of formalin condensate of phenol sulfonic acid; and the like), α-olefin sulfonates (such as sodium a-olefin sulfonate), alkyl sulfonates (such as sodium alkyl sulfonate), alkyl diphenyl ether disulfonates (such as sodium alkyl diphenyl ether disulfonate), polyoxyethylene alkyl phenyl ether sulfonates (such as sodium polyoxyethylene alkyl phenyl ether sulfonate), polyoxyethylene alkyl ether sulfosuccinic acid half esters, alkyl sulfates (such as sodium lauryl sulfate), sulfosuccinates (dialkyl sulfosuccinates such as sodium dialkyl sulfosuccinate), polyoxyalkylene aryl ether sulfates (such as polyoxyethylene alkyl aryl ether sulfate, polyoxyethylene styryl phenyl ether sulfate, polyoxyethylene benzyl phenyl ether sulfate and polyoxyalkylene styryl phenyl ether sulfate), polyoxyalkylene alkyl ether sulfates (polyoxyethylene alkyl ether sulfates such as polyoxyethylene lauryl ether sulfate; and the like), polyoxyethylene polyoxypropylene block polymer sulfates (such as sodium polyoxyethylene polyoxypropylene block polymer sulfate), polyoxyalkylene alkyl ether acetates (polyoxyethylene alkyl ether acetates such as sodium polyoxyethylene lauryl ether acetate ; and the like), polyoxyalkylene aryl ether phosphates (such as polyoxyethylene styrenylated phenyl ether phosphate, polyoxyethylene styryl phenyl ether phosphate, polyoxyethylene benzyl phenyl ether phosphate, and polyoxyethylene alkyl phenyl ether phosphate), polyoxyalkylene alkyl ether phosphates (such as polyoxyethylene lauryl ether phosphate monoethanolamine salt and polyoxyethylene lauryl ether phosphate ester), polyoxyethylene polyoxypropylene block polymer phosphates (such as sodium polyoxyethylene polyoxypropylene block polymer phosphate), alkyl phosphate esters (such as alkyl phosphoric acids and sodium alkyl phosphates); methyl taurates (such as sodium oleyl methyl taurate); polycarboxylates (such as sodium polycarboxylates, sodium alkylene maleate copolymers, isobutylene maleate copolymers, sodium acrylate maleate copolymers and sodium polycarboxylate/ ammonium distilyl phenyl ether sulfate); and fatty acid salts (such as semi-hydrogenated beef tallow fatty acid soda soap).

Preferable examples of anionic surfactants include, without limitation, lignin sulfonates, arylsulfonates, formalin condensates of arylsulfonates, polycarboxylates, alpha-olefin sulfonates, alkyl sulfates and sulfosuccinates, more preferable examples thereof include, without limitation, sulfosuccinates, alkyl sulfates and arylsulfonates, and even more preferable examples thereof include, without limitation, dialkyl sulfosuccinates, sodium lauryl sulfates and alkylbenzenesulfonates.

In the plant disease control composition of the present invention, a combination of two or more of the anionic surfactants may be used.

In the plant disease control compositions of the present invention, any cationic surfactant and/or any amphoteric surfactant, etc. can be used as the surfactant. For example, polyoxyethylene alkylamine, polyalkylene oxide modified heptamethyl trisiloxane, tetrasiloxan and glycerin fatty acid ester can be used.

In the plant disease control composition of the present invention, a combination of two or more surfactants selected from the group consisting of the nonionic surfactants, anionic surfactants, cationic surfactants, and amphoteric surfactants, etc. described above may be used as the surfactant. For example, anionic/nonionic surfactant blend can be used.

The plant disease control composition of the present invention may contain only the above-described D-tagatose, oil component and surfactant, and as necessary thereto may be added a solvent, an anti-settling agent, an antifoaming agent, an anti-freezing agent, an antioxidant, a dispersion stabilizer, a mold inhibitor and thickener that are usually incorporated in agricultural formulations.

Examples of the solvent include nitrogen-containing compounds such as N-methylpyrrolidone, N-butylpyrrolidone and 1,3-dimethyl-2-imidazolidinone; alcohols such as methanol, ethanol, 1-propanol and 2-ethylhexanol; ethers such as 1,4-dioxane, diethyl ether and tetrahydrofuran; ketones such as acetone and ethyl methyl ketone; and esters such as methyl lactate, ethyl acetate and benzyl acetate.

Examples of the anti-settling agent include silica, hydrophobic fumed silica, organic bentonite, bentonite, and aluminum magnesium silicate.

Examples of the antifoaming agent include alcohols such as isooctadecanol and methylated silicones.

Examples of the anti-freezing agent include polyhydric alcohols such as ethylene glycol, diethylene glycol, propylene glycol and glycerin.

Examples of the mold inhibitor include sodium benzoate, potassium sorbate, 1,2-benzisothiazoline-3-one and ethyl paraben.

Examples of the thickener include calcium stearate.

However, these components are not limited to the above examples.

The proportion of each component in the present invention may be changed according to the type of component, the form of formulation, the situation of application, and the like, so cannot be generally defined. For example, the proportion of D-tagatose is from 1 to 50 parts by weight, and desirably from 5 to 40 parts by weight, the proportion of the oil component is from 10 to 98.89 parts by weight, and desirably from 30 to 93.9 parts by weight, and the proportion of the surfactant is from 0.01 to 30 parts by weight, and desirably from 0.1 to 20 parts by weight.

When the surfactant is a nonionic surfactant, the proportion thereof is more desirably from 0.1 to 30 parts by weight, and even more desirably from 1 to 20 parts by weight, and when the surfactant is an anionic surfactant, the proportion thereof is more desirably from 0.01 to 10 parts by weight, and even more desirably from 0.1 to 5 parts by weight.

In the present invention, the plant disease control composition comprising D-tagatose, an oil component, and a surfactant described above may be used, or a composition containing D-tagatose as an active ingredient and a composition containing an oil component and a surfactant may be used simultaneously or separately. When used separately, either a composition containing D-tagatose as an active ingredient or a composition containing an oil component and a surfactant may be used first before the other composition may be used, and which is used first is arbitrary. Alternatively, a compositions containing D-tagatose as an active ingredient, a composition containing an oil component, and a composition containing a surfactant may be used simultaneously or separately. When used separately, these compositions may be used in any order. The same applies to the mixing of a spreading agent comprising a commercially available oil component.

That is, the present invention includes a method for improving the control effect of D-tagatose against plant diseases and its rainfastness, and also relates to a method comprising applying D-tagatose, at least one selected from oil components and at least one selected from surfactants simultaneously or separately to a plant body.

A formulation comprising D-tagatose (for example, D-tagatose wettable powders formulation used in the Examples) and a composition comprising an oil component and a surfactant (for example, a commercially available agricultural chemicals or spreading agent, etc.) are mixed so that a ratio of D-tagatose to oil component contained therein is 1: 0.1-10, preferably 1: 0.5-3, more preferably 1: 0.5-1, most preferably 1:0.5 or 1:1 in terms of improving rainfastness. In particular, it is preferable that said composition comprises liquid paraffin or esterified or methyl esterified vegetable fats and oils (for example, MSO such as methyl-esterified rapeseed oil or esterified rapeseed oil) as the oil component.

Examples of commercially available agricultural chemicals and spreading agents comprising oil components and surfactants that can be used in the present invention include, without limitation, Melo (registered trademark), Mero (registered trademark), Tipo (registered trademark), Vazyl/Oleo (registered trademark), Vegol (registered trademark), Puresspray (registered trademark), Puperior70 Oil (registered trademark), Parka (registered trademark), Enspray99 (registered trademark), Iharol (registered trademark), Prime Oil (registered trademark), Agri-Dex (registered trademark), Crop Oil Concentrate (registered trademark), Drop Zone (registered trademark), FSCOC Supreme, Herbimax, Peptoil, Superb HC, Destiny, Dyne-Amic, FS MSO Ultara, Meth Oil, MSO/MVO, Prime Oil EV, Rivet, Soy Dex Plus, Vegetable Oil, Vegetoil, Superb HC, Biotrol, Oil Chemag extend, Chemtrol, Codacide (registered trademark), Ecotrol, Endorse, Envoy, Intac, Miller exit, Nexustmspray Adjuvant, Nuturf (registered trademark) Driftex, ProCanoil spray oil, Protec (registered trademark) oil, Rutec Control Oil, Sacoa Xseed, Simplot Oilon, Smart Crop spray oil, Spalding canola oil spray oil conc, Spraytech oil, Stoller natur'l oil, Supa stik, Synertrol (registered trademark), Xtend Plant oil, Activoil, Adigor (registered trademark), Bolster, Dasher, Effectivoil, Fastuptm, Glysarin704, Hasten (registered trademark), Impel, Infiltrator, kwickin (registered trademark), Phase Dispersant Penetrant, Plantocrop, Promax, Pronto, Protec (registered trademark) Plus, Racer ultra, Rapid oil, Rocket (registered trademark), Swift, Synertrol (registered trademark) excel, Trio sterycon oil 700, 4-Farmers speedy, Suffoil Emulsion, Kumiai Attack Oil, harvest oil, and machine oil.

The following is a description of a plant disease control method using the plant disease control composition of the present invention containing D-tagatose, an oil component and a surfactant.

The application methods of the plant disease control composition of the present invention include, for example, a method by bringing the plant disease control composition into contact with the plant body such as seeds, or by bringing the plant disease control composition into contact with the roots or underground stems of the plant by containing it in a cultivation soil or hydroponic culture medium. Specific examples of the method include stem and leaf spray treatment of the plant disease control composition on individual plants, seedling box treatment, spray treatment on soil surface, soil mixing after spray treatment on soil surface, injection treatment in soil, soil mixing after injection treatment in soil, soil irrigation treatment, soil mixing after soil irrigation treatment, dilution in hydroponic culture medium, spray treatment on plant seeds, coating treatment on plant seeds, immersion treatment on plant seeds, or powder coating treatment on plant seeds. Any application method normally used by those skilled in the art will be effective enough.

That is, the present invention relates to a plant disease control method characterized by applying a plant disease control composition to a plant; the plant disease control method in which the application to a plant is by bringing the plant disease control composition into contact with the plant body, or by bringing the plant disease control composition into contact with the roots or underground stems of the plant by containing it in a cultivation soil or hydroponic culture medium; and the plant disease control method in which the application to the cultivation soil is carried out by treatment of the soil surface with the plant disease control composition, irrigation of the composition into the soil, or incorporation of the composition into the soil, and application to the hydroponic culture medium is carried out by dilution of the plant disease control composition into the hydroponic culture medium.

The applied amount and applied concentration of the plant disease control composition of the present invention vary depending on the target crop, the target disease, the degree of disease occurrence, the formulation of the compound, the application method, and various environmental conditions, and other factors. When the composition is sprayed or irrigated, the applied amount as the amount of D-tagatose applied is appropriately from 50 to 1,000,000 g per hectare, and desirably from 100 to 500,000 g per hectare. When used for seed treatment, the applied amount as the amount of D-tagatose applied is from 0.001 to 50 g, and preferably from 0.01 to 10 g per kg of seed treated. When the plant disease control composition of the present invention is applied by, for example, stem and leaf spray treatment on individual plants, spray treatment on soil surface, injection treatment in soil, soil irrigation treatment, or dilution in a hydroponic culture medium, the composition may be diluted to an appropriate concentration on a suitable carrier before treatment. When the plant disease control composition of the present invention is brought into contact with plant seeds, it may be diluted to an appropriate concentration and then applied to the plant seeds by immersing, powdering, spraying, or coating treatment. In the case of powdering, spraying or coating treatment, the appropriate usage of the formulation as the amount of D-tagatose applied is usually about from 0.05 to 50%, and desirably from 0.1 to 30% based on the dry weight of the plant seed, but the usage is not limited to these ranges and can vary depending on the form of formulation and the type of plant seeds to be treated.

The plant disease control composition of the present invention is effective against the following types of plant diseases. Examples of specific diseases and their pathogens include, without limitation, the followings.

Rice: blast (*Magnaporthe grisea*), sheath blight (*Thanatephorus cucumeris*), brown sclerotial disease (*Ceratobasidium setariae*), small sclerotial disease (*Waitea circinata*), brown sheath blight (*Thanatephorus cucumeris*), globular sclerotial disease (*Sclerotium hydrophilum*), red sclerotial disease (*Wairea circinata*), black leaf blight (*Entyloma dactylidis*), stem rot (*Magnaporthe salvinii*), gray sclerotial disease (*Ceratobasidium cornigerum*), brown spot (*Cochliobolus miyabeanus*), cercospora leaf spot (*Sphaerulina oryzina*), bakanae disease (*Gibberella fujikuroi*), seedling damping-off (*Pythium* spp., *Fusarium* spp., *Trichoderma* spp., *Rhizopus* spp., *Rhizoctonia solani, Mucor* sp.), seedling rot (*Pythium* spp., *Achlya* spp., *Dictyuchus* spp.), rice false smut (*Claviceps virens*), kernel smut (*Tilletia barclayana*), discolored rice grains (*Curvularia* spp., *Alternaria* spp.), crazy top (*Sclerophthora macrospora*), bacterial leaf blight (*Xanthomonas oryzae* pv. *oryzae*), bacterial brown stripe (*Acidovorax avenae* subsp. *avenae*), bacterial palea browning (*Erwinia ananas*), bacterial seeding damping-off (*Burkholderia plantarii*), bacterial grain rot (*Burkholderia glumae*), sheath brown rot (*Pseudomonas fuscovaginae*), bacterial halo blight (*Pseudomonas syringae* pv. *oryzae*), bacterial foot rot (*Erwinia chrysanthemi*), yellow dwarf (*Phytoplasma oryzae*), rice stripe (Rice stripe tenuivirus), rice dwarf (Rice dwarf reovirus);

wheat: powdery mildew (*Blumeria graminis* f. sp. *hordei*, f. sp. *tritici*), rust (*Puccinia striiformis, Puccinia graminis, Puccinia recondite, Puccinia hordei*), leaf blotch (*Pyrenophora graminea*), net blotch (*Pyrenophora teres*), Fusarium head blight (*Gibberella zeae, Fusarium culmorum, Fusarium avenaceum, Monographella nivalis*), Typhula snow blight (*Typhula incarnate, Typhula ishikariensis, Monographella nivalis*), loose kernel smut (*Ustilago nuda*), stinking smut (*Tilletia caries, Tilletia controversa*), eye spot (*Pseudocercosporella herpotrichoides*), foot rot (*Ceratobasidium gramineum*), leaf scald (*Rhynchosporium secalis*), speckled leaf blotch (*Septoria tritici*), glume blotch (*Phaeosphaeria nodorum*), damping-off (*Fusarium* spp., *Pythium* spp., *Rhizoctonia* spp., *Septoria* spp., *Pyrenophora* spp.), seedling blight (*Gaeumannomyces graminis*), anthracnose (*Colletotrichum graminicola*), ergot (*Claviceps purpurea*), leaf spot (*Cochliobolus sativus*), bacterial black node (*Pseudomonas syringae* pv. *syringae*);

corn: leaf rust (*Gibberella zeae*), damping-off (*Fusarium avenaceum, Penicillium* spp. *Pythium* spp., *Rhizoctonia* spp.), rust (*Puccinia sorghi*), brown spot (*Cochliobolus heterostrophus*), loose smut (*Ustilago maydis*), anthracnose (*Colletotrichum graminicola*), northern leaf spot (*Cochliobolus carbonum*), bacterial brown stripe (*Acidovorax avenae* subsp. *avenae*), bacterial stripe (*Burkholderia andropogonis*), bacterial stalk rot (*Erwinia chrysanthemi* pv. *zeae*), bacterial wilt (*Erwinia stewartii*); grapes: downy mildew (*Plasmopara viticola*), rust (*Physopella ampelopsidis*), powdery mildew (*Uncinula necator*), scab (*Elsinoe ampelina*), ripe rot (*Glomerella cingulata, Colletotrichum acutatum*), black rot (*Guignardia bidwellii*), Phomopsis leaf spot (*Phomopsis viticola*), fly speck (*Zygophiala jamaicensis*), gray mold (*Botrytis cinerea*), twig blight (*Diaporthe medusaea*), violet root rot (*Helicobasidium mompa*), white root rot (*Rosellinia necatrix*), crown gall (*Agrobacterium vitis*);

apple: powdery mildew (*Podosphaera leucotricha*), black spot disease (*Venturia inequalis*), Alternaria leaf spot (*Alterneria mali*), rust (*Gymnosporangium yamadae*), blossom blight (*Monilinia mali*), apple canker (*Valsa ceratosperma*), ring spot (*Botryosphaeria berengeriana*), anthracnose (*Colletotrichum actutatum, Glomerella cingulata*), fly speck (*Zygophiala jamaicensis*), sooty spot (*Gloeodes pomigena*), fruit spot (*mycosphaerella pomi*), violet root rot (*Helicobasidium mompa*), white root rot (*Rosellinia necatrix*), canker (*Phomopsis mali, Diaporthe tanakae*), apple blotch (*Diplocarpon mali*), fire blight (*Erwinia amylovora*), crown gall (*Agrobacterium tumefaciens*), hairy root disease (*Agrobacterium rhizogenes*); Japanese pears: black spot (*Alternaria kikuchiana*), pear scab (*Venturia nashicola*), rust (*Gymnosporangium asiaticum*), ring spot (*Botryosphaeria berengeriana* f. sp. *piricola*), pear canker (*Phomopsisfukushii*), bacterial shoot blight (*Erwinia* sp.), crown gall (*Agrobacterium tumefaciens*), rusty canker (*Erwinia chrysanthemi* pv. *chrysanthemi*), bacterial petal blight (*Pseudonomas syringae* pv. *syringae*); European pears: blight (*Phytophthora cactorum, Phytophthora syringae*), bacterial shoot blight (*Erwinia* sp.), peaches: black spot (*Cladosporium carpophilum*), Phomopsis rot (*Phomopsis* sp.), blight (*Phytophthora* sp.), anthracnose (*Colletotrichum gloeosporioides*), leaf curl (*Taphrina deformans*), bacterial shot hole (*Xhanthomonas campestris* pv. *pruni*), crown gall (*Agrobacterium tumefaciens*); yellow peaches: anthracnose (*Glomerella cingulata*), young fruit sclerotial disease (*Monilinia kusanoi*), gray spot (*Monilinia fructicola*), crown gall (*Agrobacterium tumefaciens*), bacterial gummosis (*Pseudomonas syringae* pv. *syringae*): persimmons: anthracnose (*Glomerella cingulata*), brown stem rot (*Cercospora kaki, Mycosphaerella nawae*), powdery mildew (*Phyllactinia kakikora*), crown gall (*Agrobacterium tumefaciens*);

citrus fruit: melanose (*Diaporthe citri*), green mold disease (*Penicillium digitatum*), blue mold disease (*Penicillium italicum*), scab (*Elsinoefawcettii*), brown rot (*Phytophthora citrophthora*), canker (*Xhanthomonas campestris* pv. *citri*), bacterial brown spot (*Pseudomonas syringae* pv. *syringae*), greening disease (*Liberibactor asiaticus*), crown gall (Agrobacterium *tumefaciens*);

tomatoes, cucumbers, beans, strawberries, potatoes, cabbage, eggplant, lettuce; gray mold (*Botrytis cinerea*); tomatoes, cucumbers, beans, strawberries, potatoes, rapeseed, cabbage, eggplants, lettuce: sclerotial disease (*Sclerotinia sclerotiorum*); tomatoes, cucumbers, beans, radishes, watermelons, eggplants, rapeseed, green peppers, spinach, beets: seedling damping-off (*Rhizoctonia* spp., *Pythium* spp., *Fusarium* spp., *Phythophthora* spp., *Sclerotinia sclerotiorum*); solanaceous plants: bacterial wilt (*Ralstonia solanacearum*); melons: downy mildew (*Pseudoperonospora cubensis*), powdery mildew (*Sphaerotheca fuliginea*), anthracnose (*Colletotrichum orbiculare*), gummy stem blight (*Didymella bryoniae*), stem rot (*Fusarium oxysporum*), late blight (*Phytophthora parasitica, Phytophthora melonis, Phytophthora nicotianae, Phytophthora drechsleri, Phytophthora capsici*), bacterial brown spot (*Xhanthomonas campestris* pv. *cucurbitae*), soft rot (*Erwinia carotovora* subsp. *carotovora*), bacterial spot (*Pseudomonas syringae* pv. *lachrymans*), marginal blight (*Pseudomonas marginalis* pv. *marginalis*), canker (*Streptomyces* sp.), hairy root disease (*Agrobacterium rhizogenes*), cucumber mosaic virus (Cucumber mosaic virus); tomatoes: ring spot (*Alternaria solani*), leaf mold (*Fulviafulva*), late blight (*Phytophthora infestans*), wilt disease (Fusarium oxysporum), root rot *(Pythium myriotylum, Pythium dissotocum)*, anthracnose (*Colletotrichum gloeosporoides*), canker (*Clavibacter michiganensis*), pith necrosis (*Pseudomonas corrugata*), bacterial black spot (*Pseudomonas viridiflava*), soft rot (*Erwinia carotovora* subsp. *carotovora*), bacterial leaf gall (*Crynebacterium* sp.), yellowing wilt (*Phytoplasma asteris*), yellow dwarfism (Tabaco leaf curl, subgroup III geminivirus); eggplants: powdery mildew (*Sphaerotheca fuliginea*), leaf mold (*Mycovellosiella nattrassii*), blight (*Phytophthora infestans*), brown rot (*Phytophthora capsici*), bacterial brown spot (*Pseudomonas cichorii*), necrotic leaf spot (*Pseudomonas corrugata*), bacterial stem rot (*Erwinia chrysanthemi*), soft rot (*Erwinia carotovora* subsp. *carotovora*), bacterial spot (Pseudomonas sp.);

Rapeseed: black spot (*Alternaria brassicae*), black rot (*Xhanthomonas campestris pv. campestris*), bacterial black spot (*Pseudomonas syringae* pv. *maculicola*), soft rot (*Erwinia carotovora*); cruciferous vegetables: black spot (*Alternaria bassicae*), white spot (*Cercosporella brassicae*), black leg (*Phoma lingam*), club root (*Plasmodiophora brassicae*), downy mildew (*Peronospora parasitica*), black rot (*Xanthomonas campestris* pv. *campestris*), bacterial black spot (*Pseudomonas syringae* pv. *maculicola*), soft rot (*Erwinia carotovora* subsp. *carotovora*); cabbage: club foot (*Thanatephorus cucumeris*), yellowing wilt (*Fusarium oxysporum*); Chinese cabbage: bottom rot (*Rhizoctonia solani*), yellowing (*Verticillium dahliae*); green onions: rust (*Puccinia allii*), black spot (*Alternaria porri*), southern blight (*Sclerotium rolfsii*), white rot (*Phytophthora porri*), black rot (*Sclerotium cepivorum*); onions: canker (*Curtobacterium flaccumfaciens*), soft rot (*Erwinia carotovora* subsp. *carotovora*), bacterial spot (*Pseudomonas syringae* pv. *syringae*), rot (*Erwinia rhapontici*), scale rot (*Burkholderia gladioli*), yellowing wilt (*Phytoplasma asteris*); garlic: soft rot (*Erwinia carotovora* subsp. *carotovora*), spring rot (*Pseudomonas marginalis* pv. *marginalis*); soybeans: purple seed stain (*Cercospora kikuchii*), scab (*Elsinoe glycines*), black spot (*Diaporthe phaseolorum*), Rhizoctonia root rot (*Rhizoctonia solani*), stem rot (*Phytophthora sojae*), downy mildew (*Peronospora manshurica*), rust (*Phakopsora pachyrhizi*), anthracnose (*Colletotrichum truncatum*), leaf scald (*Xhanthomonas campestris* pv. *glycines*), bacterial spot (*Pseudomonas syringae* pv. *glycinea*);

green beans: anthracnose (*Colletotrichum lindemuthianum*), bacterial wilt (*Ralstonia solanacearum*), halo blight (*Pseudomonas syringae* pv. *phaseolicola*), bacterial brown spot (*Pseudomonas viridiflava*), leaf scald (*Xhanthomonas campestris* pv. *phaseoli*); peanuts: leaf spot (*Mycosphaerella berkeleyi*), brown spot (*Mycosphaerella arachidis*), bacterial wilt (*Ralstonia solanacearum*); peas: powdery mildew (*Erysiphe pisi*), downy mildew (*Peronospora pisi*), bacterial stem blight (*Pseudomonas syringae* pv. *pisi*), bacterial stem rot (*Xhanthomonas campestris* pv. *pisi*); broad beans: downy mildew (*Peronospora viciae*), blight (*Phytophthora nicoti$\alpha$nae*); potatoes: early blight (*Alternaria solani*), black scurf (*Thanatephorus cucumeris*), blight (*Phytophthora infestans*), silver scurf (*Helminthosporium solani*), soft rot (*Fusarium oxysporum, Fusarium solani*), powdery scab (*Spongospora subterranea*), bacterial wilt (*Ralstonia solanacearum*), black foot disease (*Erwinia carotovora subsp. atroseptica*), common scab (*Streptomyces scabies, Streptomyces acidiscabies*), soft rot (*Erwinia carotovora* subsp. *carotovora*), slimy rot (*Crostridium* spp.), ring rot (*Clavibacter michiganensis* subsp. *sepedonicus*); sweet potatoes: damping-off (*Streptomyces ipomoeae*); beets: brown spot (*Cercospora beticola*), downy mildew (*Peronospora schachtii*), black root rot (*Aphanomyces cochioides*), leaf spot (*Phoma betae*), crown gall (*Agrobacterium tumefaciens*), scab (*Streptomyces scabies*), bacterial spot (*Pseudomonas syringae* pv. *aptata*);

carrots: leaf blight (*Alternia dauci*), bacterial gall (*Rhizobacter dauci*), crown gall (*Agrobacterium tumefaciens*), Streptomyces scab (*Streptomyces* spp.), soft rot (*Erwinia carotovora* subsp. *carotovora*); strawberries: powdery mildew (*Sphaerotheca aphania* var. *aphanis*), blight (*Phytophthora nicotianae*), anthracnose (*Glomerella cingulata*), fruit rot (*Pythium ultimum*), bacterial wilt (*Ralstonia solanacearum*), angular leaf spot (*Xhanthomonas campestris*), bacterial bud blight (*Pseudomonas marginalis pv. marginalis*); tea: net blister blight (*Exobasidium reticulatum*), white scab (*Elsinoe leucospila*), anthracnose (Colletotrichum theae-sinensis), ring spot (*Pestalotiopsis longiseta*), red blight (*Pseudomonas syringae* pv. *theae*), canker (*Xhantomonas campestris* pv. *theicola*), witch's broom (*Pseudomonas* sp.); tobacco: red spot (*Alternaria alternata*), powdery mildew (*Erysiphe cichoracearum*), anthracnose (*Colletotrichum gloeosporioides*), blight (*Phytophthora nicotianae*), wildfire *(Pseudomonas syringae* pv. *tabaci),* bacterial leaf spot (*Pseudomonas syringae* pv. *mellea),* hollow root (*Erwinia carotovora* subsp. *carotovora*), damping-off (*Ralstonia solanacearum),* Tobacco mosaic virus (Tobacco mosaic virus); cotton: damping-off (*Fusarium oxysporum*); sunflowers: sclerotial disease (*Sclerotinia sclerotiorum*), angular leaf spot (*Xhanthomonas campestris* pv. *malvacearum),* hollow root (*Erwinia carotovora* subsp. *carotovora*), bacterial spot (*Pseudomonas syringae* pv. *helianthi);* roses: black spot (*Diplocarpon rosae),* powdery mildew (*Sphaerotheca pannosa*), blight (*Phytophthora megasperma*), downy mildew (*Peronospora sparsa*), crown gall (*Agrobacterium tumefaciens*); chrysanthemums: brown spot (*Septoria obesa*), white rust (*Puccinia horiana*), blight (*Phytophthora cactorum*), bacterial spot (*Pseudomonas cichorii),* soft rot (*Erwinia carotovora* subsp. *carotovora),* crown gall (*Agrobacterium tumefaciens*), hairy root disease (*Agrobacterium rhizogenes),* chrysanthemum virescence (*Phytoplasma aurantifolia*); grasses: brown patch disease (*Rhizoctonia solani),* dollar spot disease (*Sclerotinia homoeocarpa),* curvularia leaf blight (*Curvularia* sp.), rust (*Puccinia zoysiae*), helminthosporium leaf blight (*Cochliobolus sp.*), scald (*Rhynchosporum secalis*), damping-off (*Gaeumannomyces graminis*), anthracnose (*Colletotrichum* sp.), typhula brown snow blight (*Typhula incarnata),* typhula black snow blight (*Typhula ishikariensis),* Sclerotinia (*Myriosclerotina borealis),* fairy ring disease (*Marasmius oreades*), Pythium blight (*Pythium aphanidermatum*), blast (*Pyricularia grisea*).

The plant disease control composition of the present invention is, without limitation, preferably used for the control of diseases caused by oomycetes such as various downy mildews and blight, and various powdery mildews, various rusts, gray mold, apple scab and the like, more preferably used for the control of cucumber powdery mildew, vine downy mildew, vine powdery mildew, tomato gray mold, tomato late blight, apple scab or soybean rust, and even more preferably used for the control of cucumber powdery mildew, vine downy mildew, vine powdery mildew or tomato late blight.

The plant disease control composition of the present invention may be mixed or used with other agricultural chemicals, for example, agricultural chemicals such as fungicides, insecticides, miticides, nematicides, herbicides and plant growth regulators; microbial pesticides; spreading agents; soil conditioners; or fertilizing substances, as necessary.

Examples of fungicides used in combination with the plant disease control composition of the present invention include phenylamide fungicides, mitotic and mitotic cell division inhibitors (MBC fungicides), succinate dehydrogenase inhibitors (SDHI agents), quinone external inhibitors (QoI agents), quinone internal inhibitors (QiI killing agents), oxidative phosphorylation deconjugation inhibitors, quinone external stigmatellin-binding subsite inhibitor (QoSI agents), amino acid biosynthesis inhibitors, protein biosynthesis inhibitors, signal transduction inhibitors, lipid and cell membrane biosynthesis inhibitors, demethylation inhibitors (DMI agents), amine fungicides, 3-ketoreductase inhibitors in C4-position demethylation in sterol biosynthesis, squalene epoxidase inhibitors in sterol biosynthesis, cell wall biosynthesis inhibitors, melanin biosynthesis inhibitors, host plant resistance inducers, dithiocarbamate fungicides, phthalimide fungicides, guanidine fungicides, multi-site contact-active fungicides, and other fungicides. Examples of insecticides, miticides, and nematicides used in combination include carbamate acetylcholinesterase (AChE) inhibitors, organophosphorous acetylcholinesterase (AChE) inhibitors, GABAergic chloride ion channel blockers, sodium channel modulators, nicotinic acetylcholine receptor (nAChR) competitive modulators, nicotinic acetylcholine receptor (nAChR) allosteric modulators, glutamatergic chloride ion channel (GluCl) allosteric modulators, juvenile hormone analogues, non-specific (multi-site) inhibitors, mite growth inhibitors, mitochondrial ATP synthase inhibitors, oxidative phosphorylation deconjugates that disrupt the proton gradient, nicotinic acetylcholine receptor (nAChR) channel blockers, chitin biosynthesis inhibitors type 0, chitin biosynthesis inhibitors type 1, Diptera molting disruptors, molt hormone (ecdysone) receptor agonists, mitochondrial electron transport complex III inhibitor, mitochondrial electron transfer system complex I inhibitor (METI), voltage-gated sodium channel blocker, acetyl CoA carboxylase inhibitor, mitochondrial electron transfer system complex IV inhibitor, mitochondrial electron transfer system complex II inhibitor, ryanodine receptor modulator, target site unspecified chordotonal organ modulator, and other agents.

The above-described fungicides, insecticides, miticides, or nematicides may be used alone or in combination, but the agents are not limited to these.

Examples of fungicides include, without limitation, nucleic acid metabolism inhibitors such as Benalaxyl, Benalaxyl-M or Kiralaxyl, Furalaxyl, Metalaxyl, Metalaxyl-M or Mefenoxam, Oxadixyl, Ofurace, Hymexazol, Octhilinone, Bupirimate, Dimethirimol, Ethirimol, and Oxolinic acid;

mitotic and cell division inhibitors such as Benomyl, Carbendazim, Fuberidazole, Thiabendazole, Thiophanate, Thiophanate-methyl, Diethofencarb, Zoxamide, Ethaboxam, Pencycuron, Fluopicolide, Fluopimomide, Phenamacril, Metrafenone, and Pyriofenone;

NADH oxidoreductase inhibitors such as diflumetorim, tolfenpyrad, and fenazaquin;

succinate dehydrogenase inhibitors (SDHI agents) such as Benodanil, Benzovindiflupyr, Bixafen, Boscalid, Carboxin, Fenfuram, Fluopyram, Flutolanil, Fluxapyroxad, Furametpyr, Isofetamid, Isopyrazam, Mepronil, Oxycarboxin, Penthiopyrad, Penflufen, Pydiflumetofen, Sedaxane, Thifluzamide, Pyraziflumid, Isoflucypram, Fluindapyr, Inpyrfluxam, Pyrapropoyne, and Cyclobutrifluram;

quinone external inhibitors (QoI agents) such as Azoxystrobin, Coumoxystrobin, Dimoxystrobin, Enoxastrobin, Famoxadone, Fenamidone, Fenaminstrobin, Flufenoxystrobin, Fluoxastrobin, Kresoxim-methyl, Mandestrobin, Metominostrobin, Orysastrobin, Picoxystrobin, Pyraclostrobin, Pyrametostrobin, Pyraoxystrobin, Pyribencarb, Triclopyricarb, Trifloxystrobin, and Metyltetraprol;

quinone internal inhibitors (QiI agents) such as Cyazofamid, Amisulbrom, Fenpicoxamid, and Florylpicoxamid:

oxidative phosphorylation deconjugation inhibitors such as Binapacryl, Meptyldinocap, Dinocap, Fluazinam, and Ferimzone;

Oxidative phosphorylation and ATP synthase inhibitors such as fentin acetate, fentin chloride, and fentin hydroxide;

ATP transport inhibitors such as Silthiofam;

quinone external stigmatellin-binding subsite inhibitors (QoSI agents) such as Ametoctradin;

amino acid biosynthesis inhibitors such as Cyprodinil, Mepanipyrim, and Pyrimethanil;

protein biosynthesis inhibitors such as Blasticidin-S, Streptomycin, Kasugamycin, and Oxytetracycline;

signal transduction inhibitors such as Quinoxyfen, Proquinazid, Fenpiclonil, Fludioxonil, Chlozolinate, Dimethachlone, Iprodione, Procymidone, and Vinclozolin;

lipid and cell membrane biosynthesis inhibitors such as Edifenphos, Iprobenfos, Isoprothiolane, Pyrazophos, Biphenyl, Chloroneb, Dicloran, Quintozene (PCNB), Tecnazene (TCNB), Tolclofos-methyl, Echlomezol or etridiazole, Iodocarb, Propamocarb, and Prothiocarb;

Ergosterol-binding inhibitors such as Natamycin (pimaricin);

Oxysterol-binding protein inhibitors such as Oxathiapiprolin and fluoxapiprolin;

demethylation inhibitors (DMI agents) such as Azaconazole, Bitertanol, Bromuconazole, Cyproconazole, Difenoconazole, Diniconazole, Diniconazole-M, Epoxiconazole, Etaconazole, Fenarimol, Fenbuconazole, Fluquinconazole, Quinconazole, Flusilazole, Flutriafol, Hexaconazole, Imazalil, Imibenconazole, Ipconazole, Metconazole, Myclobutanil, Nuarimol, Oxpoconazole, Oxpoconazole fumarate, Pefurazoate, Penconazole, Prochloraz, Propiconazole, Prothioconazole, Pyrifenox, Pyrisoxazole, Simeconazole, Tebuconazole, Tetraconazole, Triadimefon, Triadimenol, Triflumizole, Triforine, Triticonazole, Mefentrifluconazole, and Ipfentrifluconazole;

amine fungicides such as Aldimorph, Dodemorph, Fenpropimorph, Tridemorph, Fenpropidin, Piperalin, and Spiroxamine;

3-keto reductase inhibitors in the C4-position demethylation of sterol biosynthesis such as Fenhexamid and Fenpyrazamine;

squalene epoxidase inhibitors of sterol biosynthesis such as Pyributicarb, Naftifine, and Terbinafine;

cell wall biosynthesis inhibitors such as Polyoxins, Dimethomorph, Flumorph, Pyrimorph, Benthiavalicarb, Benthivalicarb-isopropyl, Iprovalicarb, Mandipropamid, and Valifenalate;

melanin biosynthesis inhibitors such as Phthalide or fthalide, Pyroquilone, Tricyclazole, Carpropamid, Diclocymet, Fenoxanil, and Tolprocarb;

host plant resistance inducers such as Acibenzolar-S-methyl, Probenazole, Tiadinil, Isotianil, Laminarin, Dichlobentiazox, and Fosetyl-Al;

dithiocarbamate fungicides such as Mancozeb or Manzeb, Maneb, Metiram, Propineb, Thiram, zinc thiazole, Zineb, Ziram, and Ferbam;

Captan, Captafol, Folpet, Fluorofolpet, and the like;

phthalimide fungicides:

guanidine fungicides such as Guazatine, Iminoctadine, Iminoctadine albesilate, and Iminoctadine triacetate;

multi-site contact-active fungicides such as Chlorothalonil, Dichlofluanid, Tolylfluanid, basic copper oxychloride, copper(II) hydroxide, basic copper hydroxide sulfate, organocopper compound, dodecylbenzenesulfonic acid bisethylenediamine copper [II] salt (DBEDC), sulphur, Fluoroimide, Anilazine, Dithianon, Chinomethionat or Quinomethionate, and Methasulfocarb;

plant extracts such as an extract from the cotyledons of lupine plantlets (BLAD), Extract from Swinglea glutinosa, Extract from Melaleuca alternifolia, and plant oil mixtures (Eugenol, Geraniol, and Thymol);

other fungicides such as Tecloftalam, Triazoxide, Flusulfamide, Diclomezine, Cyflufenamid, Dodine, Flutianil, Tebufloquin, Validamycins, Cymoxanil, Picarbutrazox, Quinofumelin, Aminopyrifen, Pyridachlometyl, Ipflufenoquin, dipymetitrone, Fluoxytioconazole, Metarylpicoxamid, Seboctylamine, Chloroinconazide, Flubeneteram, phosphorous acid, sodium phosphite, ammonium phosphite, potassium phosphite;

Microbicides such as

Trichoderma spp. such as *Trichoderma atroviride* strain I-1237, strain LU132, strain SC1, strain SKT-1 and strain 77B, *Trichoderma asperellum* strain T34 strain kd, *Trichoderma harzianum* strain T-22, and *Trichoderma virens* strain G⁻41; Clonostachys spp. such as *Gliocladium catenulatum* strain J1446 and *Clonostachys rosea* strain;

Bacillus spp. such as *Coniothyrium minitans* strain CON/M/91-08, *Talaromyces flavus* strain SAY-Y-94-01, *Saccharomyces cerevisae* strain LAS02, *Bacillus amyloliquefaciens* strain QST713, strain FZB24, strain MBI600, strain D747, strain F727 and strain AT-332, and *Bacillus subtilis* strain AFS032321, strain Y1336 and strain HAI-0404;

*Pseudomonas chlororaphis* strain AFS009, *Streptomyces griseovirides* strain K61, and *Streptomyces lydicus* strain WYEC108.

Examples of insecticides include carbamate acetylcholinesterase (ACE) inhibitors such as alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC (3,5-xylyl methylcarbamate), and Xylycarb;

organophosphorous acetylcholinesterase (AChE) inhibitors such as acephate, azamethiphos, azinphos-ethyl, azinphos-ethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, O-ethyl O-4-nitrophenyl phenylphosphonothioate, ethion, ethoprophos, fenamiphos, fenitrothion, fenthion, fosthiazate, heptenophos, imicyafos, isofenphos, Isopropyl=O-(methoxyaminothiophosphoryl)salicylate, isoxathion, malathion, mecarbam, methamidophos, methidathion, mevinphos, monocrotophos, naled, omethoate, oxydemetonmethyl, parathions, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, and vamidothion;

Cyclic diene organochlorine GABAergic chloride ion channel blockers such as chlordane and endosulfan;

Phenylpyrazoles (Fiprole) GABAergic chloride ion channel blockers such as ethiprole and fipronil;

Pyrethroid sodium channel modulators such as acrinathrin, allethrin, bifenthrin, bioallethrin, bioresmethrin, cycloprothrin, cyfluthrin, cyhalothrin, cypermethrin, cyphenothrin[(1R)-trans-isomer], deltamethrin, empenthrin[(EZ)-(1R)-isomer], esfenvalerate, ethofenprox, fenpropathrin, fenvalerate, flucythrinate, flumethrin, taufluvalinate, halfenprox, imiprothrin, kadethrin, permethrin, phenothrin[(1R)-transisomer], prallethrin, pyrethrin, resmethrin, silafluofen, tefluthrin, tetramethrin, tetramethrin[(1R)-isomer], tralomethrin, and transfluthrin;

DDT, sodium methoxychlor channel modulator such as DDT (dichlorodiphenyl-trichloroethane and methoxychlor;

Neonicotinoid nicotinic acetylcholine receptor (nAChR) competitive modulators such as acetamiprid, clothianidin, dinotefuran, imidacloprid, nitenpyram, thiacloprid, and thiamethoxam;

nicotinic acetylcholine receptor (nAChR) competitive modulators such as nicotine and nicotine sulfate;

sulfoxiamine nicotine acetylcholine receptor (nAChR) competitive modulators such as sulfoxaflor;

butenolide nicotinic acetylcholine receptor (nAChR) competitive modulators such as flupyradifurone;

mesoionic nicotinic acetylcholine receptor (nAChR) competitive modulators such as triflumezopyrim;

pyridylidene nicotinic acetylcholine receptor (nAChR) competitive modulators such as flupyrimin;

spinosin-based nicotinic acetylcholine receptor (nAChR) allosteric modulators such as spinetoram and spinosad;

glutamate-activated chloride ion channel (GluCl) allosteric modulators such as abamectin, emamectin benzoate, lepimectin, and milbemectin;

juvenile hormone analogues such as hydroprene, kinoprene, methoprene, fenoxycarb, and pyriproxyfen;

the other nonspecific (multi-site) inhibitors such as methyl bromide, other alkyl halides, chloropicrin, cryolite, sulfuryl fluoride, borax, boric acid, disodium octaborate, sodium metaborate, meta-sodium metaborate, artar emetic, dazomet, metham sodium;

Chordotonal organ TRPV channel modulators such as pymetrozine, pyrifluquinazon, and Afidopyropen;

mite growth inhibitors acting on CHS1 such as clofentezine, diflovidazin, hexythiazox, and etoxazole;

microbial disruptors of insect midgut membranes such as *Bacillus thuringiensis* subsp. Israelensis, *Bacillus thuringiensis* subsp. Aizawai, *Bacillus thuringiensis* subsp. Kurstaki, *Bacillus thuringiensis* subsp. Tenebrionis, B. t. proteins contained in crops: Cry1Ab, Cry1Ac, Cry1Fa, Cry1A.105, Cry2Ab, Vip3A, mCry3A, Cry3Ab, Cry3Bb, Cry34Ab1/Cry35Ab1;

mitochondrial ATP synthase inhibitors such as diafenthiuron, azocyclotin, cyhexatin, fenbutatin oxide, propargite, tetradifon;

oxidative phosphorylation deconjugates that disrupt the proton gradient, such as chlorfenapyl, DNOC (dinitro-orthocresol), and sulfluramid;

nicotinic acetylcholine receptor (nAChR) channel blockers such as bensultap, cartap hydrochloride, thiocyclam, and Thiosultap-sodium;

chitin biosynthesis inhibitors acting on CHS 1 such as bistrifluron, chlorfluazuron, diflubenzuron, flucycloxuron, flufenoxuron, hexaflumuron, lufenuron, novaluron, noviflumuron, teflubenzuron, and triflumuron;

chitin biosynthesis inhibitors type 1 such as buprofezin;

Diptera molting disruptors such as cyromazine;

molting hormone (ecdysone) receptor agonists such as chromafenozide, halofenozide, methoxyfenozide, and tebufenozide;

octopamine receptor agonists such as amitraz;

mitochondrial electron transport complex III inhibitors such as hydramethylnon, acequinocyl, fluacrypyrim, bifenazate;

mitochondrial electron transport complex I inhibitors such as fenazaquin, fenpyroximate, pyridaben, pylimidifen, tebufenpyrad, tolfenpyrad, and rotenone;

voltage-dependent sodium channel blockers such as indoxacarb and metaflumizone;

acetyl CoA carboxylase inhibitors such as spirodiclofen, spiromesifen, spiropidion, and spirotetramat;

mitochondrial electron transport complex IV inhibitors such as aluminum phosphide, calcium phosphide, phosphine, zinc phosphide, calcium cyanide, sodium cyanide, and potassium cyanide;

mitochondrial electron transport complex II inhibitors such as cyenopyrafen, cyflumetofen, and pyflubumide;

rianodine receptor modulators such as chlorantraniliprole, cyantraniliprole, cyclaniliprole, and flubendiamide, tetraniliprole;

target site-unspecified Chordotonal organ modulators such as flonicamid;

GABAergic chloride ion channel allosteric modulators such as broflanilide, fluxametamide, and isocycloseram;

baculovirus such as Cydia pomonella GV, Thaumatotibia leucotreta GV, Anticarsia gemmatalis, MNPV, Helicoverpa armigera NPV;

nicotinic acetylcholine receptor (nAChR) allosteric modulators-site II such as GS-Omega/Kappa HXTX-Hv1a peptide;

calcium-activated potassium channel (KCa2) modulators such as acynonapyr

mitochondrial electron transport system complex III inhibitors such as flometoquin;

target site-unspecified; azadirachtin, benzoximate, phenisobromolate, chinomethionat, dicofol, CaSx, manzeb, pyridalyl, sulfur, bromopropylate, Burkholderia spp,Wolbachia pipientis (Zap), Chenopodium ambrosioides near ambrosioides extract, Fatty acid monoesters with glycerol or propanediol, Neem oil, Beauveria bassiana strains, Metarhizium anisopliae strain F52, Paecilomyces fumosoroseus Apopka strain 97, diatomite, dicyclanil, dinobuton, dinocap, hydrogen cyanide, methyl iodide, karanjin, mercury chloride, methyl isothiocyanate, pentachlorophenol, phosphine, piperonyl butoxide, polynactins, sabadilla, sulcofuron-sodium, tribufos, aldrin, amidithion, amidothioate, aminocarb, amiton, aramite, athidathion, azothoate, barium polysulphide, benclothiaz, (5-(1,3-benzodioxole-5-yl)-3-hexylcyclohexa-2-enone, 1,1-bis(4-chlorophenyl)-2-ethoxyethanol, butonate, butopyronoxyl, 2-(2-butoxyethoxy)ethyl thiocyanate, camphechlor, chlorbenside, chlordecone, chlordimeform, chlorfenethol, chlorfenson, fluazuron, metaldehyde, bialaphos, levamisol, amidoflumet, pyrafluprole, pyriprole, tralopyril, flupyrazofos, diofenolan, chlorobenzilate, flufenzine, benzomate, flufenerim, albendazole, oxibendazole, fenbendazole, metam-sodium, 1,3-dichloropropene, ethylene dibromide, acrylonitrile, bis(2-chloroethyl)ether, 1-bromo-2-chloroethane, 3-bromo-1-chloroprop-1-ene, bromocyclen, carbon disulfide, tetrachloromethane, nemadectin, cymiazole, cytokinin, 2-(octylthio)ethanol, potassium oleate, sodium oleate, machine oil, tar oil, anabasine, morantel tartrate, Pyrethrum, rape seed oil, soybean lecithin, starch, hydroxypropylstarch, decanoyloctanoylglycerol, diatomite, TPIC (tripropyl isocyanurate), D-D (1,3-Dichloropropene), peroxocarbonate, MB-599 (verbutin), bis(2,3,3,3-tetrachloropropyl) ether, DCIP (bis(2-chloro-1-methylethyl)ether), ENT-8184 (N-(2-Ethylhexyl)bicyclohept-5-ene-2,3-dicarboximide), Bayer 22408 (O,O-diethyl O-naphthalimido phosphorothioate), Bayer 32394 (tris(1-dodecyl-3-methyl-2-phenylbenzimidazolium)hexacyanoferrate), dicloromezotiaz, fluazaindolizine, cyhalodiamide, tioxazafen, fluhexafon, fluralaner, tetrachlorantraniliprole, sarolaner, lotilaner, tigolaner, cycloxaprid, fluensulfone, benzpyrimoxan, tyclopyrazoflor, oxazosulfyl, dimpropyridaz, cyproflanilide, nicofluprole, cyclobutrifluram, cycloxylidin, paichongding, guadipyr, cyetpyrafen, flupentiofenox, pyriminostrobin, chloroprallethrin, kappa-bifenthrin, kappa-tefluthrin, heptafluthrin, spirobudifen, tiorantraniliprole, trifluenfuronate, indazapyroxamet, fenmezoditiaz, fluchlordiniliprole, and spidoxamat.

EXAMPLES

The details of the plant disease control composition in the present invention are described by means of examples and test examples. However, the present invention is not limited in any way by these examples and test examples.

The oil components and surfactants used in examples and test examples are shown in Tables 1 and 2. However, the present invention is not limited in any way by them.

[Table 1]

| Table 1: List of Oil Components | | | |
|---|---|---|---|
| Name | Broad Classification | Intermediate Classification | Narrow Classification |
| Oil A | Mineral oil | Mineral oil | Liquid paraffin |
| Oil B | Essential oil | Essential oil | Orange oil |
| Oil C | | | Bergamot oil |
| Oil D | | | Lavender oil |
| Oil E | Fats and Oils | Vegetable fats and oils | Soybean oil |
| Oil F | | | Rapeseed oil |
| Oil G | | | Castor oil |
| Oil H | | | Linseed oil |
| Oil I | | | Macadamia nut oil |
| Oil J | | | Sunflower oil |
| Oil K | | | Olive oil |
| Oil L | | | Coconut oil, |
| Oil M | | | Fatty acid methyl esterified oil (MSO) |

[Table 2-1]

| Table 2: List of Surfactants and Other Assistant Components | | | | |
|---|---|---|---|---|
| | Product Name | Broad Classification | Intermediate Classification | Narrow Classification |
| Assistant 1 | Solpol 4315HA | Nonionic/anionic Surfactant Blend | Nonionic/anionic Surfactant Blend | POE sorbit fatty acid ester, POE hydrogenated castor oil, Dialkyl sulfosuccinate |
| Assistant 2 | Solpol 4315H | | | POE sorbit fatty acid ester. POE hydrogenated castor oil, Sorbitan fatty acid ester, POE sorbitan fatty acid ester, Dialkyl sulfosuccinate |
| Assistant 3 | Solpol 4315L | | | POE sorbit fatty acid ester,POE hydrogenated castor oil, Sorbitan fatty acid ester. Dialkyl sulfosuccinate |
| Assistant 4 | Toxinul 3476F | | | Anionic/nonionic sufactant blend, Slovent naphtha, 1 hexanol, Naphthalene |
| Assistant 5 | Toxinul 3479F | | | Anionic/nonionic surfactant blend, Solvent naphtha, 1-hexanol, Naphthalene, Propylene glycol |

(continued)

| Table 2: List of Surfactants and Other Assistant Components | | | | |
|---|---|---|---|---|
| | Product Name | Broad Classification | Intermediate Classification | Narrow Classification |
| Assistant 6 | Solpol 4320 | Nonionic Surfactant Blend | Nonionic Surfactant Blend | POE sorbit fatty acid ester, POE hydrogenated castor oil, Sorbitan fatty acid ester |
| Assistant 7 | Newkalgenl110 | | | POE castor oil, POE sorbitan fatty acid ester, Sorbitan fatty acid ester |
| Assistant 8 | Solpol 4273 | | | POE ether type nonionic, Sorbitan fatty acid ester |
| Assistant 9 | Solpol 4274 | | | POE ether type nonionic, Sorbitan fatty acid ester |

[Table 2-2]

| | Product Name | Broad Classification | Intermediate Classification | Narrow Classification |
|---|---|---|---|---|
| Continuation of Table 2 | | | | |
| Assistant 10 | Solpol CA-15 | Nonionic Surfactant | POE castor oil | POE(15) castor oil |
| Assistant 11 | Solpol CA-20 | | | POE(20) castor oil |
| Assistant 12 | Solpol CA-30 | | | POE(30) castor oil |
| Assistant 13 | Sotpol CA-42 | | | POE(42) castor oil |
| Assistant 14 | Solpol CA-50 | | | POE(50) castor oil |
| Assistant 15 | Solbon T-20 | | POE sorbitan fatty acid ester | POE sorbitan laurate |
| Assistant 16 | Solbon T-40 | | | POE sorbitan palmitate |
| Assistant 17 | Solbon T-60 | | | POE sorbitan stearate |
| Assistant 18 | Solbon T-80 | | | POE sorbitan oleate |
| Assistant 19 | Solbon T-85 | | | POE sorbitan trioleate |
| Assistant 20 | ATRAS G-1086 | | | Polyoxyethylene sorbitol hexaoleate, also known as Polyethoxylated sorbitol bexaoleate |
| Assistant 21 | NIKKOL GO-430NV | | POE sorbit fatty acid ester | POE(30) sorbit tetraolate |
| Assistant 22 | NIKKOL GO-440V | | | POE(40) sorbit tetraolate |
| Assistant 23 | NIKKOL GO-460V | | | POE(60) sorbit tetraolate |
| Assistant 24 | NIKKOL GO-4V | | | POE(6) sorbit tetraolate |

[Table 2-3]

| | Product Name | Broad Classification | Intermediate Classification | Narrow Classification |
|---|---|---|---|---|
| Continuation of Table 2 | | | | |
| Assistant 25 | Newcol NT 5 | Nonionic Surfactant | POE alkyl ether | POE alkyl ether |
| Assistant 26 | Newcol NT7 | | | POE alkyl ether |
| Assistant 27 | Newcol NT-9 | | | POE alkyl ether |
| Assistant 28 | Newcol 1204 | | | POE oleyl ether |
| Assistant 29 | Newcol 2303-Y | | | POE alkyl ether |
| Assistant 30 | Minemal ML-2 | | | Polyoxyethylene alkyl ether |
| Assistant 31 | Minemal ML-3 | | | Polyoxyethylene oleyl ether |
| Assistant 32 | Newkalgen D-1510 | | | Polyoxyethylene oleyl ether POE oleyl ether |
| Assistant 33 | Newkalgen D-1504 | | | POE oleyl ether |
| Assistant 34 | Newkalgen D-1502 | | | POE oleyl ether |
| Assistant 35 | Newkalgen D-1105-S | | | POE alkyl ether(C12-14.2) |
| Assistant 36 | Newcol 2303 | | | POE alkyl ether(C12-C13) |
| Assistant 37 | Newkalgen D1110DIR | | POA alkyl ether | POA alkyl ether |
| Assistant 38 | Poem DL-100 | | Glycerin fatty acid ester | Diglycerin monolaurate |
| Assistant 39 | Poem M-300 | | | Glycerin monolaurate |
| Assistant 40 | Poem O-80V | | Sorbitan fatty acid ester | Sorbitan fatty acid ester |
| Assistant 41 | F-160 | | Sucrose fatty acid ester | Sucrose fatty acid ester |

[Table 2-4]

| | | Product Name | Broad Classification | Intermediate Classification | Narrow Classification |
|---|---|---|---|---|---|
| Continuation of Table 2 | | | | | |
| Assistant 42 | | Newkalgen EP-60P | Anionic Surfactant | Sulfosuccinate | Sodium dialkyl sulfosuccinate |
| Assistant 43 | | Newkalgen SX-C | | Arylsulfonate | Metal salt of alkylbenzenesulfonic acid |
| Assistant 44 | | Emal 10PT | | Alkyl sulfates | Sodium lauryl sulfate |
| Assistant 45 | | MORWET D-425(P) | | Formalin condensate of aryl sulfonate | Sodium salt of formalin condensate of alkylnaphthalenesulfonic acid |
| Assistant 46 | | Newkalgen WG-4 | | Lignin sulfonate | Sodium lignin sulfonate |
| Assistant 47 | | Newkalgen WG-5 | | Polycarboxylate | Sodium polycarboxylate |
| Assistant 48 | | Newkalgen WG-8 | | Alpha-olefin sulfonate | Sodium alpha-olefin sulfonate |
| Assistant 49 | | Solpol 7978 | Cationic surfactant | | Polyoxyethylene alkylamine |
| Assistant 50 | | AEROGII. R972 | Other components | Anti-settling agent | Hydrophobic fumed silica |
| Assistant 51 | | Calcium Stearate | | Thickener | Calcium stearate |
| Assistant 52 | | Silwet806 | Other surfactant | | Pofyalkylene oxide modified heptamethyl trisiloxane |
| Assistant 53 | | VISILON 8083 | | | Tetrasiloxan |
| Assistant 54 | | Agrizol A550 | | | Glycerin fatty acid ester |

In the following examples and test examples, "part" shall represent "part by mass".

[Example 1]

D-tagatose (40 parts), soybean oil (52.5 parts) as the oil component, and Solpol 4320 (7.5 parts) as the surfactant were mixed in a mortar until uniform to obtain a plant disease control composition. The test results for Example 1 are shown in Table 3.

[Examples 2 to 23]

Compositions of D-tagatose, an oil component and a surfactant were those listed in Table 3, and plant disease control compositions were obtained in the same manner as in Example 1. The test results for Example 2 to Example 23 are shown in Table 3.

[Example 24]

D-tagatose (40.6 parts), soybean oil (51.86 parts) as the oil component, and Emal 10PT (0.13 parts) and Solpol CA-15 (7.41 parts) as the surfactant were mixed in a mortar until uniform to obtain a plant disease control composition.

The test results for Example 24 are shown in Table 4.

[Examples 25 to 43]

Compositions of D-tagatose, an oil component and a surfactant were those listed in Table 4, and plant disease control compositions were obtained in the same manner as in Example 24. The test results for Example 25 to Example 43 are shown in Table 4.

[Example 44]

D-tagatose (40.6 parts), soybean oil (51.9 parts) as the oil component, and Newkalgen110 (7.5 parts) as the surfactant were mixed in a mortar until uniform to obtain a plant disease control composition. The test results for Example 44 are shown in Table 5.

[Examples 45 to 64]

Compositions of D-tagatose, an oil component and a surfactant were those listed in Table 5, and plant disease control compositions were obtained in the same manner as in Example 44. The test results for Example 45 to Example 64 are shown in Table 5.

[Example 65]

D-tagatose (40.6 parts), soybean oil (53.57 parts) as the oil component, and Newkalgen110 (5.0 parts) and Newkalgen EP-60P (0.83 parts) as the surfactant were mixed in a mortar until uniform to obtain a plant disease control composition. The test results for Example 65 are shown in Table 6.

[Examples 66 to 162]

Compositions of D-tagatose, an oil component and a surfactant were those listed in Table 6, and plant disease control compositions were obtained in the same manner as in Example 65. The test results for Example 66 to Example 162 are shown in Table 3.

[Example 163]

D-tagatose (40.0 parts), liquid paraffin (52.5 parts) as the oil component, and Solpol 4273 (7.5 parts) as the surfactant were mixed in a mortar until uniform to obtain a plant disease control composition. The test results for Example 163 are shown in Table 7.

[Examples 164 to 232]

Compositions of D-tagatose, an oil component and a surfactant were those listed in Table 7, and plant disease control compositions were obtained in the same manner as in Example 163. The test results for Example 164 to Example 232 are shown in Table 7.

[Example 233]

D-tagatose (40.6 parts) and liquid paraffin (59.4 parts) as the oil component were mixed in a mortar until uniform to obtain a plant disease control composition. The test results for Example 233 are shown in Table 8.

[Examples 164 to 232]

Compositions of D-tagatose, an oil component and a surfactant were those listed in Table 8, and plant disease control compositions were obtained in the same manner as in Example 233. The test results for Example 234 to Example 328 are shown in Table 8.

Evaluation methods for plant disease control test [Test Examples 1 to 7]

In this test example, control tests were conducted against cucumber powdery mildew (CPM), vine downy mildew (VDM), vine powdery mildew (VPM), tomato gray mold (TGM), tomato late blight (LB), apple scab (AS) and soybean rust (SbR). Details of the test method were described below.

(Cucumber powdery mildew: CPM)

After sowing test plants (cucumber variety: Sagami Hanshiro Fushinari), the plants were grown until a single true leaf had developed. In the test, each formulation was diluted with water to achieve the prescribed concentration, and the thus-obtained diluted solution was sprayed (2.5 ml/pot). One day after spraying, seedlings were spray-inoculated with a conidial suspension ($1.0 \times 10^5$ conidia/ml) of *Podosphaera xanthii,* and 7 days later, the degree of disease development was examined to evaluate effect thereof.

(Vine downy mildew: VDM)

After sowing test plants (vine variety: Neo Muscat), the plants were grown until three to four true leaves had developed. In the test, each formulation was diluted with water to achieve the prescribed concentration, and the thus-obtained diluted solution was sprayed (2.5 ml/pot). One day after spraying, seedlings were spray-inoculated with a zoosporangia suspension ($1.0 \times 10^4$ zoosporangia/ml) of *Plasmopara viticola,* and then left in an inoculation chamber at room temperature of 20°C for 24 hours to promote disease development. The degree of disease development was surveyed 10 days after inoculation to evaluate effect thereof.

(Vine powdery mildew: VPM)

After sowing test plants (vine variety: Neo Muscat), the plants were grown until three to four true leaves had developed. In the test, each formulation was diluted with water to achieve the prescribed concentration, and the thus-obtained diluted solution was sprayed (2.5 ml/pot). One day after spraying, seedlings were spray-inoculated with a conidial suspension ($1.0 \times 10^5$ conidia/ml) of *Uncinula necator,* and then left in an inoculation chamber at room temperature of 20°C for 24 hours to promote disease development. The degree of disease development was surveyed 10 days after inoculation to evaluate effect thereof.

(Tomato gray mold: TGM)

After sowing test plants (tomato variety: Ogata Fukuju), the plants were grown until three true leaves had developed. In the test, each formulation was diluted with water to achieve the prescribed concentration, and the thus-obtained diluted solution was sprayed (2.5 ml/pot). One day after spraying, seedlings were spray-inoculated with a conidial suspension ($1.0 \times 10^5$ conidia/ml) of *Botrytis cinerea,* and then left in an inoculation chamber at room temperature of 23°C for 48 hours to promote disease development. The degree of disease development was surveyed 2 days after inoculation to evaluate effect thereof.

(Tomato late blight: LB)

After sowing test plants (tomato variety: Ogata Fukuju), the plants were grown until three true leaves had developed. In the test, each formulation was diluted with water to achieve the prescribed concentration, and the thus-obtained diluted solution was sprayed (2.5 ml/pot). One day after spraying, seedlings were spray-inoculated with a zoosporangia suspension ($1.0 \times 10^3$ zoosporangia /ml) of *Phytophthora infestans,* and then left in an inoculation chamber at room temperature of 20°C for 24 hours to promote disease development. The degree of disease development was surveyed 7 days after inoculation to evaluate effect thereof.

(Apple scab: AS)

After sowing test plants (apple variety: Ourin), the plants were grown until four to five true leaves had developed. In the test, each formulation was diluted with well water to achieve the prescribed concentration, and the thus-obtained diluted solution was sprayed (2.5 ml/pot). One day after spraying, seedlings were spray-inoculated with a conidial suspension ($1.0 \times 10^5$ conidia/ml) of *Venturia inaequalis,* and then left in an inoculation chamber at room temperature of 20°C for 24 hours to promote disease development. The degree of disease development was surveyed 10 days after inoculation to evaluate effect thereof.

(Soybean rust: SbR)

After sowing test plants (soybean variety: Enrei), the plants were grown until two true leaves had developed. In the test, each formulation was diluted with well water to achieve the prescribed concentration, and the thus-obtained diluted solution was sprayed (2.5 ml/pot). One day after spraying, seedlings were spray-inoculated with a urediniospore suspension ($1.0 \times 10^5$ urediniospores /ml) of *Phakopsora pachyrhizi,* and then left in an inoculation chamber at room temperature of 20°C for 24 hours to promote disease development. The degree of disease development was surveyed 7 days after inoculation to evaluate effect thereof.

For the disease control tests evaluated by the above methods, the degree of disease development was evaluated using the following indices. The preventive value was calculated based on the degree of disease development.

[Degree of disease development]

|     |                              |
|-----|------------------------------|
| 0   | : No disease development     |
| 0.1 | : Diseased area is about 3%  |
| 0.3 | : Diseased area is about 10% |
| 0.8 | : Diseased area is about 25% |
| 1.5 | : Diseased area is about 50% |
| 2   | : Diseased area is about 70% |
| 3   | : Diseased area is about 95% |

[Preventive value]

$$\text{Preventive value} = 100\{1 - (n/N)\}$$

N = degree of disease development in untreated groups, n = degree of disease development in each group
Those that were not tested were noted as nt, and those that failed the test were noted as -.

Compared to D-tagatose wettable powders (WP) formulation (the formulation described in WO2014/142074 which comprises 80% D-tagatose, 0.25% Newkalgen SX-C, 0.25% Emal 10PT and 5% MORWET D-425 was used for Test Examples 1-6; the formulation described in WO2014/142074 which comprises 24% D-tagatose, 0.25% Newkalgen SX-C, 5% Emal 10PT and 5% MORWET D-425 was used for Test Example 7), the degree of improvement in the preventive value with the formulations of the present invention was evaluated as the following indices (preventive value indices).

0: Preventive value is less than or equal to that of D-tagatose WP formulation
1: Improved efficacy compared to D-tagatose WP formulation (improvement of 1 or more and less than 10)
2: Highly improved efficacy compared to D-tagatose WP formulation (improvement of 10 or more)

Evaluation method for rainfastness test [Test Examples 1 to 7]

Rainfastness tests were conducted against cucumber powdery mildew (CPM), vine downy mildew (VDM), vine powdery mildew (VPM) and tomato late blight (LB). Details of the test method are described below.

(Cucumber powdery mildew rainfastness: CPM RF)

After sowing test plants (cucumber variety: Sagami Hanshiro Fushinari), the plants were grown until a single true leaf had developed. In the test, each formulation was diluted with water to achieve the prescribed concentration, and the thus-obtained diluted solution was sprayed (2.5 ml/pot). One day after spraying, seedlings were spray-inoculated with a conidial suspension ($1.0 \times 10^5$ conidia/ml) of *Podosphaera xanthii* after 20 mm of rainfall was applied. After 7 days, the degree of disease development was surveyed to evaluate effect thereof.

(Vine downy mildew rainfastness: VDM RF)

After sowing test plants (vine variety: Neo Muscat), the plants were grown until three to four true leaves had developed. In the test, each formulation was diluted with water to achieve the prescribed concentration, and the thus-obtained diluted solution was sprayed (2.5 ml/pot). One day after spraying, seedlings were spray-inoculated with a zoosporangia suspension ($1.0 \times 10^3$ zoosporangialml) of *Plasmopara viticola* after 20 mm of rainfall was applied, and then left in an inoculation chamber at room temperature of 20°C for 24 hours to promote disease development. The degree of disease development was surveyed 10 days after inoculation to evaluate effect thereof.

(Vine powdery mildew rainfastness: VPM RF)

After sowing test plants (vine variety: Neo Muscat), the plants were grown until three to four true leaves had developed. In the test, each formulation was diluted with water to achieve the prescribed concentration, and the thus-obtained diluted solution was sprayed (2.5 ml/pot). One day after spraying, seedlings were spray-inoculated with a zoosporanga suspension ($1.0 \times 10^5$ zoosporangia/ml) of *Uncinula necator* after 20 mm of rainfall was applied. The degree of disease development was surveyed 10 days after inoculation to evaluate effect thereof.

(Tomato late blight rainfastness: LB RF)

After sowing test plants (tomato variety: Ogata Fukuju), the plants were grown until three true leaves had developed. In the test, each formulation was diluted with water to achieve the prescribed concentration, and the thus-obtained diluted solution was sprayed (2.5 ml/pot). One day after spraying, seedlings were spray-inoculated with a zoosporangia suspension ($1.0 \times 10^3$ zoosporangia/ml) of *Phytophthora infestans* after 20 mm of rainfall was applied, and then left in an inoculation chamber at room temperature of 20°C for 24 hours to promote disease development. The degree of disease development was surveyed 7 days after inoculation to evaluate effect thereof.

The rainfastness of plant disease control agents comprising D-tagatose, oil components, and surfactants against cucumber powdery mildew, vine downy mildew, vine powdery mildew and tomato late blight was evaluated using the following indices. Compared to D-tagatose wettable powders (WP) formulation (the formulation described in WO2014/142074 which comprises 80% D-tagatose, 0.25% Newkalgen SX-C, 0.25% Emal 10PT and 5% MORWET D-425 was used for Test Examples 1-6; the formulation described in WO2014/142074 which comprises 24% D-tagatose, 0.25% Newkalgen SX-C, 5% Emal 10PT and 5% MORWET D-425 was used for Test Example 7, the degree of improvement in the rainfastness with the formulations of the present invention was evaluated as the following indices (preventive value indices).

　　　0: Rainfastness at the same level as D-tagatose WP formulation
　　　1: Improved rainfastness compared to D-tagatose WP formulation (preventive value of 1 or more)

[Test Example 1] Evaluation of a plant disease control agent comprising D-Tagatose, an Oil Component and multiple surfactants

The efficacy and rainfastness of plant disease control agents comprising D-tagatose, oil components (soybean oil or liquid paraffin) and multiple surfactants (nonionic surfactants and anionic surfactants) prepared in the Examples were evaluated against diseases such as cucumber powdery mildew. They were evaluated using as the indices the degree of improvement in the preventive value and the degree of improvement in rainfastness compared to the D-tagatose wettable powders formulation, as described in the evaluation methods for the plant disease control test and the rainfastness test. The results are shown in Table 3.

[Table 3-1]

| No. | D-Taga-tose Content (parts) | Oil Content in Composition (parts) | | Content in composition (parts) | | | | | | | | | | | | |
|---|---|---|---|---|---|---|---|---|---|---|---|---|---|---|---|---|
| | | Oil A | Oil E | Assistant 1 | Assistant 2 | Assistant 3 | Assistant 4 | Assistant 5 | Assistant 6 | Assistant 7 | Assistant 8 | Assistant 9 | Assistant 20 | Assistant 37 | Assistant 42 | Assistant 44 |
| Example 1 | 40 | 0 | 52.5 | 0 | 0 | 0 | 0 | 0 | 7.5 | 0 | 0 | 0 | 0 | 0 | 0 | 0 |
| Example 2 | 40 | 0 | 52.5 | 7.5 | 0 | 0 | 0 | 0 | 0 | 0 | 0 | 0 | 0 | 0 | 0 | 0 |
| Example 3 | 40 | 0 | 52.5 | 0 | 7.5 | 0 | 0 | 0 | 0 | 0 | 0 | 0 | 0 | 0 | 0 | 0 |
| Example 4 | 40 | 0 | 52.5 | 0 | 0 | 7.5 | 0 | 0 | 0 | 0 | 0 | 0 | 0 | 0 | 0 | 0 |
| Example 5 | 40 | 0 | 52.5 | 0 | 0 | 0 | 0 | 0 | 0 | 7.4 | 0 | 0 | 0 | 0 | 0 | 0.1 |
| Example 6 | 40 | 0 | 52.5 | 0 | 0 | 0 | 0 | 0 | 0 | 0 | 0 | 0 | 7.4 | 0 | 0 | 0.1 |
| Example 7 | 40 | 0 | 52.5 | 0 | 0 | 0 | 7.5 | 0 | 0 | 0 | 0 | 0 | 0 | 0 | 0 | 0 |
| Example 8 | 40 | 0 | 52.5 | 0 | 0 | 0 | 0 | 7.5 | 0 | 0 | 0 | 0 | 0 | 0 | 0 | 0 |
| Example 9 | 40 | 52.5 | 0 | 0 | 0 | 0 | 0 | 0 | 0 | 0 | 7.5 | 0 | 0 | 0 | 0 | 0 |
| Example 10 | 40 | 52.5 | 0 | 0 | 0 | 0 | 0 | 0 | 0 | 0 | 0 | 7.5 | 0 | 0 | 0 | 0 |
| Example 11 | 40 | 51.98 | 0 | 7.5 | 0 | 0 | 0 | 0 | 0 | 0 | 0 | 0 | 0 | 0 | 0 | 0 |
| Example 12 | 40 | 51.86 | 0 | 0 | 0 | 0 | 0 | 0 | 0 | 7.4 | 0 | 0 | 0 | 0 | 0 | 0.1 |

Table 3: Composition, Efficacy and Rainfastness of Plant Disease Control Agent comprising n Tagatose, an Oil component and multiple surfactants

EP 4 349 169 A1

| Table 3: Composition, Efficacy and Rainfastness of Plant Disease Control Agent comprising n Tagatose, an Oil component and multiple surfactants | | | | | | | | | | | | | | | | | |
|---|---|---|---|---|---|---|---|---|---|---|---|---|---|---|---|---|---|
| No. | D-Tagatose Content (parts) | Oil Content in Composition (parts) | | Content in composition (parts) | | | | | | | | | | | | | |
| | | Oil A | Oil E | Assistant 1 | Assistant 2 | Assistant 3 | Assistant 4 | Assistant 5 | Assistant 6 | Assistant 7 | Assistant 8 | Assistant 9 | Assitant 20 | Assistant 37 | Assistant 42 | Assistant 44 |
| Example 13 | 40 | 51.86 | 0 | 0 | 0 | 0 | 0 | 0 | 0 | 0 | 10 | 0 | 0 | 0 | 0 | 0.5 |
| Example 14 | 40 | 51.86 | 0 | 0 | 0 | 0 | 0 | 0 | 0 | 0 | 10 | 0 | 0 | 0 | 0.83 | 0 |
| Example 15 | 40 | 51.86 | 0 | 0 | 0 | 0 | 0 | 0 | 0 | 0 | 0 | 10 | 0 | 0 | 0 | 0.5 |
| Example 16 | 40 | 51.86 | 0 | 0 | 0 | 0 | 0 | 0 | 0 | 0 | 0 | 10 | 0 | 0 | 0.83 | 0 |
| Example 17 | 20 | 0 | 70 | 0 | 0 | 0 | 0 | 0 | 10 | 0 | 0 | 0 | 0 | 0 | 0 | 0 |
| Example 18 | 20 | 0 | 70 | 10 | 0 | 0 | 0 | 0 | 0 | 0 | 0 | 0 | 0 | 0 | 0 | 0 |
| Example 19 | 20 | 0 | 70 | 0 | 10 | 0 | 0 | 0 | 0 | 0 | 0 | 0 | 0 | 0 | 0 | 0 |
| Example 20 | 20 | 0 | 70 | 0 | 0 | 10 | 0 | 0 | 0 | 0 | 0 | 0 | 0 | 0 | 0 | 0 |
| Example 21 | 20 | 0 | 40 | 0 | 0 | 0 | 0 | 0 | 0 | 0 | 0 | 0 | 0 | 40 | 0 | 0 |
| Example 22 | 20 | 70 | 0 | 0 | 0 | 0 | 0 | 0 | 0 | 0 | 10 | 0 | 0 | 0 | 0 | 0 |
| Example 23 | 20 | 70 | 0 | 0 | 0 | 0 | 0 | 0 | 0 | 0 | 0 | 10 | 0 | 0 | 0 | 0 |

EP 4 349 169 A1

[Table 3-2]

| Continuation of Table 3 | | | | | | | | | | | | |
|---|---|---|---|---|---|---|---|---|---|---|---|---|
| No. | D-Tagatose Treatment Concentration (ppm) | Preventive Value Indices | | | | | | | | | | |
| | | CPM | VDM | TGM | VPM | LB | AS | SbR | CPM RF | VDM RF | VPM RF |
| Example 1 | 4000 | 2 | 1 | 1 | nt | nt | nt | nt | 1 | 1 | nt |
| Example 2 | 4000 | 2 | 2 | 2 | 2 | 1 | 2 | 2 | 1 | 1 | nt |
| Example 3 | 4000 | 2 | 2 | 1 | nt | nt | nt | nt | 1 | 1 | nt |
| Example 4 | 4000 | 2 | 2 | 2 | nt | nt | nt | nt | nt | nt | nt |
| Example 5 | 4000 | 2 | 2 | 1 | 2 | 0 | 1 | 2 | 1 | 1 | nt |
| Example 6 | 4000 | 1 | 1 | nt | nt | nt | nt | nt | nt | nt | nt |
| Example 7 | 4000 | 2 | 2 | nt | nt | nt | nt | nt | nt | nt | nt |
| Example 8 | 4000 | 2 | 0 | nt | nt | nt | nt | nt | 1 | 1 | nt |
| Example 9 | 4000 | 0 | 0 | nt | nt | nt | nt | nt | 1 | 1 | 1 |
| Example 10 | 4000 | 0 | 1 | nt | nt | nt | nt | nt | 1 | 1 | nt |
| Example 11 | 4000 | 0 | 1 | 2 | nt | nt | nt | nt | nt | nt | nt |
| Example 12 | 4000 | 0 | 0 | 0 | nt | nt | nt | nt | 1 | 1 | nt |
| Example 13 | 4000 | 1 | 2 | nt | 2 | 2 | 2 | 2 | 1 | 1 | nt |
| Example 14 | 4000 | 1 | 2 | nt | 2 | 2 | 2 | 2 | 1 | 1 | nt |
| Example 15 | 4000 | 1 | 2 | nt | 2 | 2 | 2 | 2 | 1 | 1 | nt |
| Example 16 | 4000 | 1 | 2 | nt | 2 | 2 | 2 | 2 | 1 | 1 | nt |
| Example 17 | 4000 | 0 | 1 | nt | nt | nt | nt | nt | nt | nt | nt |
| Example 18 | 4000 | 0 | 2 | nt | nt | nt | nt | nt | nt | nt | nt |
| Example 19 | 4000 | 1 | 2 | nt | nt | nt | nt | nt | nt | nt | nt |
| Example 20 | 4000 | 0 | 2 | nt | nt | nt | nt | nt | nt | nt | nt |

(continued)

| Continuation of Table 3 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 21 | 4000 | 0 | 2 | nt | nt | nt | nt | nt | nt | nt | nt |
| Example 22 | 4000 | 0 | 0 | nt | nt | nt | nt | nt | nt | nt | nt |
| Example 23 | 4000 | 0 | 2 | nt | nt | nt | nt | nt | nt | nt | nt |

The plant disease control agents comprising D-tagatose, the oil component (soybean oil or liquid paraffin) and the multiple surfactants (nonionic surfactants and anionic surfactants) showed significantly improved efficacy and rainfastness compared to D-tagatose wettable powders formulation against cucmber powdery mildew, vine downy mildew, tomato grey molt, vine powdery mildew, tomato late blight, apple scab and soybean rust.

[Test Example 2] Evaluation of a plant disease control agent comprising D-Tagatose, soybean oil and a nonionic surfactant

The efficacy and rainfastness of plant disease control agents comprising D-tagatose, soybean oil and a nonionic surfactant prepared in the Examples were evaluated against diseases such as cucmber powdery mildew. They were evaluated using as the indices the degree of improvement in the preventive value and the degree of improvement in rainfastness, as with Test Example 1. The results are shown in Table 4.

[Table 4-1]

| Table 4: Composition, Efficacy and Rainfastness of Plant Disease Control Agent | | | | | | | |
|---|---|---|---|---|---|---|---|
| comprising D-Tagatose, Soybean Oil and Nonionic Surfactant | | | | | | | |
| No. | D-Tagatose Content (parts) | Oil Content in composition (parts) | Content in composition (parts) | | | | |
| | | Oil E | Assistant 10 | Assistant 11 | Assistant 12 | Assistant 13 | Assistant 14 |
| Example 24 | 40.6 | 51.86 | 7.41 | 0 | 0 | 0 | 0 |
| Example 25 | 40.6 | 51.86 | 0 | 7.41 | 0 | 0 | 0 |
| Example 26 | 40.6 | 51.86 | 0 | 0 | 7.41 | 0 | 0 |
| Example 27 | 40.6 | 51.86 | 0 | 0 | 0 | 7.41 | 0 |
| Example 28 | 40.6 | 51.86 | 0 | 0 | 0 | 0 | 7.41 |
| Example 29 | 40.6 | 51.86 | 0 | 0 | 0 | 0 | 0 |
| Example 30 | 40.6 | 51.86 | 0 | 0 | 0 | 0 | 0 |
| Example 31 | 40.6 | 51.86 | 0 | 0 | 0 | 0 | 0 |

(continued)

| Table 4: Composition, Efficacy and Rainfastness of Plant Disease Control Agent | | | | | | | |
|---|---|---|---|---|---|---|---|
| comprising D-Tagatose, Soybean Oil and Nonionic Surfactant | | | | | | | |
| No. | D-Tagatose Content (parts) | Oil Content in composition (parts) | Content in composition (parts) | | | | |
| | | Oil E | Assistant 10 | Assistant 11 | Assistant 12 | Assistant 13 | Assistant 14 |
| Example 32 | 40.6 | 51.86 | 0 | 0 | 0 | 0 | 0 |
| Example 33 | 40.6 | 51.86 | 0 | 0 | 0 | 0 | 0 |

| Continuation of Table 4 | | | | | | | | |
|---|---|---|---|---|---|---|---|---|
| No. | Content in composition (parts) | | | | | | | |
| | Assistant 15 | Assistant 16 | Assistant 17 | Assistant 18 | Assistant 19 | Assistant 20 | Assistant 21 | Assistant 22 |
| Example 24 | 0 | 0 | 0 | 0 | 0 | 0 | 0 | 0 |
| Example 25 | 0 | 0 | 0 | 0 | 0 | 0 | 0 | 0 |
| Example 26 | 0 | 0 | 0 | 0 | 0 | 0 | 0 | 0 |
| Example 27 | 0 | 0 | 0 | 0 | 0 | 0 | 0 | 0 |
| Example 28 | 0 | 0 | 0 | 0 | 0 | 0 | 0 | 0 |
| Example 29 | 7.41 | 0 | 0 | 0 | 0 | 0 | 0 | 0 |
| Example 30 | 0 | 7.41 | 0 | 0 | 0 | 0 | 0 | 0 |
| Example 31 | 0 | 0 | 7.41 | 0 | 0 | 0 | 0 | 0 |
| Example 32 | 0 | 0 | 0 | 7.41 | 0 | 0 | 0 | 0 |
| Example 33 | 0 | 0 | 0 | 0 | 7.41 | 0 | 0 | 0 |

| Continuation of Table 4 | | | | | | | | |
|---|---|---|---|---|---|---|---|---|
| No. | Content in composition (parts) | | | | | | | |
| | Assistant 23 | Assistant 24 | Assistant 25 | Assistant 26 | Assistant 38 | Assistant 41 | Assistant 40 | Assistant 44 |
| Example 24 | 0 | 0 | 0 | 0 | 0 | 0 | 0 | 0.13 |

(continued)

| Continuation of Table 4 | | | | | | | | |
|---|---|---|---|---|---|---|---|---|
| No. | Content in composition (parts) | | | | | | | |
| | Assistant 23 | Assistant 24 | Assistant 25 | Assistant 26 | Assistant 38 | Assistant 41 | Assistant 40 | Assistant 44 |
| Example 25 | 0 | 0 | 0 | 0 | 0 | 0 | 0 | 0.13 |
| Example 26 | 0 | 0 | 0 | 0 | 0 | 0 | 0 | 0.13 |
| Example 27 | 0 | 0 | 0 | 0 | 0 | 0 | 0 | 0.13 |
| Example 28 | 0 | 0 | 0 | 0 | 0 | 0 | 0 | 0.13 |
| Example 29 | 0 | 0 | 0 | 0 | 0 | 0 | 0 | 0.13 |
| Example 30 | 0 | 0 | 0 | 0 | 0 | 0 | 0 | 0.13 |
| Example 31 | 0 | 0 | 0 | 0 | 0 | 0 | 0 | 0.13 |
| Example 32 | 0 | 0 | 0 | 0 | 0 | 0 | 0 | 0.13 |
| Example 33 | 0 | 0 | 0 | 0 | 0 | 0 | 0 | 0.13 |

| Continuation of Table 4 | | | | | | | |
|---|---|---|---|---|---|---|---|
| No. | D-Tagatose Content (parts) | Oil Content in composition (parts) | Content in composition (parts) | | | | |
| | | Oil E | Assistant 10 | Assistant 11 | Assistant 12 | Assistant 13 | Assistant 14 |
| Example 34 | 40.6 | 51.86 | 0 | 0 | 0 | 0 | 0 |
| Example 35 | 40.6 | 51.86 | 0 | 0 | 0 | 0 | 0 |
| Example 36 | 40.6 | 51.86 | 0 | 0 | 0 | 0 | 0 |
| Example 37 | 40.6 | 51.86 | 0 | 0 | 0 | 0 | 0 |
| Example 38 | 40.6 | 51.86 | 0 | 0 | 0 | 0 | 0 |
| Example 39 | 40.6 | 51.86 | 0 | 0 | 0 | 0 | 0 |
| Example 40 | 40.6 | 51.86 | 0 | 0 | 0 | 0 | 0 |
| Example 41 | 40.6 | 51.86 | 0 | 0 | 0 | 0 | 0 |

(continued)

| Continuation of Table 4 | | | | | | | |
|---|---|---|---|---|---|---|---|
| No. | D-Tagatose Content (parts) | Oil Content in composition (parts) | Content in composition (parts) | | | | |
| | | Oil E | Assistant 10 | Assistant 11 | Assistant 12 | Assistant 13 | Assistant 14 |
| Example 42 | 40.6 | 51.86 | 0 | 0 | 0 | 0 | 0 |
| Example 43 | 40.6 | 51.86 | 0 | 0 | 0 | 0 | 0 |

| Continuation of Table 4 | | | | | | | |
|---|---|---|---|---|---|---|---|
| No. | Content in composition (parts) | | | | | | |
| | Assistant 15 | Assistant 16 | Assistant 17 | Assistant 18 | Assistant 19 | Assistant 20 | Assistant 21 | Assistant 22 |
| Example 34 | 0 | 0 | 0 | 0 | 0 | 7.41 | 0 | 0 |
| Example 35 | 0 | 0 | 0 | 0 | 0 | 0 | 7.41 | 0 |
| Example 36 | 0 | 0 | 0 | 0 | 0 | 0 | 0 | 7.41 |
| Example 37 | 0 | 0 | 0 | 0 | 0 | 0 | 0 | 0 |
| Example 38 | 0 | 0 | 0 | 0 | 0 | 0 | 0 | 0 |
| Example 39 | 0 | 0 | 0 | 0 | 0 | 0 | 0 | 0 |
| Example 40 | 0 | 0 | 0 | 0 | 0 | 0 | 0 | 0 |
| Example 41 | 0 | 0 | 0 | 0 | 0 | 0 | 0 | 0 |
| Example 42 | 0 | 0 | 0 | 0 | 0 | 0 | 0 | 0 |
| Example 43 | 0 | 0 | 0 | 0 | 0 | 0 | 0 | 0 |

| Continuation of Table 4 | | | | | | | |
|---|---|---|---|---|---|---|---|
| No. | Content in composition (parts) | | | | | | |
| | Assistant 23 | Assistant 24 | Assistant 25 | Assistant 26 | Assistant 38 | Assistant 41 | Assistant 40 | Assistant 44 |
| Example 34 | 0 | 0 | 0 | 0 | 0 | 0 | 0 | 0.13 |

(continued)

| | Content in composition (parts) | | | | | | | |
|---|---|---|---|---|---|---|---|---|
| No. | Assistant 23 | Assistant 24 | Assistant 25 | Assistant 26 | Assistant 38 | Assistant 41 | Assistant 40 | Assistant 44 |
| Example 35 | 0 | 0 | 0 | 0 | 0 | 0 | 0 | 0.13 |
| Example 36 | 0 | 0 | 0 | 0 | 0 | 0 | 0 | 0.13 |
| Example 37 | 7.41 | 0 | 0 | 0 | 0 | 0 | 0 | 0.13 |
| Example 38 | 0 | 7.41 | 0 | 0 | 0 | 0 | 0 | 0.13 |
| Example 39 | 0 | 0 | 7.41 | 0 | 0 | 0 | 0 | 0.13 |
| Example 40 | 0 | 0 | 0 | 7.41 | 0 | 0 | 0 | 0.13 |
| Example 41 | 0 | 0 | 0 | 0 | 7.41 | 0 | 0 | 0.13 |
| Example 42 | 0 | 0 | 0 | 0 | 0 | 7.41 | 0 | 0.13 |
| Example 43 | 0 | 0 | 0 | 0 | 0 | 0 | 7.41 | 0.13 |

Continuation of Table 4

[Table 4-2]

Continuation of Table 4

| No. | D-Tagatose Treatment Concentration (ppm) | Preventive Value Indices | | | | | | | | | |
|---|---|---|---|---|---|---|---|---|---|---|---|
| | | CPM | VDM | TGM | VPM | LB | AS | SbR | CPM RF | VDM RF | VPM RF |
| Example 24 | 4000 | 2 | 2 | 2 | nt | nt | nt | nt | 1 | 1 | nt |
| Example 25 | 4000 | 2 | 0 | 2 | nt | nt | nt | nt | nt | nt | nt |
| Example 26 | 4000 | 2 | 2 | 2 | 2 | nt | nt | nt | 1 | 1 | nt |
| Example 27 | 4000 | 2 | 2 | 0 | 2 | 0 | nt | nt | 1 | 1 | nt |
| Example 28 | 4000 | 2 | 2 | 0 | nt | nt | nt | nt | nt | nt | nt |
| Example 29 | 4000 | 2 | 2 | 2 | nt | nt | nt | nt | nt | nt | nt |
| Example 30 | 4000 | 2 | 2 | 2 | nt | nt | nt | nt | nt | nt | nt |
| Example 31 | 4000 | 2 | 2 | 2 | 2 | nt | nt | nt | 1 | 1 | nt |

(continued)

| Continuation of Table 4 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 32 | 4000 | 2 | 2 | 2 | 2 | 0 | nt | nt | 1 | 1 | nt |
| Example 33 | 4000 | 2 | 2 | 0 | 1 | 0 | nt | nt | 1 | 1 | nt |

| Continuation of Table 4 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 34 | 4000 | 1 | 1 | nt | nt | nt | nt | nt | 1 | 1 | nt |
| Example 35 | 4000 | nt | 2 | nt | 2 | nt | nt | nt | 1 | nt | nt |
| Example 36 | 4000 | 2 | 2 | 0 | 2 | 1 | nt | nt | 1 | 1 | nt |
| Example 37 | 4000 | 2 | 2 | 0 | 2 | 2 | nt | nt | 1 | 1 | nt |
| Example 38 | 4000 | 2 | 2 | 0 | 2 | 0 | nt | nt | 1 | 1 | nt |
| Example 39 | 4000 | 0 | 0 | nt | nt | nt | nt | nt | nt | nt | nt |
| Example 40 | 4000 | 0 | 2 | nt | nt | nt | nt | nt | nt | nt | nt |
| Example 41 | 4000 | 1 | 0 | nt | nt | nt | nt | nt | nt | nt | nt |
| Example 42 | 4000 | 2 | 0 | nt | nt | nt | nt | nt | nt | nt | nt |
| Example 43 | 4000 | 1 | 0 | nt | nt | nt | nt | nt | nt | nt | nt |

The plant disease control agents comprising D-tagatose, soybean oil and the nonionic surfactant showed significantly improved efficacy and rainfastness compared to D-tagatose wettable powders formulation against cucumber powdery mildew, vine downy mildew, tomato gray mold, vine powdery mildew, tomato late blight, apple scab and soybean rust.

[Test Example 3] Evaluation of a plant disease control agent comprising D-tagatose, soybean oil and a surfactant (nonionic surfactants and anionic surfactants)

The efficacy and rainfastness of plant disease control agents comprising D-tagatose, soybean oil and a surfactant (nonionic surfactants and anionic surfactants) prepared in the Examples were evaluated against diseases such as cucumber powdery mildew. They were evaluated using as the indices the degree of improvement in the preventive value and the degree of improvement in rainfastness, as with Test Example 1. The results are shown in Table 5.

[Table 5-1]

Table 5: Composition, Efficacy and Rainfastness of Plant Disease Control Agent comprising D-Tagatose, Soybean Oil and Surfactant (Nonionic Surfactant, Anionic Surfactant)

| No. | D-Tagatose Content (parts) | Oil Content in Composition (parts) | Content in composition (parts) | | | | | | | | |
|---|---|---|---|---|---|---|---|---|---|---|---|
| | | OilE | Assistant 7 | Assistant 20 | Assistant 42 | Assistant 43 | Assistant 44 | Assistant 45 | Assistant 46 | Assistant 47 | Assistant 48 |
| Example 44 | 40.6 | 51.9 | 7.5 | 0 | 0 | 0 | 0 | 0 | 0 | 0 | 0 |
| Example 45 | 40.6 | 58.57 | 7.5 | 0 | 0.83 | 0 | 0 | 0 | 0 | 0 | 0 |
| Example 46 | 40.6 | 58.57 | 7.5 | 0 | 0 | 0.83 | 0 | 0 | 0 | 0 | 0 |
| Example 47 | 40.6 | 58.9 | 7.5 | 0 | 0 | 0 | 0.5 | 0 | 0 | 0 | 0 |
| Example 48 | 40.6 | 58.9 | 7.5 | 0 | 0 | 0 | 0 | 0.5 | 0 | 0 | 0 |
| Example 49 | 40.6 | 58.9 | 7.5 | 0 | 0 | 0 | 0 | 0 | 0.5 | 0 | 0 |
| Example 50 | 40.6 | 58.9 | 7.5 | 0 | 0 | 0 | 0 | 0 | 0 | 0.5 | 0 |
| Example 51 | 40.6 | 58.9 | 7.5 | 0 | 0 | 0 | 0 | 0 | 0 | 0 | 0.5 |
| Example 52 | 40.6 | 58.57 | 0 | 7.5 | 0.83 | 0 | 0 | 0 | 0 | 0 | 0 |
| Example 53 | 40.6 | 58.57 | 0 | 7.5 | 0 | 0.83 | 0 | 0 | 0 | 0 | 0 |
| Example 54 | 40.6 | 58.9 | 0 | 7.5 | 0 | 0 | 0.5 | 0 | 0 | 0 | 0 |
| Example 55 | 40.6 | 58.9 | 0 | 7.5 | 0 | 0 | 0 | 0.5 | 0 | 0 | 0 |

EP 4 349 169 A1

| Table 5: Composition, Efficacy and Rainfastness of Plant Disease Control Agent comprising D-Tagatose, Soybean Oil and Surfactant (Nonionic Surfactant, Anionic Surfactant) | | | | | | | | | | | | |
|---|---|---|---|---|---|---|---|---|---|---|---|---|
| No. | D-Tagatose Content (parts) | Oil Content in Composition (parts) | Content in composition (parts) | | | | | | | | | |
| | | OilE | Assistant 7 | Assistant 20 | Assistant 42 | Assistant 43 | Assistant 44 | Assistant 45 | Assistant 46 | Assistant 47 | Assistant 48 |
| Example 56 | 40.6 | 59.4 | 0 | 7.5 | 0 | 0 | 0 | 0 | 0.5 | 0 | 0 |
| Example 57 | 40.6 | 58.07 | 7.5 | 0 | 0.83 | 0 | 0.5 | 0 | 0 | 0 | 0 |
| Example 58 | 40.6 | 57.24 | 7.5 | 0 | 0.83 | 0.83 | 0.5 | 0 | 0 | 0 | 0 |
| Example 59 | 40.6 | 57.57 | 7.5 | 0 | 0.83 | 0 | 0.5 | 0.5 | 0 | 0 | 0 |
| Example 60 | 40.6 | 58.07 | 7.5 | 0 | 0.83 | 0 | 0.5 | 0 | 0.5 | 0 | 0 |
| Example 61 | 40.6 | 58.07 | 7.5 | 0 | 0.83 | 0 | 0.5 | 0 | 0 | 0 | 0 |
| Example 62 | 40.6 | 57.24 | 7.5 | 0 | 0.83 | 0.83 | 0.5 | 0 | 0 | 0 | 0 |
| Example 63 | 40.6 | 57.57 | 7.5 | 0 | 0.83 | 0 | 0.5 | 0.5 | 0 | 0 | 0 |
| Example 64 | 40.6 | 58.07 | 7.5 | 0 | 0.83 | 0 | 0.5 | 0 | 0.5 | 0 | 0 |

[Table 5-2]

| | No. | D-Tagatose Treatment Concentration (ppm) | Preventive Value Indices | | | | | | | | | |
|---|---|---|---|---|---|---|---|---|---|---|---|---|
| | | | CPM | VDM | TGM | VPM | LB | AS | SbR | CPM RF | VDM RF | VPM RF |
| Continuation of Table 5 | | | | | | | | | | | | |
| | Example 44 | 4000 | 1 | 0 | nt | nt | nt | nt | nt | 1 | 1 | nt |
| | Example 45 | 4000 | 2 | 2 | nt | nt | nt | nt | nt | 1 | 1 | nt |
| | Example 46 | 4000 | 2 | 2 | nt | nt | nt | nt | nt | 1 | 1 | nt |
| | Example 47 | 4000 | 2 | 2 | nt | nt | nt | nt | nt | 0 | 1 | nt |
| | Example 48 | 4000 | 1 | 0 | nt | nt | nt | nt | nt | 0 | 1 | nt |
| | Example 49 | 4000 | 1 | 1 | nt | nt | nt | nt | nt | 1 | 1 | nt |
| | Example 50 | 4000 | 1 | 1 | nt | nt | nt | nt | nt | 1 | 1 | nt |
| | Example 51 | 4000 | 2 | 1 | nt | nt | nt | nt | nt | 0 | 1 | 1 |
| | Example 52 | 4000 | 1 | 1 | nt | nt | nt | nt | nt | 1 | 1 | nt |
| | Example 53 | 4000 | 1 | 2 | nt | nt | nt | nt | nt | nt | nt | nt |
| | Example 54 | 4000 | 2 | 0 | nt | nt | nt | nt | nt | nt | nt | nt |
| | Example 55 | 4000 | 0 | 1 | nt | nt | nt | nt | nt | nt | nt | nt |
| | Example 56 | 4000 | 2 | 0 | nt | nt | nt | nt | nt | nt | nt | nt |
| | Example 57 | 4000 | 2 | 2 | nt | nt | nt | nt | nt | nt | nt | nt |
| | Example 58 | 4000 | 2 | 2 | nt | nt | nt | nt | nt | nt | nt | nt |
| | Example 59 | 4000 | 1 | 2 | nt | nt | nt | nt | nt | nt | nt | nt |
| | Example 60 | 4000 | 2 | 1 | nt | nt | nt | nt | nt | nt | nt | nt |
| | Example 61 | 4000 | 1 | 2 | nt | nt | nt | nt | nt | nt | nt | nt |
| | Example 62 | 4000 | 2 | 2 | nt | nt | nt | nt | nt | nt | nt | nt |
| | Example 63 | 4000 | 0 | 0 | nt | nt | nt | nt | nt | nt | nt | nt |

(continued)

| Continuation of Table 5 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 64 | 4000 | 2 | 0 | nt | nt | nt | nt | nt | nt | nt | nt |

The plant disease control agents comprising D-tagatose, soybean oil and the surfactant (nonionic surfactants and anionic surfactants) showed significantly improved efficacy and rainfastness compared to D-tagatose wettable powders formulation against cucumber powdery mildew, vine downy mildew, tomato gray mold, vine powdery mildew, tomato late blight, apple scab and soybean rust.

[Test Example 4] Evaluation of a plant disease control agent comprising D-tagatose, soybean oil and various surfactants

The efficacy and rainfastness of plant disease control agents comprising D-tagatose, soybean oil and various surfactants prepared in the Examples were evaluated against diseases such as cucumber powdery mildew. They were evaluated using as the indices the degree of improvement in the preventive value and the degree of improvement in rainfastness, as with Test Example 1. The results are shown in Table 6.

[Table 6-1]

Table 6: Composition, Efficacy and Rainfastness of Plant Disease Control Agent comprising D-Tagatose, Soybean Oil and various Surfactants

| No. | D-Tagatose Content (parts) | Oil Content in Composition (parts) | Content in composition (parts) | | | | | | | | | | | | | | | | |
| --- | --- | --- | --- | --- | --- | --- | --- | --- | --- | --- | --- | --- | --- | --- | --- | --- | --- | --- | --- |
| | | Oil E | Assist-ant 7 | Assist-ant 13 | Assist-ant 18 | Assist-ant 20 | Assist-ant 22 | Assist-ant 26 | Assist-ant 38 | Assist-ant 40 | Assist-ant 41 | Assist-ant 42 | Assist-ant 44 | Assist-ant 49 | Assist-ant 50 | Assist-ant 51 | Assist-ant 52 | Assist-ant 53 | Assist-ant 54 |
| Example 65 | 40.6 | 53.57 | 5 | 0 | 0 | 0 | 0 | 0 | 0 | 0 | 0 | 0.83 | 0 | 0 | 0 | 0 | 0 | 0 | 0 |
| Example 66 | 40.6 | 48.57 | 10 | 0 | 0 | 0 | 0 | 0 | 0 | 0 | 0 | 0.83 | 0 | 0 | 0 | 0 | 0 | 0 | 0 |
| Example 67 | 40.6 | 43.57 | 15 | 0 | 0 | 0 | 0 | 0 | 0 | 0 | 0 | 0.83 | 0 | 0 | 0 | 0 | 0 | 0 | 0 |
| Example 68 | 40.6 | 38.57 | 20 | 0 | 0 | 0 | 0 | 0 | 0 | 0 | 0 | 0.83 | 0 | 0 | 0 | 0 | 0 | 0 | 0 |
| Example 69 | 40.6 | 51.69 | 7.5 | 0 | 0 | 0 | 0 | 0 | 0 | 0 | 0 | 0.21 | 0 | 0 | 0 | 0 | 0 | 0 | 0 |
| Example 70 | 40.6 | 51.48 | 7.5 | 0 | 0 | 0 | 0 | 0 | 0 | 0 | 0 | 0.42 | 0 | 0 | 0 | 0 | 0 | 0 | 0 |
| Example 71 | 40.6 | 50.23 | 7.5 | 0 | 0 | 0 | 0 | 0 | 0 | 0 | 0 | 1.67 | 0 | 0 | 0 | 0 | 0 | 0 | 0 |
| Example 72 | 40.6 | 48.57 | 7.5 | 0 | 0 | 0 | 0 | 0 | 0 | 0 | 0 | 3.33 | 0 | 0 | 0 | 0 | 0 | 0 | 0 |
| Example 73 | 40.6 | 56.07 | 2.5 | 0 | 0 | 0 | 0 | 0 | 0 | 0 | 0 | 0.83 | 0 | 0 | 0 | 0 | 0 | 0 | 0 |
| Example 74 | 40.6 | 51.07 | 7.5 | 0 | 0 | 0 | 2.5 | 0 | 0 | 0 | 0 | 0.83 | 0 | 0 | 0 | 0 | 0 | 0 | 0 |
| Example 75 | 40.6 | 51.07 | 7.5 | 0 | 0 | 0 | 5.0 | 0 | 0 | 0 | 0 | 0.83 | 0 | 0 | 0 | 0 | 0 | 0 | 0 |

EP 4 349 169 A1

| Table 6: Composition, Efficacy and Rainfastness of Plant Disease Control Agent comprising D-Tagatose, Soybean Oil and various Surfactants | | | | | | | | | | | | | | | | | | | | |
|---|---|---|---|---|---|---|---|---|---|---|---|---|---|---|---|---|---|---|---|---|
| No. | D-Tagatose Content (parts) | Oil Content in Composition (parts) | Content in composition (parts) | | | | | | | | | | | | | | | | | |
| | | Oil E | Assist-ant 7 | Assist-ant 13 | Assist-ant 18 | Assist-ant 20 | Assist-ant 22 | Assist-ant 26 | Assist-ant 38 | Assist-ant 40 | Assist-ant 41 | Assist-ant 42 | Assist-ant 44 | Assist-ant 49 | Assist-ant 50 | Assist-ant 51 | Assist-ant 52 | Assist-ant 53 | Assist-ant 54 |
| Example 76 | 40.6 | 51.07 | 7.5 | 0 | 0 | 0 | 7.5 | 0 | 0 | 0 | 0 | 0.83 | 0 | 0 | 0 | 0 | 0 | 0 | 0 |
| Example 77 | 40.6 | 51.07 | 7.5 | 0 | 0 | 0 | 10.00 | 0 | 0 | 0 | 0 | 0.83 | 0 | 0 | 0 | 0 | 0 | 0 | 0 |
| Example 78 | 40.6 | 51.07 | 7.5 | 0 | 2.5 | 0 | 0 | 0 | 0 | 0 | 0 | 0.83 | 0 | 0 | 0 | 0 | 0 | 0 | 0 |
| Example 79 | 40.6 | 51.07 | 7.5 | 0 | 5.0 | 0 | 0 | 0 | 0 | 0 | 0 | 0.83 | 0 | 0 | 0 | 0 | 0 | 0 | 0 |
| Example 80 | 40.6 | 51.07 | 7.5 | 0 | 7.5 | 0 | 0 | 0 | 0 | 0 | 0 | 0.83 | 0 | 0 | 0 | 0 | 0 | 0 | 0 |
| Example 81 | 40.6 | 51.07 | 7.5 | 0 | 10.00 | 0 | 0 | 0 | 0 | 0 | 0 | 0.83 | 0 | 0 | 0 | 0 | 0 | 0 | 0 |
| Example 82 | 40.6 | 51.07 | 7.5 | 2.5 | 0 | 0 | 0 | 0 | 0 | 0 | 0 | 0.83 | 0 | 0 | 0 | 0 | 0 | 0 | 0 |
| Example 83 | 40.6 | 51.07 | 7.5 | 5.0 | 0 | 0 | 0 | 0 | 0 | 0 | 0 | 0.83 | 0 | 0 | 0 | 0 | 0 | 0 | 0 |
| Example 84 | 40.6 | 51.07 | 7.5 | 7.5 | 0 | 0 | 0 | 0 | 0 | 0 | 0 | 0.83 | 0 | 0 | 0 | 0 | 0 | 0 | 0 |
| Example 85 | 40.6 | 51.07 | 7.5 | 10.00 | 0 | 0 | 0 | 0 | 0 | 0 | 0 | 0.83 | 0 | 0 | 0 | 0 | 0 | 0 | 0 |
| Example 86 | 40.6 | 58.57 | 5.0 | 0 | 0 | 0 | 0 | 0 | 5.0 | 0 | 0 | 0.83 | 0 | 0 | 0 | 0 | 0 | 0 | 0 |

(continued)

| Table 6: Composition, Efficacy and Rainfastness of Plant Disease Control Agent comprising D-Tagatose, Soybean Oil and various Surfactants | | | | | | | | | | | | | | | | | | | | |
|---|---|---|---|---|---|---|---|---|---|---|---|---|---|---|---|---|---|---|---|---|
| No. | D-Tag-atose Con-tent (parts) | Oil Con-tent in Composi-tion (parts) | Content in composition (parts) | | | | | | | | | | | | | | | | | |
| | | Oil E | Assist-ant 7 | Assist-ant 13 | Assist-ant 18 | Assist-ant 20 | Assist-ant 22 | Assist-ant 26 | Assist-ant 38 | Assist-ant 40 | Assist-ant 41 | Assist-ant 42 | Assist-ant 44 | Assist-ant 49 | Assist-ant 50 | Assist-ant 51 | Assist-ant 52 | Assist-ant 53 | Assist-ant 54 |
| Example 87 | 40.6 | 58.57 | 5.0 | 0 | 0 | 0 | 0 | 0 | 0 | 0 | 5.0 | 0.83 | 0 | 0 | 0 | 0 | 0 | 0 | 0 |
| Example 88 | 40.6 | 58.57 | 5.0 | 0 | 0 | 0 | 0 | 0 | 0 | 5.0 | 0 | 0.83 | 0 | 0 | 0 | 0 | 0 | 0 | 0 |
| Example 89 | 40.6 | 58.57 | 5.0 | 0 | 0 | 0 | 0 | 5.0 | 0 | 0 | 0 | 0.83 | 0 | 0 | 0 | 0 | 0 | 0 | 0 |
| Example 90 | 40.6 | 58.9 | 5.0 | 0 | 0 | 0 | 5.0 | 0 | 0 | 0 | 0 | 0 | 0.5 | 0 | 0 | 0 | 0 | 0 | 0 |
| Example 91 | 40.6 | 58.9 | 5.0 | 0 | 5.0 | 0 | 0 | 0 | 0 | 0 | 0 | 0 | 0.5 | 0 | 0 | 0 | 0 | 0 | 0 |
| Example 92 | 40.6 | 58.9 | 5.0 | 5.0 | 0 | 0 | 0 | 0 | 0 | 0 | 0 | 0 | 0.5 | 0 | 0 | 0 | 0 | 0 | 0 |
| Example 93 | 40.6 | 58.9 | 5.0 | 0 | 0 | 0 | 0 | 0 | 5.0 | 0 | 0 | 0 | 0.5 | 0 | 0 | 0 | 0 | 0 | 0 |
| Example 94 | 40.6 | 58.9 | 5.0 | 0 | 0 | 0 | 0 | 0 | 0 | 0 | 5.0 | 0 | 0.5 | 0 | 0 | 0 | 0 | 0 | 0 |
| Example 95 | 40.6 | 58.9 | 5.0 | 0 | 0 | 0 | 0 | 0 | 0 | 5.0 | 0 | 0 | 0.5 | 0 | 0 | 0 | 0 | 0 | 0 |
| Example 96 | 40.6 | 58.9 | 5.0 | 0 | 0 | 0 | 0 | 5.0 | 0 | 0 | 0 | 0 | 0.5 | 0 | 0 | 0 | 0 | 0 | 0 |
| Example 97 | 40.6 | 57.4 | 7.5 | 0 | 0 | 0 | 0 | 0 | 0 | 0 | 0 | 0.83 | 0 | 2 | 0 | 0 | 0 | 0 | 0 |

[Table 6-2]

| | | Preventive Value Indices | | | | | | | | | |
|---|---|---|---|---|---|---|---|---|---|---|---|
| No. | D-Tagatose Treatment Concentration (ppm) | CPM | VDM | TGM | VPM | LB | AS | SbR | CPM RF | VDM RF | VPM RF |
| Example 65 | 4000 | nt | nt | nt | nt | nt | nt | nt | nt | nt | nt |
| Example 66 | 4000 | nt | nt | nt | nt | nt | nt | nt | nt | nt | nt |
| Example 67 | 4000 | 2 | 1 | nt | nt | nt | nt | nt | 1 | 1 | nt |
| Example 68 | 4000 | 2 | 2 | nt | nt | nt | nt | nt | 0 | 1 | nt |
| Example 69 | 4000 | nt | nt | nt | nt | nt | nt | nt | nt | nt | nt |
| Example 70 | 4000 | nt | nt | nt | nt | nt | nt | nt | nt | nt | nt |
| Example 71 | 4000 | 2 | 2 | nt | nt | nt | nt | nt | 1 | 1 | nt |
| Example 72 | 4000 | 2 | 1 | nt | nt | nt | nt | nt | 1 | 1 | nt |
| Example 73 | 4000 | nt | nt | nt | nt | nt | nt | nt | nt | nt | nt |
| Example 74 | 4000 | 2 | 0 | nt | nt | nt | nt | nt | nt | nt | nt |
| Example 75 | 4000 | 2 | 2 | nt | nt | nt | nt | nt | 1 | 1 | nt |
| Example 76 | 4000 | 1 | 1 | nt | nt | nt | nt | nt | 0 | 0 | nt |
| Example 77 | 4000 | 2 | 0 | nt | nt | nt | nt | nt | 0 | 0 | nt |
| Example 78 | 4000 | 2 | 2 | 0 | 2 | nt | nt | nt | nt | nt | nt |
| Example 79 | 4000 | 2 | 1 | 0 | 2 | nt | nt | nt | 1 | 1 | nt |
| Example 80 | 4000 | 1 | 0 | 0 | 2 | nt | nt | nt | 1 | 1 | nt |
| Example 81 | 4000 | 1 | 1 | 0 | 2 | nt | nt | nt | 1 | 1 | nt |
| Example 82 | 4000 | 1 | 0 | nt | nt | nt | nt | nt | 1 | 1 | nt |
| Example 83 | 4000 | 1 | 1 | nt | nt | nt | nt | nt | 1 | 1 | nt |
| Example 84 | 4000 | nt | nt | nt | nt | nt | nt | nt | nt | nt | nt |

(continued)

| Continuation of Table 6 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 85 | 4000 | nt | nt | nt | nt | nt | nt | nt | nt | nt | nt |
| Example 86 | 4000 | nt | 0 | nt | nt | nt | nt | nt | nt | nt | nt |
| Example 87 | 4000 | nt | 0 | nt | nt | nt | nt | nt | nt | nt | nt |
| Example 88 | 4000 | nt | 0 | nt | nt | nt | nt | nt | nt | nt | nt |
| Example 89 | 4000 | nt | 2 | nt | nt | nt | nt | nt | nt | nt | nt |
| Example 90 | 4000 | nt | 2 | nt | nt | nt | nt | nt | nt | nt | nt |
| Example 91 | 4000 | nt | 2 | nt | nt | nt | nt | nt | nt | nt | nt |
| Example 92 | 4000 | nt | 0 | nt | nt | nt | nt | nt | nt | nt | nt |
| Example 93 | 4000 | nt | 0 | nt | nt | nt | nt | nt | nt | nt | nt |
| Example 94 | 4000 | nt | 0 | nt | nt | nt | nt | nt | nt | nt | nt |
| Example 95 | 4000 | nt | 0 | nt | nt | nt | nt | nt | nt | nt | nt |
| Example 96 | 4000 | nt | 0 | nt | nt | nt | nt | nt | nt | nt | nt |
| Example 97 | 4000 | 2 | 1 | nt | nt | nt | nt | nt | nt | nt | nt |

[Table 6-3]

| No. | D-Tag-atose Con-tent (parts) | Oil Con-tent in Composi-tion (parts) Oil E | Content in composition (parts) | | | | | | | | | | | | | | | | |
|---|---|---|---|---|---|---|---|---|---|---|---|---|---|---|---|---|---|---|---|
| | | | Assist-ant 7 | Assist-ant 13 | Assist-ant 18 | Assist-ant 20 | Assist-ant 22 | Assist-ant 26 | Assist-ant 38 | Assist-ant 40 | Assist-ant 41 | Assist-ant 42 | Assist-ant 44 | Assist-ant 49 | Assist-ant 50 | Assist-ant 51 | Assist-ant 52 | Assist-ant 53 | Assist-ant 54 |
| Example 98 | 40.6 | 54.4 | 7.5 | 0 | 0 | 0 | 0 | 0 | 0 | 0 | 0 | 0.83 | 0 | 0 | 5 | 0 | 0 | 0 | 0 |
| Example 99 | 40.6 | 49.4 | 7.5 | 0 | 0 | 0 | 0 | 0 | 0 | 0 | 0 | 0.83 | 0 | 0 | 0 | 10 | 0 | 0 | 0 |
| Example 100 | 40.6 | 59.4 | 5.0 | 0 | 4.0 | 0 | 1.0 | 0 | 0 | 0 | 0 | 0.83 | 0 | 0 | 0 | 0 | 0 | 0 | 0 |
| Example 101 | 40.6 | 59.4 | 5.0 | 0 | 3.0 | 0 | 2.0 | 0 | 0 | 0 | 0 | 0.83 | 0 | 0 | 0 | 0 | 0 | 0 | 0 |
| Example 102 | 40.6 | 59.4 | 5.0 | 0 | 2.0 | 0 | 3.0 | 0 | 0 | 0 | 0 | 0.83 | 0 | 0 | 0 | 0 | 0 | 0 | 0 |
| Example 103 | 40.6 | 59.4 | 5.0 | 0 | 1.0 | 0 | 4.0 | 0 | 0 | 0 | 0 | 0.83 | 0 | 0 | 0 | 0 | 0 | 0 | 0 |
| Example 104 | 40.6 | 59.4 | 5.0 | 0 | 8.0 | 0 | 2.0 | 0 | 0 | 0 | 0 | 0.83 | 0 | 0 | 0 | 0 | 0 | 0 | 0 |
| Example 105 | 40.6 | 59.4 | 5.0 | 0 | 6.0 | 0 | 4.0 | 0 | 0 | 0 | 0 | 0.83 | 0 | 0 | 0 | 0 | 0 | 0 | 0 |
| Example 106 | 40.6 | 59.4 | 5.0 | 0 | 4.0 | 0 | 6.0 | 0 | 0 | 0 | 0 | 0.83 | 0 | 0 | 0 | 0 | 0 | 0 | 0 |
| Example 107 | 40.6 | 59.4 | 5.0 | 0 | 2.0 | 0 | 8.0 | 0 | 0 | 0 | 0 | 0.83 | 0 | 0 | 0 | 0 | 0 | 0 | 0 |
| Example 108 | 40.6 | 59.4 | 5.0 | 2.0 | 3.0 | 0 | 0 | 0 | 0 | 0 | 0 | 0.83 | 0 | 0 | 0 | 0 | 0 | 0 | 0 |

Continuation of Table 6

(continued)

| Continuation of Table 6 | | | | | | | | | | | | | | | | | | | | |
|---|---|---|---|---|---|---|---|---|---|---|---|---|---|---|---|---|---|---|---|---|
| No. | D-Tag-atose Con-tent (parts) | Oil Con-tent in Composi-tion (parts) | Content in composition (parts) | | | | | | | | | | | | | | | | | |
| | | Oil E | Assist-ant 7 | Assist-ant 13 | Assist-ant 18 | Assist-ant 20 | Assist-ant 22 | Assist-ant 26 | Assist-ant 38 | Assist-ant 40 | Assist-ant 41 | Assist-ant 42 | Assist-ant 44 | Assist-ant 49 | Assist-ant 50 | Assist-ant 51 | Assist-ant 52 | Assist-ant 53 | Assist-ant 54 |
| Example 109 | 40.6 | 59.4 | 5.0 | 0 | 3.0 | 0 | 0 | 0 | 2.0 | 0 | 0 | 0.83 | 0 | 0 | 0 | 0 | 0 | 0 | 0 |
| Example 110 | 40.6 | 59.4 | 5.0 | 0 | 5.0 | 0 | 0 | 0 | 2.0 | 0 | 0 | 0.83 | 0 | 0 | 0 | 0 | 0 | 0 | 0 |
| Example 111 | 40.6 | 59.4 | 5.0 | 0 | 3.0 | 0 | 0 | 0 | 0 | 0 | 2.0 | 0.83 | 0 | 0 | 0 | 0 | 0 | 0 | 0 |
| Example 112 | 40.6 | 59.4 | 5.0 | 2.0 | 0 | 0 | 3.0 | 0 | 0 | 0 | 0 | 0.83 | 0 | 0 | 0 | 0 | 0 | 0 | 0 |
| Example 113 | 40.6 | 59.4 | 5.0 | 0 | 0 | 0 | 3.0 | 0 | 2.0 | 0 | 0 | 0.83 | 0 | 0 | 0 | 0 | 0 | 0 | 0 |
| Example 114 | 40.6 | 59.4 | 5.0 | 0 | 0 | 0 | 3.0 | 0 | 0 | 0 | 2.0 | 0.83 | 0 | 0 | 0 | 0 | 0 | 0 | 0 |
| Example 115 | 40.6 | 59.4 | 5.0 | 0 | 0 | 0 | 3.0 | 0 | 0 | 2.0 | 0 | 0.83 | 0 | 0 | 0 | 0 | 0 | 0 | 0 |
| Example 116 | 40.6 | 59.4 | 5.0 | 0 | 0 | 0 | 3.0 | 2.0 | 0 | 0 | 0 | 0.83 | 0 | 0 | 0 | 0 | 0 | 0 | 0 |
| Example 117 | 40.6 | 59.4 | 5.0 | 2.0 | 3.0 | 0 | 2.0 | 0 | 0 | 0 | 0 | 0.83 | 0 | 0 | 0 | 0 | 0 | 0 | 0 |
| Example 118 | 40.6 | 59.4 | 5.0 | 0 | 3.0 | 0 | 2.0 | 0 | 2.0 | 0 | 0 | 0.83 | 0 | 0 | 0 | 0 | 0 | 0 | 0 |
| Example 119 | 40.6 | 59.4 | 5.0 | 0 | 3.0 | 0 | 2.0 | 0 | 0 | 0 | 2.0 | 0.83 | 0 | 0 | 0 | 0 | 0 | 0 | 0 |

(continued)

| Continuation of Table 6 | | | | | | | | | | | | | | | | | | | |
|---|---|---|---|---|---|---|---|---|---|---|---|---|---|---|---|---|---|---|---|
| No. | D-Tagatose Content (parts) | Oil Content in Composition (parts) | Content in composition (parts) | | | | | | | | | | | | | | | | |
| | | Oil E | Assistant 7 | Assistant 13 | Assistant 18 | Assistant 20 | Assistant 22 | Assistant 26 | Assistant 38 | Assistant 40 | Assistant 41 | Assistant 42 | Assistant 44 | Assistant 49 | Assistant 50 | Assistant 51 | Assistant 52 | Assistant 53 | Assistant 54 |
| Example 120 | 40.6 | 59.4 | 5.0 | 0 | 3.0 | 0 | 2.0 | 0 | 0 | 2.0 | 0 | 0.83 | 0 | 0 | 0 | 0 | 0 | 0 | 0 |
| Example 121 | 40.6 | 59.4 | 5.0 | 0 | 3.0 | 0 | 2.0 | 2.0 | 0 | 0 | 0 | 0.83 | 0 | 0 | 0 | 0 | 0 | 0 | 0 |
| Example 122 | 40.6 | 59.4 | 5.0 | 2.0 | 3.0 | 0 | 0 | 0 | 0 | 0 | 2.0 | 0.83 | 0 | 0 | 0 | 0 | 0 | 0 | 0 |
| Example 123 | 40.6 | 59.4 | 5.0 | 0 | 3.0 | 0 | 0 | 0 | 2.0 | 0 | 2.0 | 0.83 | 0 | 0 | 0 | 0 | 0 | 0 | 0 |
| Example 124 | 40.6 | 59.4 | 5.0 | 0 | 3.0 | 0 | 0 | 0 | 0 | 2.0 | 2.0 | 0.83 | 0 | 0 | 0 | 0 | 0 | 0 | 0 |
| Example 125 | 40.6 | 59.4 | 5.0 | 0 | 3.0 | 0 | 0 | 2.0 | 0 | 0 | 2.0 | 0.83 | 0 | 0 | 0 | 0 | 0 | 0 | 0 |
| Example 126 | 40.36 | 59.64 | 5.0 | 0 | 3.0 | 0 | 2.0 | 0 | 0 | 0 | 0 | 0.83 | 0 | 0 | 0 | 0 | 1 | 0 | 0 |
| Example 127 | 40.36 | 59.64 | 5.0 | 0 | 3.0 | 0 | 2.0 | 0 | 0 | 0 | 0 | 0.83 | 0 | 0 | 0 | 0 | 5 | 0 | 0 |
| Example 128 | 40.36 | 59.64 | 5.0 | 0 | 3.0 | 0 | 2.0 | 0 | 0 | 0 | 0 | 0.83 | 0 | 0 | 0 | 0 | 0 | 1 | 0 |
| Example 129 | 40.36 | 59.64 | 5.0 | 0 | 3.0 | 0 | 2.0 | 0 | 0 | 0 | 0 | 0.83 | 0 | 0 | 0 | 0 | 0 | 5 | 0 |
| Example 130 | 40.36 | 59.64 | 5.0 | 0 | 3.0 | 0 | 2.0 | 0 | 0 | 0 | 0 | 0.83 | 0 | 0 | 0 | 0 | 0 | 0 | 1 |

[Table 6-4]

| | No. | D-Tagatose Treatment Concentration (ppm) | Preventive Value Indices | | | | | | | | | |
|---|---|---|---|---|---|---|---|---|---|---|---|---|
| | | | CPM | VDM | TGM | VPM | LB | AS | SbR | CPM RF | VDM RF | VPM RF |
| | Example 98 | 4000 | 2 | 0 | nt | nt | nt | nt | nt | nt | nt | nt |
| | Example 99 | 4000 | 2 | 1 | nt | nt | nt | nt | nt | nt | nt | nt |
| | Example 100 | 4000 | 2 | 1 | 2 | 2 | 1 | nt | nt | 1 | 1 | 1 |
| | Example 101 | 4000 | 2 | 2 | 2 | 2 | 1 | nt | nt | 1 | 1 | 1 |
| | Example 102 | 4000 | 2 | 2 | 2 | 2 | 1 | nt | nt | 1 | 1 | 1 |
| | Example 103 | 4000 | 2 | 2 | 2 | 2 | 1 | nt | nt | 1 | 1 | 1 |
| | Example 104 | 4000 | 2 | 2 | 2 | 2 | 1 | nt | nt | 1 | 1 | 1 |
| | Example 105 | 4000 | 2 | 2 | 2 | 2 | 1 | nt | nt | 1 | 1 | 1 |
| | Example 106 | 4000 | 2 | 2 | 2 | 2 | 1 | nt | nt | 1 | 1 | 1 |
| | Example 107 | 4000 | 2 | 2 | 2 | 2 | 1 | nt | nt | 1 | 1 | 1 |
| | Example 108 | 4000 | 2 | 2 | nt | nt | nt | nt | nt | nt | nt | nt |
| | Example 109 | 4000 | 2 | 2 | nt | nt | nt | nt | nt | 1 | 1 | nt |
| | Example 110 | 4000 | 2 | 2 | nt | nt | nt | nt | nt | 1 | 1 | nt |
| | Example 111 | 4000 | 2 | 0 | nt | nt | nt | nt | nt | nt | nt | nt |
| | Example 112 | 4000 | 2 | 2 | nt | nt | Dt | nt | nt | nt | nt | nt |
| | Example 113 | 4000 | 1 | 2 | nt | nt | nt | nt | nt | nt | nt | nt |
| | Example 114 | 4000 | 1 | 1 | nt | nt | nt | nt | nt | nt | nt | nt |
| | Example 115 | 4000 | 2 | 2 | nt | nt | nt | nt | nt | nt | nt | nt |
| | Example 116 | 4000 | 2 | 2 | Bt | nt | nt | nt | nt | nt | nt | nt |
| | Example 117 | 4000 | 2 | 2 | nt | nt | nt | nt | nt | nt | nt | nt |

Continuation of Table 6

(continued)

| Continuation of Table 6 | | | | | | | | | | | | |
|---|---|---|---|---|---|---|---|---|---|---|---|---|
| No. | D-Tagatose Treatment Concentration (ppm) | Preventive Value Indices | | | | | | | | | | |
| | | CPM | VDM | TGM | VPM | LB | AS | SbR | CPM RF | VDM RF | VPM RF |
| Example 118 | 4000 | 2 | 2 | nt | nt | nt | nt | nt | 1 | 1 | nt |
| Example 119 | 4000 | 2 | 2 | nt | nt | nt | nt | nt | 1 | 1 | nt |
| Example 120 | 4000 | 2 | 2 | nt | nt | nt | nt | nt | nt | nt | nt |
| Example 121 | 4000 | 2 | 0 | nt | nt | nt | nt | nt | nt | nt | nt |
| Example 122 | 4000 | nt | 2 | nt | nt | nt | nt | nt | nt | nt | nt |
| Example 123 | 4000 | 2 | 2 | nt | nt | nt | nt | nt | nt | nt | nt |
| Example 124 | 4000 | 2 | 2 | nt | nt | nt | nt | nt | nt | nt | nt |
| Example 125 | 4000 | 2 | 1 | nt | nt | nt | nt | nt | nt | nt | **nt** |
| Example 126 | 4000 | 2 | 2 | 1 | 2 | 1 | nt | nt | 1 | 1 | nt |
| Example 127 | 4000 | 2 | 2 | 0 | 2 | 0 | nt | nt | 1 | 1 | nt |
| Example 128 | 4000 | 2 | 2 | 0 | 2 | 0 | nt | nt | 1 | 1 | nt |
| Example 129 | 4000 | 2 | 2 | 0 | 2 | 0 | nt | nt | 1 | 1 | nt |
| Example 130 | 4000 | 2 | 2 | 0 | 2 | 0 | nt | nt | 1 | 1 | nt |

[Table 6-5]

Continuation of Table 6

| No. | D-Tagatose Content (parts) | Oil Content in Composition (parts) Oil E | Assistant 7 | Assistant 13 | Assistant 18 | Assistant 20 | Assistant 22 | Assistant 26 | Assistant 38 | Assistant 40 | Assistant 41 | Assistant 42 | Assistant 44 | Assistant 49 | Assistant 50 | Assistant 51 | Assistant 52 | Assistant 53 | Assistant 54 |
|---|---|---|---|---|---|---|---|---|---|---|---|---|---|---|---|---|---|---|---|
| Example 131 | 40.36 | 59.64 | 5.0 | 0 | 3.0 | 0 | 2.0 | 0 | 0 | 0 | 0 | 0.83 | 0 | 0 | 0 | 0 | 0 | 0 | 5 |
| Example 132 | 40.6 | 58.4 | 5.0 | 0 | 3.0 | 0 | 2.0 | 0 | 1 | 0 | 2.0 | 0.83 | 0 | 0 | 0 | 0 | 0 | 0 | 0 |
| Example 133 | 40.6 | 54.4 | 5.0 | 0 | 0 | 5 | 0 | 0 | 0 | 0 | 0 | 0.83 | 0 | 0 | 0 | 0 | 0 | 0 | 0 |
| Example 134 | 40.6 | 54.4 | 5.0 | 0 | 3 | 2 | 0 | 0 | 0 | 0 | 0 | 0.83 | 0 | 0 | 0 | 0 | 0 | 0 | 0 |
| Example 135 | 40.6 | 59.4 | 0 | 0 | 0 | 5.0 | 0 | 0 | 0 | 0 | 0 | 0.83 | 0 | 0 | 0 | 0 | 0 | 0 | 0 |
| Example 136 | 40.6 | 59.4 | 0 | 0 | 0 | 5.0 | 2.0 | 0 | 0 | 0 | 0 | 0.83 | 0 | 0 | 0 | 0 | 0 | 0 | 0 |
| Example 137 | 40.6 | 59.4 | 0 | 0 | 0 | 5.0 | 5.0 | 0 | 0 | 0 | 0 | 0.83 | 0 | 0 | 0 | 0 | 0 | 0 | 0 |
| Example 138 | 40.6 | 59.4 | 0 | 0 | 3.0 | 5.0 | 0 | 0 | 0 | 0 | 0 | 0.83 | 0 | 0 | 0 | 0 | 0 | 0 | 0 |
| Example 139 | 40.6 | 59.4 | 0 | 3.0 | 0 | 5.0 | 0 | 0 | 0 | 0 | 0 | 0.83 | 0 | 0 | 0 | 0 | 0 | 0 | 0 |
| Example 140 | 40.6 | 59.4 | 0 | 0 | 0 | 5.0 | 0 | 0 | 3.0 | 0 | 0 | 0.83 | 0 | 0 | 0 | 0 | 0 | 0 | 0 |
| Example 141 | 40.6 | 59.4 | 0 | 0 | 0 | 5.0 | 0 | 0 | 0 | 0 | 3.0 | 0.83 | 0 | 0 | 0 | 0 | 0 | 0 | 0 |

Continuation of Table 6

| No. | D-Tagatose Content (parts) | Oil Content in Composition (parts) | Content in composition (parts) | | | | | | | | | | | | | | | | | |
|---|---|---|---|---|---|---|---|---|---|---|---|---|---|---|---|---|---|---|---|---|
| | | Oil E | Assist-ant 7 | Assist-ant 13 | Assist-ant 18 | Assist-ant 20 | Assist-ant 22 | Assist-ant 26 | Assist-ant 38 | Assist-ant 40 | Assist-ant 41 | Assist-ant 42 | Assist-ant 44 | Assist-ant 49 | Assist-ant 50 | Assist-ant 51 | Assist-ant 52 | Assist-ant 53 | Assist-ant 54 |
| Example 142 | 40.6 | 59.4 | 0 | 0 | 0 | 5.0 | 0 | 0 | 0 | 3.0 | 0 | 0.83 | 0 | 0 | 0 | 0 | 0 | 0 | 0 |
| Example 143 | 40.6 | 59.4 | 0 | 0 | 0 | 5.0 | 0 | 3.0 | 0 | 0 | 0 | 0.83 | 0 | 0 | 0 | 0 | 0 | 0 | 0 |
| Example 144 | 40.6 | 58.9 | 0 | 0 | 0 | 5.0 | 3.0 | 0 | 0 | 0 | 0 | 0 | 0.5 | 0 | 0 | 0 | 0 | 0 | 0 |
| Example 145 | 40.6 | 58.9 | 0 | 0 | 3.0 | 5.0 | 0 | 0 | 0 | 0 | 0 | 0 | 0.5 | 0 | 0 | 0 | 0 | 0 | 0 |
| Example 146 | 40.6 | 58.9 | 0 | 0 | 5.0 | 5.0 | 0 | 0 | 0 | 0 | 0 | 0 | 0.5 | 0 | 0 | 0 | 0 | 0 | 0 |
| Example 147 | 40.6 | 58.9 | 0 | 3.0 | 0 | 5.0 | 0 | 0 | 0 | 0 | 0 | 0 | 0.5 | 0 | 0 | 0 | 0 | 0 | 0 |
| Example 148 | 40.6 | 58.9 | 0 | 0 | 0 | 5.0 | 0 | 0 | 3.0 | 0 | 0 | 0 | 0.5 | 0 | 0 | 0 | 0 | 0 | 0 |
| Example 149 | 40.6 | 58.9 | 0 | 0 | 0 | 5.0 | 0 | 0 | 0 | 0 | 3.0 | 0 | 0.5 | 0 | 0 | 0 | 0 | 0 | 0 |
| Example 150 | 40.6 | 58.9 | 0 | 0 | 0 | 5.0 | 0 | 0 | 0 | 3.0 | 0 | 0 | 0.5 | 0 | 0 | 0 | 0 | 0 | 0 |
| Example 151 | 40.6 | 58.9 | 0 | 0 | 0 | 5.0 | 0 | 3.0 | 0 | 0 | 0 | 0 | 0.5 | 0 | 0 | 0 | 0 | 0 | 0 |
| Example 152 | 40.6 | 59.4 | 0 | 0 | 3.0 | 5.0 | 2.0 | 0 | 0 | 0 | 0 | 0.83 | 0 | 0 | 0 | 0 | 0 | 0 | 0 |

EP 4 349 169 A1

| | | Oil Content in Composition (parts) | Content in composition (parts) | | | | | | | | | | | | | | | | |
| No. | D-Tagatose Content (parts) | | | | | | | | | | | | | | | | | | |
| | | Oil E | Assistant 7 | Assistant 13 | Assistant 18 | Assistant 20 | Assistant 22 | Assistant 26 | Assistant 38 | Assistant 40 | Assistant 41 | Assistant 42 | Assistant 44 | Assistant 49 | Assistant 50 | Assistant 51 | Assistant 52 | Assistant 53 | Assistant 54 |
|---|---|---|---|---|---|---|---|---|---|---|---|---|---|---|---|---|---|---|---|
| Example 153 | 40.6 | 59.4 | 0 | 2.0 | 3.0 | 5.0 | 0 | 0 | 0 | 0 | 0 | 0.83 | 0 | 0 | 0 | 0 | 0 | 0 | 0 |
| Example 154 | 40.6 | 59.4 | 0 | 0 | 3.0 | 5.0 | 0 | 0 | 2.0 | 0 | 0 | 0.83 | 0 | 0 | 0 | 0 | 0 | 0 | 0 |
| Example 155 | 40.6 | 59.4 | 0 | 0 | 3.0 | 5.0 | 0 | 0 | 0 | 0 | 2.0 | 0.83 | 0 | 0 | 0 | 0 | 0 | 0 | 0 |
| Example 156 | 40.6 | 59.4 | 0 | 0 | 3.0 | 5.0 | 0 | 0 | 0 | 2.0 | 0 | 0.83 | 0 | 0 | 0 | 0 | 0 | 0 | 0 |
| Example 157 | 40.6 | 59.4 | 0 | 0 | 3.0 | 5.0 | 0 | 2.0 | 0 | 0 | 0 | 0.83 | 0 | 0 | 0 | 0 | 0 | 0 | 0 |
| Example 158 | 40.6 | 59.4 | 0 | 2.0 | 0 | 5.0 | 3.0 | 0 | 0 | 0 | 0 | 0.83 | 0 | 0 | 0 | 0 | 0 | 0 | 0 |
| Example 159 | 40.6 | 59.4 | 0 | 0 | 0 | 5.0 | 3.0 | 0 | 2.0 | 0 | 0 | 0.83 | 0 | 0 | 0 | 0 | 0 | 0 | 0 |
| Example 160 | 40.6 | 59.4 | 0 | 0 | 0 | 5.0 | 3.0 | 0 | 0 | 0 | 2.0 | 0.83 | 0 | 0 | 0 | 0 | 0 | 0 | 0 |
| Example 161 | 40.6 | 59.4 | 0 | 0 | 0 | 5.0 | 3.0 | 0 | 0 | 2.0 | 0 | 0.83 | 0 | 0 | 0 | 0 | 0 | 0 | 0 |
| Example 162 | 40.6 | 59.4 | 0 | 0 | 0 | 5.0 | 3.0 | 2.0 | 0 | 0 | 0 | 0.83 | 0 | 0 | 0 | 0 | 0 | 0 | 0 |

Continuation of Table 6

51

[Table 6-6]

| No. | D-Tagatose Treatment Concentration (ppm) | Preventive Indices | | | | | | | | | |
|---|---|---|---|---|---|---|---|---|---|---|---|
| | | CPM | VDM | TGM | VPM | LB | AS | SbR | CPM RF | VDM RF | VPMRF |
| Example 131 | 4000 | 2 | 2 | 0 | 2 | 0 | nt | nt | 1 | 1 | nt |
| Example 132 | 4000 | 2 | 2 | 2 | 2 | nt | nt | nt | 1 | 1 | nt |
| Example 133 | 4000 | 2 | 2 | 1 | 1 | 1 | nt | nt | 1 | 1 | nt |
| Example 134 | 4000 | 2 | 2 | 1 | 1 | 1 | nt | nt | 1 | 1 | nt |
| Example 135 | 4000 | 1 | 1 | nt | nt | nt | nt | nt | 1 | 1 | nt |
| Example 136 | 4000 | 2 | 1 | nt | nt | nt | nt | nt | 1 | 1 | nt |
| Example 137 | 4000 | 2 | 0 | nt | nt | nt | nt | nt | 1 | 1 | nt |
| Example 138 | 4000 | 2 | 2 | nt | nt | nt | nt | nt | 1 | 1 | nt |
| Example 139 | 4000 | 2 | 2 | nt | nt | nt | nt | nt | nt | nt | nt |
| Example 140 | 4000 | nt | 0 | nt | nt | nt | nt | nt | nt | nt | nt |
| Example 141 | 4000 | nt | 2 | nt | nt | nt | nt | nt | nt | nt | nt |
| Example 142 | 4000 | nt | 2 | nt | nt | nt | nt | nt | nt | nt | nt |
| Example 143 | 4000 | nt | 2 | nt | nt | nt | nt | nt | nt | nt | nt |
| Example 144 | 4000 | nt | 0 | nt | nt | nt | nt | nt | nt | nt | nt |
| Example 145 | 4000 | nt | 2 | nt | nt | nt | nt | nt | nt | nt | nt |
| Example 146 | 4000 | 2 | 2 | nt | nt | nt | nt | nt | 1 | 1 | nt |
| Example 147 | 4000 | 0 | 1 | nt | nt | nt | nt | nt | nt | nt | nt |
| Example 148 | 4000 | nt | 2 | nt | nt | nt | nt | nt | nt | nt | nt |
| Example 149 | 4000 | nt | 2 | nt | nt | nt | nt | nt | nt | nt | nt |
| Example 150 | 4000 | nt | 2 | nt | nt | nt | nt | nt | nt | nt | nt |

(continued)

| Continuation of Table 6 | | | | | | | | | | | |
|---|---|---|---|---|---|---|---|---|---|---|---|
| No. | D-Tagatose Treatment Concentration (ppm) | Preventive Indices | | | | | | | | | |
| | | CPM | VDM | TGM | VPM | LB | AS | SbR | CPM RF | VDM RF | VPMRF |
| Example 151 | 4000 | nt | 2 | nt | nt | nt | nt | nt | nt | nt | nt |
| Example 152 | 4000 | 2 | 2 | nt | nt | nt | nt | nt | 1 | 1 | nt |
| Example 153 | 4000 | nt | 0 | nt | nt | nt | nt | nt | nt | nt | nt |
| Example 154 | 4000 | nt | 0 | nt | nt | nt | nt | nt | nt | nt | nt |
| Example 155 | 4000 | nt | 0 | nt | nt | nt | nt | nt | nt | nt | nt |
| Example 156 | 4000 | nt | 0 | nt | nt | nt | nt | nt | nt | nt | nt |
| Example 157 | 4000 | nt | 2 | nt | nt | nt | nt | nt | nt | nt | nt |
| Example 158 | 4000 | nt | 1 | nt | nt | nt | nt | nt | nt | nt | nt |
| Example 159 | 4000 | nt | 0 | nt | nt | nt | nt | nt | nt | nt | nt |
| Example 160 | 4000 | nt | 0 | nt | nt | nt | nt | nt | nt | nt | nt |
| Example 161 | 4000 | nt | 0 | nt | nt | nt | nt | nt | nt | nt | nt |
| Example 162 | 4000 | nt | 0 | nt | nt | nt | nt | nt | nt | nt | nt |

The plant disease control agents comprising D-tagatose, soybean oil and the various surfactants showed significantly improved efficacy and rainfastness compared to D-tagatose wettable powders formulation against cucmber powdery mildew, vine downy mildew, tomato gray mold, vine powdery mildew, tomato late blight, apple scab and soybean rust.

[Test Example 5] Evaluation of a plant disease control agent comprising D-tagatose, liquid paraffin and a surfactant (nonionic surfactants and anionic surfactants)

The efficacy and rainfastness of plant disease control agents comprising D-tagatose, liquid paraffin and a surfactant (nonionic surfactants and anionic surfactants) prepared in the Examples were evaluated against diseases such as cucmber powdery mildew. They were evaluated using the indices the degree of improvemnet in the preventive value and the degree of improvement in rainfastness, as with Test Example 1. The results are shown in Table 7.

[Table 7-1]

| Table 7: Composition, Efficacy and Rainfastness of Plant Disease Control Agent | | | | | | | | | | |
|---|---|---|---|---|---|---|---|---|---|---|
| comprising D-Tagatose, Liquid Parafin and Surfactant (Nonionic Surfactant, Anionic Surfactant) | | | | | | | | | | |
| No. | D-TagatoseContent (parts) | Oil Content in Composition (parts) | Content in composition (parts) | | | | | | | |
| | | Oil A | Assistant 1 | Assistant 7 | Assistant 8 | Assistant 9 | Assistant 13 | Assistant 18 | Assistant 22 | |
| Example 163 | 40 | 52.5 | 0 | 0 | 7.5 | 0 | 0 | 0 | 0 |
| Example 164 | 40 | 52.5 | 0 | 0 | 0 | 7.5 | 0 | 0 | 0 |
| Example 165 | 40.6 | 51.98 | 7.42 | 0 | 0 | 0 | 0 | 0 | 0 |
| Example 166 | 40.6 | 51.86 | 0 | 7.41 | 0 | 0 | 0 | 0 | 0 |
| Example 167 | 40.6 | 59.4 | 0 | 0 | 10 | 0 | 0 | 0 | 0 |
| Example 168 | 40.6 | 49.4 | 0 | 0 | 0 | 10 | 0 | 0 | 0 |
| Example 169 | 40.6 | 59.4 | 0 | 0 | 7.5 | 0 | 0 | 0 | 0 |
| Example 170 | 40.6 | 59.4 | 0 | 0 | 5.0 | 0 | 0 | 0 | 0 |
| Example 171 | 40.6 | 59.4 | 0 | 0 | 2.5 | 0 | 0 | 0 | 0 |
| Example 172 | 40.6 | 59.4 | 0 | 0 | 10 | 0 | 0 | 0 | 0 |
| Example 173 | 40.6 | 49.4 | 0 | 0 | 0 | 10 | 0 | 0 | 0 |
| Example 174 | 40.6 | 59.4 | 0 | 0 | 7.5 | 0 | 0 | 0 | 7.5 |
| Example 175 | 40.6 | 59.4 | 0 | 0 | 2.5 | 0 | 0 | 0 | 5.0 |
| Example 176 | 40.6 | 59.4 | 0 | 0 | 2.5 | 0 | 0 | 0 | 2.5 |
| Example 177 | 40.6 | 59.4 | 0 | 0 | 7.5 | 0 | 0 | 0 | 10.0 |
| Example 178 | 40.6 | 59.4 | 0 | 0 | 7.5 | 0 | 0 | 0 | 5.0 |
| Example 179 | 40.6 | 59.4 | 0 | 0 | 7.5 | 0 | 0 | 0 | 2.5 |

EP 4 349 169 A1

54

| No. | Content in composition (parts) | | | | | | | | |
|---|---|---|---|---|---|---|---|---|---|
| | Assistant 25 | Assistant 26 | Assistant 27 | Assistant 28 | Assistant 29 | Assistant 30 | Assistant 31 | Assistant 32 | Assistant 33 |
| Example 163 | 0 | 0 | 0 | 0 | 0 | 0 | 0 | 0 | 0 |
| Example 164 | 0 | 0 | 0 | 0 | 0 | 0 | 0 | 0 | 0 |
| Example 165 | 0 | 0 | 0 | 0 | 0 | 0 | 0 | 0 | 0 |
| Example 166 | 0 | 0 | 0 | 0 | 0 | 0 | 0 | 0 | 0 |
| Example 167 | 0 | 0 | 0 | 0 | 0 | 0 | 0 | 0 | 0 |
| Example 168 | 0 | 0 | 0 | 0 | 0 | 0 | 0 | 0 | 0 |
| Example 169 | 0 | 0 | 0 | 0 | 0 | 0 | 0 | 0 | 0 |
| Example 170 | 0 | 0 | 0 | 0 | 0 | 0 | 0 | 0 | 0 |
| Example 171 | 0 | 0 | 0 | 0 | 0 | 0 | 0 | 0 | 0 |
| Example 172 | 0 | 0 | 0 | 0 | 0 | 0 | 0 | 0 | 0 |
| Example 173 | 0 | 0 | 0 | 0 | 0 | 0 | 0 | 0 | 0 |
| Example 174 | 0 | 0 | 0 | 0 | 0 | 0 | 0 | 0 | 0 |
| Example 175 | 0 | 0 | 0 | 0 | 0 | 0 | 0 | 0 | 0 |
| Example 176 | 0 | 0 | 0 | 0 | 0 | 0 | 0 | 0 | 0 |
| Example 177 | 0 | 0 | 0 | 0 | 0 | 0 | 0 | 0 | 0 |
| Example 178 | 0 | 0 | 0 | 0 | 0 | 0 | 0 | 0 | 0 |
| Example 179 | 0 | 0 | 0 | 0 | 0 | 0 | 0 | 0 | 0 |

| No. | Content in composition (parts) | | | | | | | | |
|---|---|---|---|---|---|---|---|---|---|
| | Assistant 34 | Assistant 35 | Assistant 36 | Assistant 38 | Assistant 39 | Assistant 40 | Assistant 41 | Assistant 42 | Assistant 44 |
| Example 163 | 0 | 0 | 0 | 0 | 0 | 0 | 0 | 0 | 0 |
| Example 164 | 0 | 0 | 0 | 0 | 0 | 0 | 0 | 0 | 0 |
| Example 165 | 0 | 0 | 0 | 0 | 0 | 0 | 0 | 0 | 0 |
| Example 166 | 0 | 0 | 0 | 0 | 0 | 0 | 0 | 0 | 0.13 |
| Example 167 | 0 | 0 | 0 | 0 | 0 | 0 | 0 | 0 | 0.5 |
| Example 168 | 0 | 0 | 0 | 0 | 0 | 0 | 0 | 0 | 0.5 |
| Example 169 | 0 | 0 | 0 | 0 | 0 | 0 | 0 | 0 | 0.5 |
| Example 170 | 0 | 0 | 0 | 0 | 0 | 0 | 0 | 0 | 0.5 |
| Example 171 | 0 | 0 | 0 | 0 | 0 | 0 | 0 | 0 | 0.5 |
| Example 172 | 0 | 0 | 0 | 0 | 0 | 0 | 0 | 0.8 | 0 |
| Example 173 | 0 | 0 | 0 | 0 | 0 | 0 | 0 | 0.8 | 0 |
| Example 174 | 0 | 0 | 0 | 0 | 0 | 0 | 0 | 0 | 0.5 |
| Example 175 | 0 | 0 | 0 | 0 | 0 | 0 | 0 | 0 | 0.5 |
| Example 176 | 0 | 0 | 0 | 0 | 0 | 0 | 0 | 0 | 0.5 |
| Example 177 | 0 | 0 | 0 | 0 | 0 | 0 | 0 | 0 | 0.5 |
| Example 178 | 0 | 0 | 0 | 0 | 0 | 0 | 0 | 0 | 0.5 |
| Example 179 | 0 | 0 | 0 | 0 | 0 | 0 | 0 | 0 | 0.5 |

Continuation of Table 7

| No. | D-Tagatose Content (parts) | Oil Content in Composition (parts) | Content in composition (parts) | | | | | | |
|---|---|---|---|---|---|---|---|---|---|
| | | Oil A | Assistant 1 | Assistant 7 | Assistant 8 | Assistant 9 | Assistant 13 | Assistant 18 | Assistant 22 |
| Example 180 | 40.6 | 59.4 | 0 | 0 | 7.5 | 0 | 0 | 7.5 | 0 |
| Example 181 | 40.6 | 59.4 | 0 | 0 | 2.5 | 0 | 0 | 5.0 | 0 |
| Example 182 | 40.6 | 59.4 | 0 | 0 | 2.5 | 0 | 0 | 2.5 | 0 |
| Example 183 | 40.6 | 59.4 | 0 | 0 | 7.5 | 0 | 0 | 10.0 | 0 |
| Example 184 | 40.6 | 59.4 | 0 | 0 | 7.5 | 0 | 0 | 5.0 | 0 |
| Example 185 | 40.6 | 59.4 | 0 | 0 | 7.5 | 0 | 0 | 2.5 | 0 |
| Example 186 | 40.6 | 59.4 | 0 | 0 | 2.5 | 0 | 5.0 | 0 | 0 |
| Example 187 | 40.6 | 59.4 | 0 | 0 | 2.5 | 0 | 2.5 | 0 | 0 |
| Example 188 | 40.6 | 59.4 | 0 | 0 | 2.5 | 0 | 0 | 0 | 0 |
| Example 189 | 40.6 | 59.4 | 0 | 0 | 2.5 | 0 | 0 | 0 | 0 |
| Example 190 | 40.6 | 59.4 | 0 | 0 | 2.5 | 0 | 0 | 0 | 0 |
| Example 191 | 40.6 | 59.4 | 0 | 0 | 2.5 | 0 | 0 | 0 | 0 |
| Example 192 | 40.6 | 59.4 | 0 | 0 | 2.5 | 0 | 0 | 0 | 0 |
| Example 193 | 40.6 | 59.4 | 0 | 0 | 2.5 | 0 | 0 | 0 | 0 |
| Example 194 | 40.6 | 59.4 | 0 | 0 | 2.5 | 0 | 0 | 0 | 0 |
| Example 195 | 40 | 60 | 0 | 0 | 0 | 0 | 0 | 0 | 0 |
| Example 196 | 40 | 60 | 0 | 0 | 0 | 0 | 0 | 0 | 0 |
| Example 197 | 40.6 | 59.4 | 0 | 0 | 0 | 0 | 0 | 0 | 0 |

| No. | Content in composition (parts) | | | | | | | | |
|---|---|---|---|---|---|---|---|---|---|
| | Assistant 25 | Assistant 26 | Assistant 27 | Assistant 28 | Assistant 29 | Assistant 30 | Assistant 31 | Assistant 32 | Assistant 33 |
| Example 180 | 0 | 0 | 0 | 0 | 0 | 0 | 0 | 0 | 0 |
| Example 181 | 0 | 0 | 0 | 0 | 0 | 0 | 0 | 0 | 0 |
| Example 182 | 0 | 0 | 0 | 0 | 0 | 0 | 0 | 0 | 0 |
| Example 183 | 0 | 0 | 0 | 0 | 0 | 0 | 0 | 0 | 0 |
| Example 184 | 0 | 0 | 0 | 0 | 0 | 0 | 0 | 0 | 0 |
| Example 185 | 0 | 0 | 0 | 0 | 0 | 0 | 0 | 0 | 0 |
| Example 186 | 0 | 0 | 0 | 0 | 0 | 0 | 0 | 0 | 0 |
| Example 187 | 0 | 0 | 0 | 0 | 0 | 0 | 0 | 0 | 0 |
| Example 188 | 0 | 0 | 0 | 0 | 0 | 0 | 0 | 0 | 0 |
| Example 189 | 0 | 0 | 0 | 0 | 0 | 0 | 0 | 0 | 0 |
| Example 190 | 0 | 0 | 0 | 0 | 0 | 0 | 0 | 0 | 0 |
| Example 191 | 0 | 0 | 0 | 0 | 0 | 0 | 0 | 0 | 0 |
| Example 192 | 0 | 0 | 0 | 0 | 0 | 0 | 0 | 0 | 0 |
| Example 193 | 0 | 0 | 0 | 0 | 0 | 0 | 0 | 0 | 0 |
| Example 194 | 0 | 5.0 | 0 | 0 | 0 | 0 | 0 | 0 | 0 |
| Example 195 | 0 | 0 | 0 | 10 | 0 | 0 | 0 | 0 | 0 |
| Example 196 | 0 | 0 | 0 | 0 | 10 | 0 | 0 | 0 | 0 |
| Example 197 | 0 | 0 | 0 | 0 | 0 | 10 | 0 | 0 | 0 |

| No. | Content in composition (parts) | | | | | | | | |
|---|---|---|---|---|---|---|---|---|---|
| | Assistant 34 | Assistant 35 | Assistant 36 | Assistant 38 | Assistant 39 | Assistant 40 | Assistant 41 | Assistant 42 | Assistant 44 |
| Example 180 | 0 | 0 | 0 | 0 | 0 | 0 | 0 | 0 | 0.5 |
| Example 181 | 0 | 0 | 0 | 0 | 0 | 0 | 0 | 0 | 0.5 |
| Example 182 | 0 | 0 | 0 | 0 | 0 | 0 | 0 | 0 | 0.5 |
| Example 183 | 0 | 0 | 0 | 0 | 0 | 0 | 0 | 0 | 0.5 |
| Example 184 | 0 | 0 | 0 | 0 | 0 | 0 | 0 | 0 | 0.5 |
| Example 185 | 0 | 0 | 0 | 0 | 0 | 0 | 0 | 0 | 0.5 |
| Example 186 | 0 | 0 | 0 | 0 | 0 | 0 | 0 | 0 | 0.5 |
| Example 187 | 0 | 0 | 0 | 0 | 0 | 0 | 0 | 0 | 0.5 |
| Example 188 | 0 | 0 | 0 | 0 | 5.0 | 0 | 0 | 0 | 0.5 |
| Example 189 | 0 | 0 | 0 | 0 | 2.5 | 0 | 0 | 0 | 0.5 |
| Example 190 | 0 | 0 | 0 | 5.0 | 0 | 0 | 0 | 0 | 0.5 |
| Example 191 | 0 | 0 | 0 | 2.5 | 0 | 0 | 0 | 0 | 0.5 |
| Example 192 | 0 | 0 | 0 | 0 | 0 | 0 | 5.0 | 0 | 0.5 |
| Example 193 | 0 | 0 | 0 | 0 | 0 | 5.0 | 0 | 0 | 0.5 |
| Example 194 | 0 | 0 | 0 | 0 | 0 | 0 | 0 | 0 | 0.5 |
| Example 195 | 0 | 0 | 0 | 0 | 0 | 0 | 0 | 0 | 0.5 |
| Example 196 | 0 | 0 | 0 | 0 | 0 | 0 | 0 | 0 | 0.5 |
| Example 197 | 0 | 0 | 0 | 0 | 0 | 0 | 0 | 0 | 0.5 |

Continuation of Table 7

[Table 7-2]

| | | | Preventive Value Indices | | | | | | | | |
|---|---|---|---|---|---|---|---|---|---|---|---|
| No. | D-Tagatose Treatment Concentration (ppm) | CPM | VDM | TGM | VPM | LB | AS | SbR | CPM RF | VDM RF | VPM RF |
| Example 163 | 4000 | 1 | 1 | nt | nt | nt | nt | nt | 1 | 1 | 1 |
| Example 164 | 4000 | 2 | 2 | nt | nt | nt | nt | nt | 1 | 1 | 1 |
| Example 165 | 4000 | 2 | 0 | nt | nt | nt | nt | nt | 1 | 1 | nt |
| Example 166 | 4000 | 0 | 0 | nt | nt | nt | nt | nt | 1 | 1 | 1 |
| Example 167 | 4000 | 1 | 2 | nt | 2 | 2 | 2 | 2 | 1 | 1 | nt |
| Example 168 | 4000 | 1 | 2 | nt | 2 | 2 | 2 | 2 | 1 | 1 | nt |
| Example 169 | 4000 | 1 | 2 | nt | nt | 0 | 2 | 2 | 1 | 1 | nt |
| Example 170 | 4000 | 0 | 2 | nt | nt | 2 | 1 | 2 | 1 | 1 | nt |
| Example 171 | 4000 | 0 | 2 | nt | nt | 0 | 0 | 2 | 1 | 1 | nt |
| Example 172 | 4000 | 1 | 2 | nt | 2 | 2 | 2 | 2 | 1 | 1 | nt |
| Example 173 | 4000 | 1 | 2 | nt | 2 | 2 | 2 | 2 | 1 | 1 | nt |
| Example 174 | 4000 | 1 | 2 | nt | nt | 0 | 2 | 2 | 1 | 1 | nt |
| Example 175 | 4000 | 1 | 0 | nt | nt | nt | nt | 2 | 1 | 1 | nt |
| Example 176 | 4000 | 1 | 0 | nt | nt | nt | nt | 2 | 1 | 1 | nt |
| Example 177 | 4000 | 2 | 0 | nt | nt | 2 | 2 | nt | 1 | 1 | nt |
| Example 178 | 4000 | 1 | 2 | nt | nt | 2 | 2 | nt | 1 | 1 | nt |
| Example 179 | 4000 | 0 | 2 | nt | nt | 2 | 2 | nt | 1 | 1 | nt |

| Continuation of Table 7 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 180 | 4000 | 1 | 1 | nt | nt | 0 | 2 | nt | 1 | 1 | nt |
| Example 181 | 4000 | 2 | 1 | nt | nt | nt | nt | 2 | 1 | 1 | nt |
| Example 182 | 4000 | 2 | 1 | nt | nt | nt | nt | 2 | 1 | 1 | nt |
| Example 183 | 4000 | 2 | 2 | nt | nt | 0 | 2 | nt | 1 | 1 | nt |
| Example 184 | 4000 | 2 | 2 | nt | nt | 0 | 2 | nt | 1 | 1 | nt |
| Example 185 | 4000 | 1 | 2 | nt | nt | 1 | 0 | nt | 1 | 1 | nt |
| Example 186 | 4000 | 1 | 1 | nt | nt | nt | 2 | 2 | 1 | 1 | nt |
| Example 187 | 4000 | 1 | 2 | nt | nt | nt | 2 | 2 | 1 | 1 | nt |
| Example 188 | 4000 | 2 | 2 | nt | nt | nt | 2 | 2 | 1 | 1 | nt |
| Example 189 | 4000 | 2 | 2 | nt | nt | nt | 2 | 2 | 1 | 1 | nt |
| Example 190 | 4000 | 0 | 2 | nt | nt | nt | 2 | 2 | 1 | 1 | nt |
| Example 191 | 4000 | 2 | 2 | nt | nt | nt | 2 | 2 | 1 | 1 | nt |
| Example 192 | 4000 | 1 | 1 | nt | nt | nt | nt | nt | nt | nt | nt |
| Example 193 | 4000 | 1 | 1 | nt | nt | nt | nt | nt | nt | nt | nt |
| Example 194 | 4000 | 1 | 1 | nt | nt | nt | nt | nt | nt | nt | nt |
| Example 195 | 4000 | 2 | 2 | nt | nt | nt | 2 | nt | nt | nt | nt |
| Example 196 | 4000 | 1 | 1 | nt | nt | nt | 2 | nt | nt | nt | nt |
| Example 197 | 4000 | 1 | 1 | nt | nt | nt | 2 | nt | nt | nt | nt |

EP 4 349 169 A1

| No. | D-Tagatose Content (parts) | Oil Content in Composition (parts) | Content in composition (parts) | | | | | | |
|---|---|---|---|---|---|---|---|---|---|
| | | Oil A | Assistant 1 | Assistant 7 | Assistant 8 | Assistant 9 | Assistant 13 | Assistant 18 | Assistant 22 |
| Example 198 | 40.6 | 59.4 | 0 | 0 | 0 | 0 | 0 | 0 | 0 |
| Example 199 | 40.6 | 59.4 | 0 | 0 | 0 | 0 | 0 | 0 | 0 |
| Example 200 | 40.6 | 59.4 | 0 | 0 | 0 | 0 | 0 | 0 | 0 |
| Example 201 | 40.6 | 59.4 | 0 | 0 | 0 | 0 | 0 | 0 | 0 |
| Example 202 | 40.6 | 59.4 | 0 | 0 | 0 | 0 | 0 | 0 | 0 |
| Example 203 | 40.6 | 59.4 | 0 | 0 | 0 | 0 | 0 | 0 | 0 |
| Example 204 | 40.6 | 59.4 | 0 | 0 | 0 | 0 | 0 | 0 | 0 |
| Example 205 | 40.6 | 59.4 | 0 | 0 | 0 | 0 | 0 | 0 | 0 |
| Example 206 | 40.6 | 59.4 | 0 | 0 | 0 | 0 | 0 | 0 | 0 |
| Example 207 | 40.6 | 59.4 | 0 | 0 | 0 | 0 | 0 | 0 | 0 |
| Example 208 | 40.6 | 59.4 | 0 | 0 | 0 | 0 | 0 | 0 | 0 |
| Example 209 | 40.6 | 54.4 | 0 | 0 | 0 | 0 | 0 | 0 | 0 |
| Example 210 | 40.6 | 56.9 | 0 | 0 | 0 | 0 | 0 | 0 | 0 |
| Example 211 | 40.6 | 54.4 | 0 | 0 | 0 | 0 | 0 | 0 | 0 |
| Example 212 | 40.6 | 56.9 | 0 | 0 | 0 | 0 | 0 | 0 | 0 |
| Example 213 | 40.6 | 54.4 | 0 | 0 | 0 | 0 | 0 | 0 | 0 |
| Example 214 | 40.6 | 56.9 | 0 | 0 | 0 | 0 | 0 | 0 | 0 |
| Example 215 | 40.6 | 59.4 | 0 | 0 | 0 | 0 | 0 | 0 | 5 |

Continuation of Table 7

[Table 7-4]

| No. | Content in composition (parts) | | | | | | | | |
|---|---|---|---|---|---|---|---|---|---|
| | Assistant 25 | Assistant 26 | Assistant 27 | Assistant 28 | Assistant 29 | Assistant 30 | Assistant 31 | Assistant 32 | Assistant 33 |
| Example 198 | 0 | 0 | 0 | 0 | 0 | 0 | 10 | 0 | 0 |
| Example 199 | 5 | 0 | 0 | 0 | 0 | 0 | 0 | 0 | 0 |
| Example 200 | 2.5 | 0 | 0 | 0 | 0 | 0 | 0 | 0 | 0 |
| Example 201 | 0 | 5 | 0 | 0 | 0 | 0 | 0 | 0 | 0 |
| Example 202 | 0 | 2.5 | 0 | 0 | 0 | 0 | 0 | 0 | 0 |
| Example 203 | 0 | 0 | 5 | 0 | 0 | 0 | 0 | 0 | 0 |
| Example 204 | 0 | 0 | 2.5 | 0 | 0 | 0 | 0 | 0 | 0 |
| Example 205 | 0 | 0 | 0 | 0 | 0 | 0 | 0 | 5 | 0 |
| Example 206 | 0 | 0 | 0 | 0 | 0 | 0 | 0 | 2.5 | 0 |
| Example 207 | 0 | 0 | 0 | 0 | 0 | 0 | 0 | 0 | 5 |
| Example 208 | 0 | 0 | 0 | 0 | 0 | 0 | 0 | 0 | 2.5 |
| Example 209 | 0 | 0 | 0 | 0 | 0 | 0 | 0 | 0 | 0 |
| Example 210 | 0 | 0 | 0 | 0 | 0 | 0 | 0 | 0 | 0 |

Continuation of Table 7

EP 4 349 169 A1

63

(continued)

Continuation of Table 7

Content in composition (parts)

| No. | Assistant 25 | Assistant 26 | Assistant 27 | Assistant 28 | Assistant 29 | Assistant 30 | Assistant 31 | Assistant 32 | Assistant 33 |
|---|---|---|---|---|---|---|---|---|---|
| Example 211 | 0 | 0 | 0 | 0 | 0 | 0 | 0 | 0 | 0 |
| Example 212 | 0 | 0 | 0 | 0 | 0 | 0 | 0 | 0 | 0 |
| Example 213 | 0 | 0 | 0 | 0 | 0 | 0 | 0 | 0 | 0 |
| Example 214 | 0 | 0 | 0 | 0 | 0 | 0 | 0 | 0 | 0 |
| Example 215 | 0 | 0 | 2.5 | 0 | 0 | 0 | 0 | 0 | 0 |

| No. | Assistant 34 | Assistant 35 | Assistant 36 | Assistant 38 | Assistant 39 | Assistant 40 | Assistant 41 | Assistant 42 | Assistant 44 |
|---|---|---|---|---|---|---|---|---|---|
| Example 198 | 0 | 0 | 0 | 0 | 0 | 0 | 0 | 0 | 0.5 |
| Example 199 | 0 | 0 | 0 | 0 | 0 | 0 | 2.5 | 0 | 0.5 |
| Example 200 | 0 | 0 | 0 | 0 | 0 | 0 | 5 | 0 | 0.5 |
| Example 201 | 0 | 0 | 0 | 0 | 0 | 0 | 2.5 | 0 | 0.5 |
| Example 202 | 0 | 0 | 0 | 0 | 0 | 0 | 5 | 0 | 0.5 |
| Example 203 | 0 | 0 | 0 | 0 | 0 | 0 | 2.5 | 0 | 0.5 |
| Example 204 | 0 | 0 | 0 | 0 | 0 | 0 | 5 | 0 | 0.5 |

| Assistant 34 | Assistant 35 | Assistant 36 | Assistant 38 | Assistant 39 | Assistant 40 | Assistant 41 | Assistant 42 | Assistant 44 | |
|---|---|---|---|---|---|---|---|---|---|
| Example 205 | 0 | 0 | 0 | 0 | 0 | 2.5 | 0 | 0 | 0.5 |
| Example 206 | 0 | 0 | 0 | 0 | 0 | 5 | 0 | 0 | 0.5 |
| Example 207 | 0 | 0 | 0 | 0 | 0 | 2.5 | 0 | 0 | 0.5 |
| Example 208 | 0 | 0 | 0 | 0 | 0 | 5 | 0 | 0 | 0.5 |
| Example 209 | 5 | 0 | 0 | 0 | 0 | 2.5 | 0 | 0 | 0.5 |
| Example 210 | 2.5 | 0 | 0 | 0 | 0 | 5 | 0 | 0 | 0.5 |
| Example 211 | 0 | 5 | 0 | 0 | 0 | 2.5 | 0 | 0 | 0.5 |
| Example 212 | 0 | 2.5 | 0 | 0 | 0 | 5 | 0 | 0 | 0.5 |
| Example 213 | 0 | 0 | 5 | 0 | 0 | 2.5 | 0 | 0 | 0.5 |
| Example 214 | 0 | 0 | 2.5 | 0 | 0 | 5 | 0 | 0 | 0.5 |
| Example 215 | 0 | 0 | 0 | 0 | 0 | 0 | 0 | 0 | 0.5 |

| No. | D-Tagatose Content (parts) | Oil Content in Composition (parts) | Content in composition (parts) | | | | | | |
|---|---|---|---|---|---|---|---|---|---|
| | | Oil A | Assistant 1 | Assistant 7 | Assistant 8 | Assistant 9 | Assistant 13 | Assistant 18 | Assistant 22 |
| Example 216 | 40.6 | 59.4 | 0 | 0 | 0 | 0 | 0 | 5 | 0 |

EP 4 349 169 A1

| No. | D-Tagatose Content (parts) | Oil Content in Composition (parts) | Content in composition (parts) | | | | | | | |
|---|---|---|---|---|---|---|---|---|---|---|
| | | Oil A | Assistant 1 | Assistant 7 | Assistant 8 | Assistant 9 | Assistant 13 | Assistant 18 | Assistant 22 |
| Example 217 | 40.6 | 59.4 | 0 | 0 | 0 | 0 | 5 | 0 | 0 |
| Example 218 | 40.6 | 59.4 | 0 | 0 | 0 | 0 | 0 | 0 | 0 |
| Example 219 | 40.6 | 59.4 | 0 | 0 | 0 | 0 | 0 | 0 | 0 |
| Example 220 | 40.6 | 59.4 | 0 | 0 | 0 | 0 | 0 | 0 | 0 |
| Example 221 | 40.6 | 59.4 | 0 | 0 | 0 | 0 | 0 | 0 | 2.5 |
| Example 222 | 40.6 | 59.4 | 0 | 0 | 0 | 0 | 0 | 2.5 | 0 |
| Example 223 | 40.6 | 59.4 | 0 | 0 | 0 | 0 | 2.5 | 0 | 0 |
| Example 224 | 40.6 | 59.4 | 0 | 0 | 0 | 0 | 0 | 0 | 0 |
| Example 225 | 40.6 | 59.4 | 0 | 0 | 0 | 0 | 0 | 0 | 0 |
| Example 226 | 40.6 | 59.4 | 0 | 0 | 0 | 0 | 0 | 0 | 0 |
| Example 227 | 40.6 | 59.4 | 0 | 0 | 0 | 0 | 0 | 0 | 0 |
| Example 228 | 40.6 | 59.4 | 0 | 0 | 0 | 0 | 0 | 0 | 0 |
| Example 229 | 40.6 | 59.4 | 0 | 0 | 0 | 0 | 0 | 0 | 0 |

| No. | D-Tagatose Content (parts) | Oil Content in Composition (parts) | Content in composition (parts) | | | | | | | |
|---|---|---|---|---|---|---|---|---|---|---|
| | | Oil A | Assistant 1 | Assistant 7 | Assistant 8 | Assistant 9 | Assistant 13 | Assistant 18 | Assistant 22 |
| Example 230 | 40.6 | 59.4 | 0 | 0 | 0 | 0 | 0 | 0 | 0 |
| Example 231 | 40.6 | 59.4 | 0 | 0 | 0 | 0 | 0 | 0 | 0 |
| Example 232 | 40.6 | 59.4 | 0 | 0 | 0 | 0 | 0 | 0 | 0 |

| No. | Content in composition (parts) | | | | | | | | |
|---|---|---|---|---|---|---|---|---|---|
| | Assistant 25 | Assistant 26 | Assistant 27 | Assistant 28 | Assistant 29 | Assistant 30 | Assistant 31 | Assistant 32 | Assistant 33 |
| Example 216 | 0 | 0 | 2.5 | 0 | 0 | 0 | 0 | 0 | 0 |
| Example 217 | 0 | 0 | 2.5 | 0 | 0 | 0 | 0 | 0 | 0 |
| Example 218 | 0 | 0 | 2.5 | 0 | 0 | 0 | 0 | 0 | 0 |
| Example 219 | 0 | 0 | 2.5 | 0 | 0 | 0 | 0 | 0 | 0 |
| Example 220 | 0 | 0 | 2.5 | 0 | 0 | 0 | 0 | 0 | 0 |
| Example 221 | 0 | 0 | 2.5 | 0 | 0 | 0 | 0 | 0 | 0 |
| Example 222 | 0 | 0 | 2.5 | 0 | 0 | 0 | 0 | 0 | 0 |
| Example 223 | 0 | 0 | 2.5 | 0 | 0 | 0 | 0 | 0 | 0 |

(continued)

| No. | Assistant 25 | Assistant 26 | Assistant 27 | Assistant 28 | Assistant 29 | Assistant 30 | Assistant 31 | Assistant 32 | Assistant 33 |
|---|---|---|---|---|---|---|---|---|---|
| | | | | Content in composition (parts) | | | | | |
| Example 224 | 0 | 0 | 2.5 | 0 | 0 | 0 | 0 | 0 | 0 |
| Example 225 | 0 | 0 | 2.5 | 0 | 0 | 0 | 0 | 0 | 0 |
| Example 226 | 0 | 0 | 2.5 | 0 | 0 | 0 | 0 | 0 | 0 |
| Example 227 | 0 | 0 | 2.5 | 0 | 0 | 0 | 0 | 0 | 0 |
| Example 228 | 0 | 0 | 2.5 | 0 | 0 | 0 | 0 | 0 | 0 |
| Example 229 | 0 | 0 | 2.5 | 0 | 0 | 0 | 0 | 0 | 0 |
| Example 230 | 0 | 0 | 2.5 | 0 | 0 | 0 | 0 | 0 | 0 |
| Example 231 | 0 | 0 | 2.5 | 0 | 0 | 0 | 0 | 0 | 0 |
| Example 232 | 0 | 0 | 2.5 | 0 | 0 | 0 | 0 | 0 | 0 |
| Assistant 34 | Assistant 35 | Assistant 36 | Assistant 38 | Assistant 39 | Assistant 40 | Assistant 41 | Assistant 42 | Assistant 44 | |
| Example 216 | 0 | 0 | 0 | 0 | 0 | 0 | 0 | 0 | 0.5 |
| Example 217 | 0 | 0 | 0 | 0 | 0 | 0 | 0 | 0 | 0.5 |
| Example 218 | 0 | 0 | 0 | 0 | 5 | 0 | 0 | 0 | 0.5 |
| Example 219 | 0 | 0 | 0 | 5 | 0 | 0 | 0 | 0 | 0.5 |

| Assistant 34 | Assistant 35 | Assistant 36 | Assistant 38 | Assistant 39 | Assistant 40 | Assistant 41 | Assistant 42 | Assistant 44 | |
|---|---|---|---|---|---|---|---|---|---|
| Example 220 | 0 | 0 | 0 | 0 | 0 | 0 | 5 | 0 | 0.5 |
| Example 221 | 0 | 0 | 0 | 0 | 0 | 5 | 0 | 0 | 0.5 |
| Example 222 | 0 | 0 | 0 | 0 | 0 | 5 | 0 | 0 | 0.5 |
| Example 223 | 0 | 0 | 0 | 0 | 0 | 5 | 0 | 0 | 0.5 |
| Example 224 | 0 | 0 | 0 | 0 | 2.5 | 2.5 | 0 | 0 | 0.5 |
| Example 225 | 0 | 0 | 0 | 0 | 5 | 2.5 | 0 | 0 | 0.5 |
| Example 226 | 0 | 0 | 0 | 2.5 | 0 | 2.5 | 0 | 0 | 0.5 |
| Example 227 | 0 | 0 | 0 | 5 | 0 | 2.5 | 0 | 0 | 0.5 |
| Example 228 | 0 | 0 | 0 | 0 | 5 | 5 | 0 | 0 | 0.5 |
| Example 229 | 0 | 0 | 0 | 5 | 0 | 5 | 0 | 0 | 0.5 |
| Example 230 | 0 | 0 | 0 | 0 | 2.5 | 5 | 0 | 0 | 0.5 |
| Example 231 | 0 | 0 | 0 | 2.5 | 0 | 5 | 0 | 0 | 0.5 |
| Example 232 | 0 | 0 | 0 | 0 | 0 | 5 | 2.5 | 0 | 0.5 |

EP 4 349 169 A1

| | | Preventive Value Indices | | | | | | | | | |
|---|---|---|---|---|---|---|---|---|---|---|---|
| No. | D-Tagatose Treatment Concentration (ppm) | CPM | VDM | TGM | VPM | LB | AS | SbR | CPM RF | VDM RF | VPM RF |
| Example 198 | 4000 | 1 | 1 | nt | nt | nt | 2 | nt | nt | nt | nt |
| Example 199 | 4000 | 1 | 0 | nt | nt | nt | 2 | 2 | 1 | 1 | nt |
| Example 200 | 4000 | 1 | 0 | nt | nt | nt | 2 | 2 | 1 | 1 | nt |
| Example 201 | 4000 | 1 | 0 | nt | nt | nt | 2 | 2 | 1 | 1 | nt |
| Example 202 | 4000 | 2 | 1 | nt | nt | nt | 2 | 2 | 1 | 1 | nt |
| Example 203 | 4000 | 1 | 0 | nt | nt | nt | 2 | 2 | 1 | 1 | nt |
| Example 204 | 4000 | 2 | 1 | nt | nt | nt | 2 | 2 | 1 | 1 | nt |
| Example 205 | 4000 | 1 | 2 | nt | nt | nt | 2 | 2 | 1 | 1 | nt |
| Example 206 | 4000 | 1 | 0 | nt | nt | nt | 2 | 2 | 1 | 1 | nt |
| Example 207 | 4000 | 1 | 1 | nt | nt | nt | 2 | 2 | 1 | 1 | nt |
| Example 208 | 4000 | 2 | 0 | nt | nt | nt | 0 | 2 | 1 | 1 | nt |
| Example 209 | 4000 | 2 | 0 | nt | nt | nt | 2 | 2 | 1 | 1 | nt |
| Example 210 | 4000 | 0 | 0 | nt | nt | nt | 0 | 2 | 1 | 1 | nt |

Continuation of Table 7

| Continuation of Table 7 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 211 | 4000 | 1 | 0 | nt | nt | nt | 2 | 2 | 1 | 1 | nt |
| Example 212 | 4000 | 1 | 0 | nt | nt | nt | 2 | 2 | 1 | 1 | nt |
| Example 213 | 4000 | 1 | 0 | nt | nt | nt | 1 | 2 | 1 | 1 | nt |
| Example 214 | 4000 | 2 | 0 | nt | nt | nt | 1 | 2 | 1 | 1 | nt |
| Example 215 | 4000 | 1 | 2 | nt | nt | nt | nt | nt | nt | nt | nt |
| Example 216 | 4000 | 2 | 2 | nt | nt | nt | nt | nt | nt | nt | nt |
| Example 217 | 4000 | 2 | 2 | nt | nt | nt | nt | nt | nt | nt | nt |
| Example 218 | 4000 | 2 | 0 | nt | nt | nt | nt | nt | nt | nt | nt |
| Example 219 | 4000 | 1 | 0 | nt | nt | nt | nt | nt | nt | nt | nt |
| Example 220 | 4000 | 2 | 1 | nt | nt | nt | nt | nt | nt | nt | nt |
| Example 221 | 4000 | 2 | 2 | nt | nt | nt | nt | nt | nt | nt | nt |
| Example 222 | 4000 | 2 | 2 | nt | nt | nt | nt | nt | nt | nt | nt |
| Example 223 | 4000 | 2 | 0 | nt | nt | nt | nt | nt | nt | nt | nt |

| Continuation of Table 7 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | TGM | VPM | LB | AS | SbR | CPM RF | VDM RF | VPM RF |
| Example 224 | 4000 | 1 | 1 | nt | nt | nt | 2 | 2 | 1 | 1 | nt |
| Example 225 | 4000 | 2 | 0 | nt | nt | nt | 2 | 2 | 1 | 1 | nt |
| Example 226 | 4000 | 1 | 0 | nt | nt | nt | 2 | 2 | 1 | 1 | nt |
| Example 227 | 4000 | 1 | 2 | nt | nt | nt | 2 | 2 | 1 | 1 | nt |
| Example 228 | 4000 | 1 | 0 | nt | nt | nt | 2 | 2 | 1 | 1 | nt |
| Example 229 | 4000 | 1 | 1 | nt | nt | nt | 2 | 2 | 1 | 1 | nt |
| Example 230 | 4000 | 1 | 1 | nt | nt | nt | 2 | 2 | 1 | 1 | nt |
| Example 231 | 4000 | 1 | 1 | nt | nt | nt | 2 | 2 | 1 | 1 | nt |
| Example 232 | 4000 | 2 | 0 | nt | nt | nt | nt | nt | nt | nt | nt |

EP 4 349 169 A1

The plant disease control agents comprising D-tagatose, liquid paraffin and the surfactant (nonionic surfactants and anionic surfactants) showed significantly improved efficacy and rainfastness compared to D-tagatose wettable powders formulation against cucumber powdery mildew, vine downy mildew, tomato gray mold, vine powdery mildew, tomato late blight, apple scab and soybean rust.

[Test Example 6] Evaluation of a plant disease control agent comprising D-tagatose, various oil components and a surfactant (nonionic surfactants and anionic surfactants)

The efficacy and rainfastness of plant disease control agents comprising D-tagatose, various oil components and a surfactant (nonionic surfactants and anionic surfactants) prepared in the Examples were evaluated against diseases such as cucumber powdery mildew. They were evaluated using as the indices the degree of improvement in the preventive value and the degree of improvement in rainfastness, as with Test Example 1. The results are shown in Table 8.

[Table 8-1]

Table 8: Composition, Efficacy and Rainfastness of Plant Disease Control Agent comprising D-Tagatose, various Oil componets and Surfactant (Nonionic Surfactant, Anionic Surfactant)

| No. | D-Taga-tose Con-tent (parts) | Content in composition (parts) | | | | | | | | | | | | | | | | | | |
|---|---|---|---|---|---|---|---|---|---|---|---|---|---|---|---|---|---|---|---|---|
| | | Oil A | Oil B | Oil C | Oil D | Oil E | Oil F | Oil G | Oil H | Oil I | Oil J | Oil K | Oil L | Oil H | Assistant 1 | Assistant 7 | Assistant 8 | Assistant 20 | Assistant 44 |
| Example 233 | 40.6 | 59.4 | 0 | 0 | 0 | 0 | 0 | 0 | 0 | 0 | 0 | 0 | 0 | 0 | 0 | 0 | 0 | 0 | 0 |
| Example 234 | 40.6 | 51.98 | 0 | 0 | 0 | 0 | 0 | 0 | 0 | 0 | 0 | 0 | 0 | 0 | 7.42 | 0 | 0 | 0 | 0 |
| Example 235 | 40.6 | 51.86 | 0 | 0 | 0 | 0 | 0 | 0 | 0 | 0 | 0 | 0 | 0 | 0 | 0 | 7.41 | 0 | 0 | 0.13 |
| Example 236 | 40.6 | 51.86 | 0 | 0 | 0 | 0 | 0 | 0 | 0 | 0 | 0 | 0 | 0 | 0 | 0 | 0 | 0 | 7.41 | 0.13 |
| Example 237 | 40.6 | 51.86 | 0 | 0 | 0 | 0 | 0 | 0 | 0 | 0 | 0 | 0 | 0 | 0 | 0 | 0 | 7.41 | 0 | 0.13 |
| Example 238 | 40.6 | 0 | 59.4 | 0 | 0 | 0 | 0 | 0 | 0 | 0 | 0 | 0 | 0 | 0 | 0 | 0 | 0 | 0 | 0 |
| Example 239 | 40.6 | 0 | 51.98 | 0 | 0 | 0 | 0 | 0 | 0 | 0 | 0 | 0 | 0 | 0 | 7.42 | 0 | 0 | 0 | 0 |
| Example 240 | 40.6 | 0 | 51.86 | 0 | 0 | 0 | 0 | 0 | 0 | 0 | 0 | 0 | 0 | 0 | 0 | 7.41 | 0 | 0 | 0.13 |
| Example 241 | 40.6 | 0 | 51.86 | 0 | 0 | 0 | 0 | 0 | 0 | 0 | 0 | 0 | 0 | 0 | 0 | 0 | 0 | 7.41 | 0.13 |
| Example 242 | 40.6 | 0 | 51.86 | 0 | 0 | 0 | 0 | 0 | 0 | 0 | 0 | 0 | 0 | 0 | 0 | 0 | 7.41 | 0 | 0.13 |
| Example 243 | 40.6 | 0 | 0 | 59.4 | 0 | 0 | 0 | 0 | 0 | 0 | 0 | 0 | 0 | 0 | 0 | 0 | 0 | 0 | 0 |
| Example 244 | 40.6 | 0 | 0 | 51.98 | 0 | 0 | 0 | 0 | 0 | 0 | 0 | 0 | 0 | 0 | 7.42 | 0 | 0 | 0 | 0 |

74

Table 8: Composition, Efficacy and Rainfastness of Plant Disease Control Agent comprising D-Tagatose,various Oil componets and Surfactant (Nonionic Surfactant, Anionic Surfactant)

| No. | D-Tagatose Content (parts) | Content in composition (parts) | | | | | | | | | | | | | | | | | |
|---|---|---|---|---|---|---|---|---|---|---|---|---|---|---|---|---|---|---|---|
| | | Oil A | Oil B | Oil C | Oil D | Oil E | Oil F | Oil G | Oil H | Oil I | Oil J | Oil K | Oil L | Oil H | Assistant 1 | Assistant 7 | Assistant 8 | Assistant 20 | Assistant 44 |
| Example 245 | 40.6 | 0 | 0 | 51.86 | 0 | 0 | 0 | 0 | 0 | 0 | 0 | 0 | 0 | 0 | 0 | 7.41 | 0 | 0 | 0.13 |
| Example 246 | 40.6 | 0 | 0 | 0 | 59.4 | 0 | 0 | 0 | 0 | 0 | 0 | 0 | 0 | 0 | 0 | 0 | 0 | 0 | 0 |
| Example 247 | 40.6 | 0 | 0 | 0 | 51.98 | 0 | 0 | 0 | 0 | 0 | 0 | 0 | 0 | 0 | 7.42 | 0 | 0 | 0 | 0 |
| Example 248 | 40.6 | 0 | 0 | 0 | 51.86 | 0 | 0 | 0 | 0 | 0 | 0 | 0 | 0 | 0 | 0 | 7.41 | 0 | 0 | 0.13 |
| Example 249 | 40.6 | 0 | 0 | 0 | 0 | 59.4 | 0 | 0 | 0 | 0 | 0 | 0 | 0 | 0 | 0 | 0 | 0 | 0 | 0 |
| Example 250 | 40.6 | 0 | 0 | 0 | 0 | 51.98 | 0 | 0 | 0 | 0 | 0 | 0 | 0 | 0 | 7.42 | 0 | 0 | 0 | 0 |
| Example 251 | 40.6 | 0 | 0 | 0 | 0 | 51.86 | 0 | 0 | 0 | 0 | 0 | 0 | 0 | 0 | 0 | 7.41 | 0 | 0 | 0.13 |
| Example 252 | 40.6 | 0 | 0 | 0 | 0 | 51.86 | 0 | 0 | 0 | 0 | 0 | 0 | 0 | 0 | 0 | 0 | 0 | 7.41 | 0.13 |
| Example 253 | 40.6 | 0 | 0 | 0 | 0 | 51.86 | 0 | 0 | 0 | 0 | 0 | 0 | 0 | 0 | 0 | 0 | 7.41 | 0 | 0.13 |
| Example 254 | 40.6 | 0 | 0 | 0 | 0 | 0 | 59.4 | 0 | 0 | 0 | 0 | 0 | 0 | 0 | 0 | 0 | 0 | 0 | 0 |
| Example 255 | 40.6 | 0 | 0 | 0 | 0 | 0 | 51.98 | 0 | 0 | 0 | 0 | 0 | 0 | 0 | 7.42 | 0 | 0 | 0 | 0 |
| Example 256 | 40.6 | 0 | 0 | 0 | 0 | 0 | 51.86 | 0 | 0 | 0 | 0 | 0 | 0 | 0 | 0 | 7.41 | 0 | 0 | 0.13 |

EP 4 349 169 A1

| No. | D-Taga-tose Content (parts) | Content in composition (parts) | | | | | | | | | | | | | | | | | |
|---|---|---|---|---|---|---|---|---|---|---|---|---|---|---|---|---|---|---|---|
| | | Oil A | Oil B | Oil C | Oil D | Oil E | Oil F | Oil G | Oil H | Oil I | Oil J | Oil K | Oil L | Oil H | Assistant 1 | Assistant 7 | Assistant 8 | Assistant 20 | Assistant 44 |
| Example 257 | 40.6 | 0 | 0 | 0 | 0 | 0 | 51.86 | 0 | 0 | 0 | 0 | 0 | 0 | 0 | 0 | 0 | 0 | 7.41 | 0.13 |
| Example 258 | 40.6 | 0 | 0 | 0 | 0 | 0 | 51.86 | 0 | 0 | 0 | 0 | 0 | 0 | 0 | 0 | 0 | 7.41 | 0 | 0.13 |
| Example 259 | 40.6 | 0 | 0 | 0 | 0 | 0 | 0 | 0 | 0 | 0 | 0 | 0 | 0 | 0 | 0 | 0 | 0 | 0 | 0 |
| Example 260 | 40.6 | 0 | 0 | 0 | 0 | 0 | 0 | 51.98 | 0 | 0 | 0 | 0 | 0 | 0 | 7.42 | 0 | 0 | 0 | 0 |
| Example 261 | 40.6 | 0 | 0 | 0 | 0 | 0 | 0 | 51.86 | 0 | 0 | 0 | 0 | 0 | 0 | 0 | 7.41 | 0 | 0 | 0.13 |
| Example 262 | 40.6 | 0 | 0 | 0 | 0 | 0 | 0 | 0 | 59.4 | 0 | 0 | 0 | 0 | 0 | 0 | 0 | 0 | 0 | 0 |
| Example 263 | 40.6 | 0 | 0 | 0 | 0 | 0 | 0 | 0 | 51.98 | 0 | 0 | 0 | 0 | 0 | 7.42 | 0 | 0 | 0 | 0 |
| Example 264 | 40.6 | 0 | 0 | 0 | 0 | 0 | 0 | 0 | 51.86 | 0 | 0 | 0 | 0 | 0 | 0 | 7.41 | 0 | 0 | 0.13 |

Table 8: Composition, Efficacy and Rainfastness of Plant Disease Control Agent comprising D-Tagatose, various Oil componets and Surfactant (Nonionic Surfactant, Anionic Surfactant)

[Table 8-2]

| No. | D-Tagatose Treatment Concentration (ppm) | Preventive Value Indices | | | | | | | | | |
|---|---|---|---|---|---|---|---|---|---|---|---|
| | | CPM | VDM | VPM | TGM | LB | AS | SbR | CPM RF | VDM RF | VPM RF |
| Example 233 | 4000 | - | - | - | - | - | - | - | - | - | - |
| Example 234 | 4000 | 1 | 2 | 2 | 0 | 2 | nt | nt | 1 | 1 | 1 |
| Example 235 | 4000 | 1 | 2 | 2 | 2 | 1 | nt | nt | 1 | 1 | nt |
| Example 236 | 4000 | 2 | 2 | nt | nt | nt | nt | nt | nt | nt | nt |
| Example 237 | 4000 | 1 | 1 | nt | nt | nt | nt | nt | nt | nt | nt |
| Example 238 | 4000 | - | - | - | - | - | - | - | - | - | - |
| Example 239 | 4000 | 2 | 2 | 2 | 1 | 2 | nt | nt | 1 | 1 | 1 |
| Example 240 | 4000 | 2 | 2 | 2 | 5 | 0 | nt | nt | 0 | 1 | 1 |
| Example 241 | 4000 | 1 | 0 | nt | nt | nt | nt | nt | nt | nt | nt |
| Example 242 | 4000 | 0 | 1 | nt | nt | nt | nt | nt | nt | nt | nt |
| Example 243 | 4000 | - | - | - | - | - | - | - | - | - | - |
| Example 244 | 4000 | 2 | 2 | nt | 1 | nt | nt | nt | nt | nt | nt |
| Example 245 | 4000 | 0 | 2 | nt | 0 | nt | nt | nt | nt | nt | nt |
| Example 246 | 4000 | - | - | - | - | - | - | - | - | - | - |
| Example 247 | 4000 | 2 | 2 | 2 | 2 | 0 | nt | nt | 1 | 1 | 1 |
| Example 248 | 4000 | 0 | 2 | 0 | 1 | 0 | nt | nt | 1 | 1 | 1 |
| Example 249 | 4000 | - | - | - | - | - | - | - | - | - | - |
| Example 250 | 4000 | 2 | 2 | 2 | 0 | nt | nt | nt | 1 | 1 | 1 |
| Example 251 | 4000 | 2 | 2 | 2 | 1 | nt | nt | nt | 1 | 1 | 1 |
| Example 252 | 4000 | 2 | 0 | nt | nt | nt | nt | nt | nt | nt | nt |
| Example 253 | 4000 | 2 | 2 | nt | nt | nt | nt | nt | nt | nt | nt |

(continued)

| No. | D-Tagatose Treatment Concentration (ppm) | Preventive Value Indices | | | | | | | | | |
|---|---|---|---|---|---|---|---|---|---|---|---|
| | | CPM | VDM | VPM | TGM | LB | AS | SbR | CPM RF | VDM RF | VPM RF |
| Example 254 | 4000 | - | - | - | - | - | - | - | - | - | - |
| Example 255 | 4000 | 2 | 2 | 2 | 2 | 2 | nt | nt | 1 | 1 | 1 |
| Example 256 | 4000 | 2 | 2 | 2 | 1 | 0 | nt | nt | 1 | 1 | 1 |
| Example 257 | 4000 | 2 | 1 | nt | nt | nt | nt | nt | nt | nt | nt |
| Example 258 | 4000 | 1 | 2 | nt | nt | nt | nt | nt | nt | nt | nt |
| Example 259 | 4000 | - | - | - | - | - | - | - | - | - | - |
| Example 260 | 4000 | 2 | 2 | 2 | 2 | 1 | nt | nt | 1 | 1 | 1 |
| Example 261 | 4000 | 2 | 2 | 2 | 0 | 0 | nt | nt | 1 | 1 | 1 |
| Example 262 | 4000 | - | - | - | - | - | - | - | - | - | - |
| Example 263 | 4000 | 2 | 2 | 2 | 1 | 0 | nt | nt | 1 | 1 | 1 |
| Example 264 | 4000 | 1 | 0 | 2 | 0 | 1 | nt | nt | 1 | 1 | 1 |

[Table 8-3]

| | | Content in composition (parts) | | | | | | | | | | | | | | | | | |
|---|---|---|---|---|---|---|---|---|---|---|---|---|---|---|---|---|---|---|---|
| No. | D-Taga-tose Con-tent (parts) | Oil A | Oil B | Oil C | Oil D | Oil E | Oil F | Oil G | Oil H | Oil I | Oil J | Oil K | Oil L | Oil M | Assistant 1 | Assistant 7 | Assistant 8 | Assistant 20 | Assistant 44 |
| Example 265 | 40.6 | 0 | 0 | 0 | 0 | 0 | 0 | 0 | 0 | 59.4 | 0 | 0 | 0 | 0 | 0 | 0 | 0 | 0 | 0 |
| Example 266 | 40.6 | 0 | 0 | 0 | 0 | 0 | 0 | 0 | 0 | 51.98 | 0 | 0 | 0 | 0 | 7.42 | 0 | 0 | 0 | 0 |
| Example 267 | 40.6 | 0 | 0 | 0 | 0 | 0 | 0 | 0 | 0 | 51.86 | 0 | 0 | 0 | 0 | 0 | 7.41 | 0 | 0 | 0.13 |
| Example 268 | 40.6 | 0 | 0 | 0 | 0 | 0 | 0 | 0 | 0 | 0 | 59.4 | 0 | 0 | 0 | 0 | 0 | 0 | 0 | 0 |
| Example 269 | 40.6 | 0 | 0 | 0 | 0 | 0 | 0 | 0 | 0 | 0 | 51.98 | 0 | 0 | 0 | 7.42 | 0 | 0 | 0 | 0 |
| Example 270 | 40.6 | 0 | 0 | 0 | 0 | 0 | 0 | 0 | 0 | 0 | 51.86 | 0 | 0 | 0 | 0 | 7.41 | 0 | 0 | 0.13 |
| Example 271 | 40.6 | 0 | 0 | 0 | 0 | 0 | 0 | 0 | 0 | 0 | 0 | 59.4 | 0 | 0 | 0 | 0 | 0 | 0 | 0 |
| Example 272 | 40.6 | 0 | 0 | 0 | 0 | 0 | 0 | 0 | 0 | 0 | 0 | 51.98 | 0 | 0 | 7.42 | 0 | 0 | 0 | 0 |
| Example 213 | 40.6 | 0 | 0 | 0 | 0 | 0 | 0 | 0 | 0 | 0 | 0 | 51.86 | 0 | 0 | 0 | 7.41 | 0 | 0 | 0.13 |
| Example 274 | 40.6 | 0 | 0 | 0 | 0 | 0 | 0 | 0 | 0 | 0 | 0 | 0 | 59.4 | 0 | 0 | 0 | 0 | 0 | 0 |
| Example 275 | 40.6 | 0 | 0 | 0 | 0 | 0 | 0 | 0 | 0 | 0 | 0 | 0 | 51.98 | 0 | 7.42 | 0 | 0 | 0 | 0 |
| Example 276 | 40.6 | 0 | 0 | 0 | 0 | 0 | 0 | 0 | 0 | 0 | 0 | 0 | 51.86 | 0 | 0 | 7.41 | 0 | 0 | 0.13 |
| Example 277 | 40.6 | 0 | 0 | 0 | 0 | 0 | 0 | 0 | 0 | 0 | 0 | 0 | 51.86 | 0 | 0 | 0 | 0 | 7.41 | 0.13 |

Continuation nf Table 8

| | | Content in composition (parts) | | | | | | | | | | | | | | | | | |
|---|---|---|---|---|---|---|---|---|---|---|---|---|---|---|---|---|---|---|---|
| No. | D-Taga-tose Con-tent (parts) | Oil A | Oil B | Oil C | Oil D | Oil E | Oil F | Oil G | Oil H | Oil I | Oil J | Oil K | Oil L | Oil M | Assistant 1 | Assistant 7 | Assistant 8 | Assistant 20 | Assistant 44 |
| Example 278 | 40.6 | 0 | 0 | 0 | 0 | 0 | 0 | 0 | 0 | 0 | 0 | 0 | 51.86 | 0 | 0 | 0 | 7.41 | 0 | 0.13 |
| Example 279 | 40.6 | 0 | 0 | 0 | 0 | 0 | 0 | 0 | 0 | 0 | 0 | 0 | 0 | 59.4 | 0 | 0 | 0 | 0 | 0 |
| Example 280 | 40.6 | 0 | 0 | 0 | 0 | 0 | 0 | 0 | 0 | 0 | 0 | 0 | 0 | 51.98 | 7.42 | 0 | 0 | 0 | 0 |
| Example 281 | 40.6 | 0 | 0 | 0 | 0 | 0 | 0 | 0 | 0 | 0 | 0 | 0 | 0 | 51.86 | 0 | 7.41 | 0 | 0 | 0.13 |
| Example 282 | 40.6 | 0 | 0 | 0 | 0 | 0 | 0 | 0 | 0 | 0 | 0 | 0 | 0 | 51.86 | 0 | 0 | 0 | 7.41 | 0.13 |
| Example 283 | 40.6 | 0 | 0 | 0 | 0 | 0 | 0 | 0 | 0 | 0 | 0 | 0 | 0 | 51.86 | 0 | 0 | 7.41 | 0 | 0.13 |
| Example 284 | 40.6 | 0 | 0 | 0 | 0 | 25.93 | 25.93 | 0 | 0 | 0 | 0 | 0 | 0 | 0 | 7.42 | 0 | 0 | 0 | 0 |
| Example 285 | 40.6 | 0 | 0 | 0 | 0 | 25.93 | 25.93 | 0 | 0 | 0 | 0 | 0 | 0 | 0 | 0 | 7.41 | 0 | 0 | 0.13 |
| Example 286 | 40.6 | 0 | 0 | 0 | 0 | 25.93 | 25.93 | 0 | 0 | 0 | 0 | 0 | 0 | 0 | 0 | 0 | 0 | 7.41 | 0.13 |
| Example 287 | 40.6 | 0 | 0 | 0 | 0 | 25.93 | 25.93 | 0 | 0 | 0 | 0 | 0 | 0 | 0 | 0 | 0 | 7.41 | 0 | 0.13 |
| Example 288 | 40.6 | 0 | 0 | 0 | 0 | 25.93 | 0 | 0 | 0 | 0 | 0 | 0 | 25.93 | 0 | 7.42 | 0 | 0 | 0 | 0 |
| Example 289 | 40.6 | 0 | 0 | 0 | 0 | 25.93 | 0 | 0 | 0 | 0 | 0 | 0 | 25.93 | 0 | 0 | 7.41 | 0 | 0 | 0.13 |
| Example 290 | 40.6 | 0 | 0 | 0 | 0 | 25.93 | 0 | 0 | 0 | 0 | 0 | 0 | 25.93 | 0 | 0 | 0 | 0 | 7.41 | 0.13 |

Continuation nf Table 8

EP 4 349 169 A1

80

(continued)

| | | Content in composition (parts) | | | | | | | | | | | | | | | | | |
|---|---|---|---|---|---|---|---|---|---|---|---|---|---|---|---|---|---|---|---|
| No. | D-Taga-tose Content (parts) | Oil A | Oil B | Oil C | Oil D | Oil E | Oil F | Oil G | Oil H | Oil I | Oil J | Oil K | Oil L | Oil M | Assistant 1 | Assistant 7 | Assistant 8 | Assistant 20 | Assistant 44 |
| Example 291 | 40.6 | 0 | 0 | 0 | 0 | 25.93 | 0 | 0 | 0 | 0 | 0 | 0 | 25.93 | 0 | 0 | 0 | 7.41 | 0 | 0.13 |
| Example 292 | 40.6 | 0 | 25.93 | 0 | 0 | 25.93 | 0 | 0 | 0 | 0 | 0 | 0 | 0 | 0 | 7.42 | 0 | 0 | 0 | 0 |
| Example 293 | 40.6 | 0 | 25.93 | 0 | 0 | 25.93 | 0 | 0 | 0 | 0 | 0 | 0 | 0 | 0 | 0 | 7.41 | 0 | 0 | 0.13 |
| Example 294 | 40.6 | 0 | 25.93 | 0 | 0 | 25.93 | 0 | 0 | 0 | 0 | 0 | 0 | 0 | 0 | 0 | 0 | 0 | 7.41 | 0.13 |
| Example 295 | 40.6 | 0 | 25.93 | 0 | 0 | 25.93 | 0 | 0 | 0 | 0 | 0 | 0 | 0 | 0 | 0 | 0 | 7.41 | 0 | 0.13 |
| Example 296 | 40.6 | 25.93 | 0 | 0 | 0 | 25.93 | 0 | 0 | 0 | 0 | 0 | 0 | 0 | 0 | 7.42 | 0 | 0 | 0 | 0 |

Continuation nf Table 8".

EP 4 349 169 A1

[Table 8-4]

| No. | D-Tagatose Treatment Concentration (ppm) | Preventive Value Indices | | | | | | | | | |
|---|---|---|---|---|---|---|---|---|---|---|---|
| | | CPM | VDM | VPM | TGM | LB | AS | SbR | CPM RF | VDM RF | VPMRF |
| Example 265 | 4000 | - | - | - | - | - | - | - | - | - | - |
| Example 266 | 4000 | 2 | 2 | 2 | 0 | 0 | nt | nt | 1 | 1 | 1 |
| Example 267 | 4000 | 2 | 2 | 2 | 0 | 0 | nt | nt | 1 | 1 | 1 |
| Example 268 | 4000 | - | - | - | - | - | - | - | - | - | - |
| Example 269 | 4000 | 2 | 2 | 2 | 0 | 0 | nt | nt | 1 | 1 | 1 |
| Example 270 | 4000 | 2 | 2 | 2 | 0 | 0 | nt | nt | 0 | 1 | 1 |
| Example 271 | 4000 | - | - | - | - | - | - | - | - | - | - |
| Example 272 | 4000 | 2 | 2 | 2 | 0 | 0 | nt | nt | 1 | 1 | 1 |
| Example 273 | 4000 | 2 | 2 | 2 | 0 | 0 | nt | nt | 1 | 1 | 1 |
| Example 274 | 4000 | - | - | - | - | - | - | - | - | - | - |
| Example 275 | 4000 | 2 | 2 | 2 | 0 | 0 | nt | nt | 1 | 1 | 0 |
| Example 276 | 4000 | 2 | 2 | 2 | 0 | 0 | nt | nt | 0 | 1 | 1 |
| Example 277 | 4000 | 2 | 1 | nt | nt | nt | nt | nt | nt | nt | nt |
| Example 278 | 4000 | 2 | 1 | nt | nt | nt | nt | nt | nt | nt | nt |
| Example 279 | 4000 | - | - | - | - | - | - | - | - | - | - |
| Example 280 | 4000 | 2 | 2 | nt | nt | nt | nt | nt | nt | nt | nt |
| Example 281 | 4000 | 2 | 2 | nt | nt | nt | nt | nt | nt | nt | nt |
| Example 282 | 4000 | 2 | 1 | nt | nt | nt | nt | nt | nt | nt | nt |
| Example 283 | 4000 | nt | 2 | nt | nt | nt | nt | nt | nt | nt | nt |
| Example 284 | 4000 | 1 | 1 | nt | nt | nt | nt | nt | nt | nt | nt |
| Example 285 | 4000 | 2 | 2 | at | nt | nt | nt | nt | nt | nt | nt |

(continued)

| No. | D-Tagatose Treatment Concentration (ppm) | Preventive Value Indices | | | | | | | | | |
|---|---|---|---|---|---|---|---|---|---|---|---|
| | | CPM | VDM | VPM | TGM | LB | AS | SbR | CPM RF | VDM RF | VPMRF |
| Example 286 | 4000 | 2 | 1 | nt | nt | nt | nt | nt | nt | nt | nt |
| Example 287 | 4000 | 2 | 1 | nt | nt | nt | nt | nt | nt | nt | nt |
| Example 288 | 4000 | 2 | 2 | nt | nt | nt | nt | nt | nt | nt | nt |
| Example 289 | 4000 | 2 | 2 | nt | nt | nt | nt | nt | nt | nt | nt |
| Example 290 | 4000 | nt | 1 | nt | nt | nt | nt | nt | nt | nt | nt |
| Example 291 | 4000 | nt | 2 | nt | nt | nt | nt | nt | nt | nt | nt |
| Example 292 | 4000 | nt | 1 | nt | nt | nt | nt | nt | nt | nt | nt |
| Example 293 | 4000 | 2 | 2 | nt | nt | nt | nt | nt | nt | nt | nt |
| Example 294 | 4000 | 2 | 1 | nt | nt | nt | nt | nt | nt | nt | nt |
| Example 295 | 4000 | 2 | 2 | nt | nt | nt | nt | nt | nt | nt | nt |
| Example 296 | 4000 | 2 | 1 | nt | nt | nt | nt | nt | nt | nt | nt |

[Table 8-5]

| No. | D-Taga-tose Content (parts) | Content in composition (parts) | | | | | | | | | | | | | | | | | |
|---|---|---|---|---|---|---|---|---|---|---|---|---|---|---|---|---|---|---|---|
| | | Oil A | Oil B | Oil C | Oil D | Oil E | Oil F | Oil G | Oil H | Oil I | Oil J | Oil K | Oil L | Oil M | Assistant 1 | Assistant 7 | Assistant 8 | Assistant 20 | Assistant 44 |
| Example 297 | 40.6 | 25.93 | 0 | 0 | 0 | 25.93 | 0 | 0 | 0 | 0 | 0 | 0 | 0 | 0 | 0 | 7.41 | 0 | 0 | 0.13 |
| Example 298 | 40.6 | 25.93 | 0 | 0 | 0 | 25.93 | 0 | 0 | 0 | 0 | 0 | 0 | 0 | 0 | 0 | 0 | 0 | 7.41 | 0.13 |
| Example 299 | 40.6 | 25.93 | 0 | 0 | 0 | 25.93 | 0 | 0 | 0 | 0 | 0 | 0 | 0 | 0 | 0 | 0 | 7.41 | 0 | 0.13 |
| Example 300 | 40.6 | 0 | 0 | 0 | 0 | 0 | 25.93 | 0 | 0 | 0 | 0 | 0 | 25.93 | 0 | 7.42 | 0 | 0 | 0 | 0 |
| Example 301 | 40.6 | 0 | 0 | 0 | 0 | 0 | 25.93 | 0 | 0 | 0 | 0 | 0 | 25.93 | 0 | 0 | 7.41 | 0 | 0 | 0.13 |
| Example 302 | 40.6 | 0 | 0 | 0 | 0 | 0 | 25.93 | 0 | 0 | 0 | 0 | 0 | 25.93 | 0 | 0 | 0 | 0 | 7.41 | 0.13 |
| Example 303 | 40.6 | 0 | 0 | 0 | 0 | 0 | 25.93 | 0 | 0 | 0 | 0 | 0 | 25.93 | 0 | 0 | 0 | 7.41 | 0 | 0.13 |
| Example 304 | 40.6 | 0 | 25.93 | 0 | 0 | 0 | 25.93 | 0 | 0 | 0 | 0 | 0 | 0 | 0 | 7.42 | 0 | 0 | 0 | 0 |
| Example 305 | 40.6 | 0 | 25.93 | 0 | 0 | 0 | 25.93 | 0 | 0 | 0 | 0 | 0 | 0 | 0 | 0 | 7.41 | 0 | 0 | 0.13 |
| Example 306 | 40.6 | 0 | 25.93 | 0 | 0 | 0 | 25.93 | 0 | 0 | 0 | 0 | 0 | 0 | 0 | 0 | 0 | 0 | 7.41 | 0.13 |
| Example 307 | 40.6 | 0 | 25.93 | 0 | 0 | 0 | 25.93 | 0 | 0 | 0 | 0 | 0 | 0 | 0 | 0 | 0 | 7.41 | 0 | 0.13 |
| Example 308 | 40.6 | 25.93 | 0 | 0 | 0 | 0 | 25.93 | 0 | 0 | 0 | 0 | 0 | 0 | 0 | 7.42 | 0 | 0 | 0 | 0 |
| Example 309 | 40.6 | 25.93 | 0 | 0 | 0 | 0 | 25.93 | 0 | 0 | 0 | 0 | 0 | 0 | 0 | 0 | 7.41 | 0 | 0 | 0.13 |

Continuation of Table 8

84

EP 4 349 169 A1

Continuation of Table 8

| No. | D-Taga-tose Con-tent (parts) | Content in composition (parts) | | | | | | | | | | | | | | | | | | |
|---|---|---|---|---|---|---|---|---|---|---|---|---|---|---|---|---|---|---|---|---|
| | | Oil A | Oil B | Oil C | Oil D | Oil E | Oil F | Oil G | Oil H | Oil I | Oil J | Oil K | Oil L | Oil M | Assistant 1 | Assistant 7 | Assistant 8 | Assistant 20 | Assistant 44 |
| Example 310 | 40.6 | 25.93 | 0 | 0 | 0 | 0 | 25.93 | 0 | 0 | 0 | 0 | 0 | 0 | 0 | 0 | 0 | 0 | 7.41 | 0.13 |
| Example 311 | 40.6 | 25.93 | 0 | 0 | 0 | 0 | 25.93 | 0 | 0 | 0 | 0 | 0 | 0 | 0 | 0 | 0 | 7.41 | 0 | 0.13 |
| Example 312 | 40.6 | 25.93 | 0 | 0 | 0 | 0 | 0 | 0 | 0 | 0 | 0 | 0 | 25.93 | 0 | 7.42 | 0 | 0 | 0 | 0 |
| Example 313 | 40.6 | 25.93 | 0 | 0 | 0 | 0 | 0 | 0 | 0 | 0 | 0 | 0 | 25.93 | 0 | 0 | 7.41 | 0 | 0 | 0.13 |
| Example 314 | 40.6 | 25.93 | 0 | 0 | 0 | 0 | 0 | 0 | 0 | 0 | 0 | 0 | 25.93 | 0 | 0 | 0 | 0 | 7.41 | 0.13 |
| Example 315 | 40.6 | 25.93 | 0 | 0 | 0 | 0 | 0 | 0 | 0 | 0 | 0 | 0 | 25.93 | 0 | 0 | 0 | 7.41 | 0 | 0.13 |
| Example 316 | 40.6 | 25.93 | 25.93 | 0 | 0 | 0 | 0 | 0 | 0 | 0 | 0 | 0 | 0 | 0 | 7.42 | 0 | 0 | 0 | 0 |
| Example 317 | 40.6 | 25.93 | 25.93 | 0 | 0 | 0 | 0 | 0 | 0 | 0 | 0 | 0 | 0 | 0 | 0 | 7.41 | 0 | 0 | 0.13 |
| Example 318 | 40.6 | 25.93 | 25.93 | 0 | 0 | 0 | 0 | 0 | 0 | 0 | 0 | 0 | 0 | 0 | 0 | 0 | 0 | 7.41 | 0.13 |
| Example 319 | 40.6 | 25.93 | 25.93 | 0 | 0 | 0 | 0 | 0 | 0 | 0 | 0 | 0 | 0 | 0 | 0 | 0 | 7.41 | 0 | 0.13 |
| Example 320 | 40.6 | 25.93 | 0 | 0 | 0 | 0 | 0 | 0 | 0 | 0 | 0 | 0 | 0 | 25.93 | 7.42 | 0 | 0 | 0 | 0 |
| Example 321 | 40.6 | 17.2 | 0 | 0 | 0 | 17.2 | 0 | 0 | 0 | 0 | 0 | 0 | 17.2 | 0 | 0 | 7.41 | 0 | 0 | 0.13 |
| Example 322 | 40.6 | 17.2 | 0 | 0 | 0 | 17.2 | 0 | 0 | 0 | 0 | 0 | 0 | 17.2 | 0 | 0 | 0 | 0 | 7.41 | 0.13 |

EP 4 349 169 A1

| Continuation of Table 8 | | | | | | | | | | | | | | | | | | | |
| No. | D-Taga-tose Con-tent (parts) | Content in composition (parts) | | | | | | | | | | | | | | | | | |
| | | Oil A | Oil B | Oil C | Oil D | Oil E | Oil F | Oil G | Oil H | Oil I | Oil J | Oil K | Oil L | Oil M | Assistant 1 | Assistant 7 | Assistant 8 | Assistant 20 | Assistant 44 |
| Example 323 | 40.6 | 17.2 | 0 | 0 | 0 | 17.2 | 0 | 0 | 0 | 0 | 0 | 0 | 17.2 | 0 | 0 | 0 | 7.41 | 0 | 0.13 |
| Example 324 | 40.6 | 17.2 | 0 | 0 | 0 | 17.2 | 17.2 | 0 | 0 | 0 | 0 | 0 | 0 | 0 | 7.42 | 0 | 0 | 0 | 0 |
| Example 325 | 40.6 | 17.2 | 0 | 0 | 0 | 17.2 | 17.2 | 0 | 0 | 0 | 0 | 0 | 0 | 0 | 0 | 7.41 | 0 | 0 | 0.13 |
| Example 326 | 40.6 | 17.2 | 0 | 0 | 0 | 17.2 | 17.2 | 0 | 0 | 0 | 0 | 0 | 0 | 0 | 0 | 0 | 0 | 7.41 | 0.13 |
| Example 327 | 40.6 | 17.2 | 0 | 0 | 0 | 17.2 | 17.2 | 0 | 0 | 0 | 0 | 0 | 0 | 0 | 0 | 0 | 7.41 | 0 | 0.13 |
| Example 328 | 40.6 | 17.2 | 17.2 | 0 | 0 | 17.2 | 0 | 0 | 0 | 0 | 0 | 0 | 0 | 0 | 7.42 | 0 | 0 | 0 | 0 |

[Table 8-6]

| No. | D-Tagatose Treatment Concentration (ppm) | Preventive Value Indices | | | | | | | | | |
|---|---|---|---|---|---|---|---|---|---|---|---|
| | | CPM | VDM | VPM | TGM | LB | AS | SbR | CPM RF | VDMRF | VPM RF |
| Example 297 | 4000 | 2 | 2 | nt | nt | nt | nt | nt | nt | nt | nt |
| Example 298 | 4000 | 2 | 0 | nt | nt | nt | nt | nt | nt | nt | nt |
| Example 299 | 4000 | 2 | 0 | nt | nt | nt | nt | nt | nt | nt | nt |
| Example 300 | 4000 | 2 | 0 | nt | nt | nt | nt | nt | nt | nt | nt |
| Example 301 | 4000 | 2 | 2 | nt | nt | nt | nt | nt | nt | nt | nt |
| Example 302 | 4000 | 1 | 0 | nt | nt | nt | nt | nt | nt | nt | nt |
| Example 303 | 4000 | 2 | 1 | nt | nt | nt | nt | nt | nt | nt | nt |
| Example 304 | 4000 | 2 | 2 | nt | nt | nt | nt | nt | nt | nt | nt |
| Example 305 | 4000 | 2 | 1 | nt | nt | nt | nt | nt | nt | nt | nt |
| Example 306 | 4000 | 2 | 1 | nt | nt | nt | nt | nt | nt | nt | nt |
| Example 307 | 4000 | 2 | 2 | nt | nt | nt | nt | nt | nt | nt | nt |
| Example 308 | 4000 | 1 | 1 | nt | nt | nt | nt | nt | nt | nt | nt |
| Example 309 | 4000 | 2 | 2 | nt | nt | nt | nt | nt | nt | nt | nt |
| Example 310 | 4000 | 2 | 0 | nt | nt | nt | nt | nt | nt | nt | nt |
| Example 311 | 4000 | 2 | 2 | nt | nt | nt | nt | nt | nt | nt | nt |
| Example 312 | 4000 | 2 | 2 | nt | nt | nt | nt | nt | nt | nt | nt |
| Example 313 | 4000 | nt | 2 | nt | nt | nt | nt | nt | nt | nt | nt |
| Example 314 | 4000 | nt | 2 | nt | nt | nt | nt | nt | nt | nt | nt |
| Example 315 | 4000 | nt | 2 | nt | nt | nt | nt | nt | nt | nt | nt |
| Example 316 | 4000 | nt | 2 | nt | nt | nt | nt | nt | nt | nt | nt |

(continued)

| Continuation of Table 8 | | | | | | | | | | | |
|---|---|---|---|---|---|---|---|---|---|---|---|
| No. | D-Tagatose Treatment Concentration (ppm) | Preventive Value Indices | | | | | | | | | |
| | | CPM | VDM | VPM | TGM | LB | AS | SbR | CPM RF | VDMRF | VPM RF |
| Example 317 | 4000 | 1 | 2 | nt | nt | nt | nt | nt | nt | nt | nt |
| Example 318 | 4000 | 2 | 1 | nt | nt | nt | nt | nt | nt | nt | nt |
| Example 319 | 4000 | 1 | 2 | nt | nt | nt | nt | nt | nt | nt | nt |
| Example 320 | 4000 | 2 | 2 | nt | nt | nt | nt | nt | nt | nt | nt |
| Example 321 | 4000 | nt | 2 | nt | nt | nt | nt | nt | nt | nt | nt |
| Example 322 | 4000 | nt | 1 | nt | nt | nt | nt | nt | nt | nt | nt |
| Example 323 | 4000 | nt | 2 | nt | nt | nt | nt | nt | nt | nt | nt |
| Example 324 | 4000 | nt | 2 | nt | nt | nt | nt | nt | nt | nt | nt |
| Example 325 | 4000 | 2 | 2 | nt | nt | nt | nt | nt | nt | nt | nt |
| Example 326 | 4000 | 2 | 2 | nt | nt | nt | nt | nt | nt | nt | nt |
| Example 327 | 4000 | 2 | 1 | nt | nt | nt | nt | nt | nt | nt | nt |
| Example 328 | 4000 | 2 | 2 | nt | nt | nt | nt | nt | nt | nt | nt |

The plant disease agent comprising D-tagatose, variouse oil components and the surfactant (nonionic surfactants and anionic surfactants) showed significantly improved efficacy and rainfastness compared to D-tagatose wettable powders formulation against cucmber powdey mildwe, vine downy mildwe, tomato gray mold, vine powdey mildew, tomato late blight, apple scab and soybean rust.

[Test Example 7] Evaluation of plant disease control agents abtained by mixing D-tagatose Wettable Powders Formulation in the garden with a commercial speading agent that comprises an oil component and a surfactant

The efficacy and rainfastness of plant disease control agents obtained by mixing D-tagatose wettable powders formulation in the garden with a commercial spreading agent that comprises an oil component and a surfactant were evaluated against diseases such as cucumber powdey mildew. They were evaluated using as the indices the degree of improvement in the preventive value and the degree of improvement in rainfastness, as with Test Example 1. The results are shown in Table 9.

[Table 9]

Table 9: Composition, Efficacy and Rainfastness of Plant Disease Control Agent obtained by mixing D-Tagatose Wettable Powder in the Garden with Commercial Spreading Agent that comprises Oil Component and Surfactant

| Preparation | D-Tagatose Content (parts) | Product Name | Component | Ratio of Preparation to Spreading Agent* | D-Tagatose Treatment Concentration (ppm) | Preventive Value Indices | | | | | | | |
|---|---|---|---|---|---|---|---|---|---|---|---|---|---|
| | | | | | | CPM | VDM | VPM | LB | CPM RF | VDMRF | VPMRF | LB RF |
| Wettable Powder | 24 | Melo | Vegetable fats and oils / Methyl-esterified rapeseed oil | 1:0.5 | 24000 | 1 | 1 | 1 | 1 | 1 | 1 | 1 | 0 |
| | | Tipo | Vegetable fats and oils / Esterified rapeseed oil | 1:1 | | 1 | 1 | 1 | 1 | 1 | 1 | 1 | 1 |
| | | | | 1:0.5 | | 1 | 1 | 1 | 1 | 1 | 1 | 1 | 1 |
| | | Vazyl/Oleo | Mineral oil / Liquid paraffin | 1:1 | | 1 | 1 | 1 | 1 | 1 | 1 | 1 | 0 |
| | | | | 1:0.5 | | 1 | 1 | 1 | 1 | 1 | 1 | 1 | 0 |
| | | Enspray 99 | Mineral oil / Liquid paraffin | 1:1 | | 1 | 1 | 1 | 1 | 1 | 1 | 1 | 1 |
| | | | | 1:0.5 | | 1 | 1 | 1 | 1 | 1 | 1 | 1 | 1 |
| | | Superior 70 oil | Mineral oil / Liquid paraffin | 1:2 | | 1 | 1 | 1 | 1 | 1 | 1 | 1 | 1 |
| | | | | 1:1 | | 1 | 1 | 1 | 1 | 1 | 1 | 1 | 1 |
| | | | | 1:0.5 | | 1 | 1 | 1 | 1 | 1 | 1 | 1 | 1 |
| | | Purespray | Mineral oil / Liquid paraffin | 1:2 | | 1 | 1 | 1 | 1 | 1 | 1 | 1 | 0 |
| | | | | 1:1 | | 1 | 1 | 1 | 1 | 1 | 1 | 1 | 0 |
| | | | | 1:0.5 | | 1 | 1 | 1 | 1 | 1 | 1 | 1 | 0 |
| | | Spraytex +Inbirex | Mineral oil / Liquid paraffin | 1:2 | | 1 | 1 | 1 | 1 | 1 | 1 | nt | nt |
| | | | | 1:1 | | 1 | 1 | 1 | 1 | 1 | 1 | nt | nt |
| | | Iharol | Mineral oil / Liquid paraffin | 1:3 | | 1 | 1 | 1 | 1 | 1 | 1 | nt | nt |

*Expressed as the ratio of D-tagatose contained in the preparation to the oil component contained in the spreading agent

As a result of the rainfastness tests using as an index cucumber powdery mildew, vine downy mildew, vine powdery mildew and tomato late blight, mixing D-tagatose wettable powders formulation with a commercial spreading agent (which agent comprising the oil component and the surfactant) at a ratio of 1:1 or 1:0.5 resulted that mixing with the spreading agent comprising esterified or methyl-esterified vegetable fats and oils, or with the spreading agent comprising liquid paraffin significantly improved rainfastness.

Industrial Applicability

The present invention provides a plant disease control composition containing an oil component and a surfactant, in which the plant disease control effect of D-tagatose is enhanced, a plant disease control method using the plant disease control composition, and a method for enhancing the control effect and/or rainfastness of D-tagatose against plant diseases. The plant disease control composition of the present invention can be used as a foliage spray, soil treatment agent, or seed treatment agent, and can control various plant diseases without causing any chemical damage to the host plant.

**Claims**

1. A plant disease control composition comprising D-tagatose, at least one selected from oil components, and at least one selected from surfactants.

2. The plant disease control composition according to claim 1, wherein the oil component is at least one selected from the group consisting of fats and oils, mineral oils and essential oils.

3. The plant disease control composition according to claim 2, wherein the fats and oils are vegetable fats and oils.

4. The plant disease control composition according to claim 2, wherein the mineral oil is liquid paraffin.

5. The plant disease control composition according to claim 2, wherein the essential oil is at least one selected from the group consisting of orange oil, bergamot oil and lavender oil.

6. The plant disease control composition according to claim 3, wherein the vegetable fats and oils are at least one selected from the group consisting of soybean oil, rapeseed oil, castor oil, flaxseed oil, macadamia nut oil, sunflower oil, olive oil, coconut oil, and fatty acid methyl esterified oil derived from vegetable fats and oils.

7. The plant disease control composition according to any one of claims 1 to 6, wherein the surfactant is at least one selected from the group consisting of nonionic surfactants and anionic surfactants.

8. The plant disease control composition according to claim 7, wherein the nonionic surfactant is at least one selected from the group consisting of polyoxyalkylene alkyl ethers, polyoxyalkylene sorbit fatty acid esters, sorbitan fatty acid esters, glycerin fatty acid esters, sucrose fatty acid esters and polyoxyethylene sorbitan fatty acid esters.

9. The plant disease control composition according to claim 7, wherein the anionic surfactant is at least one selected from the group consisting of lignin sulfonates, formalin condensates of arylsulfonates, polycarboxylates, alpha-olefin sulfonates, alkyl sulfates, sulfosuccinates and arylsulfonates.

10. The plant disease control composition according to any one of claims 1 to 9, which is a plant disease control agent against fungal diseases and bacterial diseases.

11. A plant disease control method, **characterized by** applying the plant disease control composition according to any one of claims 1 to 10 to a plant.

12. The plant disease control method according to claim 11, wherein the application to the plant is carried out by bringing the plant disease control composition into contact with a plant body, or by bringing the plant disease control composition into contact with the roots or underground stems of the plant by containing it in a cultivation soil or hydroponic culture medium.

13. The plant disease control method according to claim 11, wherein the application to the cultivation soil or hydroponic culture medium is carried out, in the case of soil, by treatment of the soil surface with the plant disease control composition, irrigation of the composition into the soil, or incorporation of the composition into the soil, and in the case of hydroponic culture medium, by dilution of the plant disease control composition into the hydroponic culture medium.

**INTERNATIONAL SEARCH REPORT**

| International application No. |
|---|
| **PCT/JP2022/022264** |

**A. CLASSIFICATION OF SUBJECT MATTER**

*A01N 43/16*(2006.01)i; *A01N 25/00*(2006.01)i; *A01N 25/24*(2006.01)i; *A01P 3/00*(2006.01)i
FI: A01N43/16 A; A01N25/00 101; A01N25/24; A01P3/00

According to International Patent Classification (IPC) or to both national classification and IPC

**B. FIELDS SEARCHED**

Minimum documentation searched (classification system followed by classification symbols)

A01N43/16; A01N25/00; A01N25/24; A01P3/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-189642 A (HOKKO CHEM IND CO LTD) 08 July 2004 (2004-07-08) claims, paragraphs [0013], [0015], [0024]-[0026], examples | 1-13 |
| Y | JP 2004-505025 A (BAYER CROPSCIENCE S.A.) 19 February 2004 (2004-02-19) claims, paragraphs [0048], [0053], examples | 1-13 |
| Y | JP 2011-251917 A (TOHO CHEM IND CO LTD) 15 December 2011 (2011-12-15) claims, paragraphs [0012]-[0013], examples | 1-13 |
| Y | JP 2011-219406 A (NISSHIN KAGAKU KENKYUSHO KK) 04 November 2011 (2011-11-04) claims, paragraphs [0018], [0020], [0030], examples | 1-13 |
| Y | WO 2010/021121 A1 (MITSUI CHEMICALS AGRO, INC.) 25 February 2010 (2010-02-25) claims, paragraphs [0038]-[0039], [0041] | 1-13 |
| A | WO 97/46092 A1 (NIPPON SODA CO., LTD.) 11 December 1997 (1997-12-11) claims, examples | 1-13 |

☑ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 July 2022** | **02 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/022264**

| C. | DOCUMENTS CONSIDERED TO BE RELEVANT | |
|---|---|---|
| Category* | Citation of document, with indication, where appropriate, of the relevant passages | Relevant to claim No. |
| A | WO 2005/006863 A1 (MITSUI CHEMICALS, INC.) 27 January 2005 (2005-01-27) claims, examples | 1-13 |

Form PCT/ISA/210 (second sheet) (January 2015)

**INTERNATIONAL SEARCH REPORT**
Information on patent family members

International application No.

**PCT/JP2022/022264**

| Patent document cited in search report | | | Publication date (day/month/year) | Patent family member(s) | | | Publication date (day/month/year) |
|---|---|---|---|---|---|---|---|
| JP | 2004-189642 | A | 08 July 2004 | (Family: none) | | | |
| JP | 2004-505025 | A | 19 February 2004 | US | 2005/0019434 | A1 | |
| | | | | claims, paragraphs [0050], [0054]-[0055], examples | | | |
| | | | | WO | 2002/009517 | A1 | |
| | | | | EP | 1304923 | A1 | |
| | | | | FR | 2812173 | A1 | |
| | | | | AU | 7988001 | A | |
| | | | | BR | 113138 | A | |
| | | | | CA | 2416934 | A | |
| | | | | CZ | 2003565 | A | |
| | | | | BG | 107509 | A | |
| | | | | HU | 302748 | A | |
| | | | | SK | 2432003 | A | |
| | | | | EG | 22852 | A | |
| | | | | IL | 153786 | D | |
| | | | | MA | 25768 | A | |
| | | | | NZ | 523631 | A | |
| | | | | PL | 365081 | A | |
| | | | | TW | 241159 | B | |
| | | | | HK | 1056295 | A | |
| | | | | CN | 1444446 | A | |
| | | | | UY | 26859 | A | |
| | | | | AR | 30066 | A | |
| | | | | RU | 2279801 | C | |
| | | | | ZA | 200300485 | A | |
| | | | | KR | 10-0796960 | B1 | |
| | | | | IL | 153786 | A | |
| | | | | AU | 2001279880 | B | |
| | | | | MX | PA03000663 | A | |
| | | | | TN | SN01111 | A | |
| JP | 2011-251917 | A | 15 December 2011 | (Family: none) | | | |
| JP | 2011-219406 | A | 04 November 2011 | (Family: none) | | | |
| WO | 2010/021121 | A1 | 25 February 2010 | JP | 2015-17113 | A | |
| | | | | US | 2011/0281807 | A1 | |
| | | | | claims, paragraphs [0201]-[0207], [0209] | | | |
| | | | | EP | 2329713 | A1 | |
| | | | | ES | 2686540 | T | |
| | | | | PL | 2329713 | T | |
| | | | | HU | E039203 | T | |
| | | | | PT | 2329713 | T | |
| | | | | CY | 1120755 | T | |
| WO | 97/46092 | A1 | 11 December 1997 | JP | 4018148 | B2 | |
| | | | | US | 6013676 | A | |
| | | | | claims, examples | | | |
| | | | | EP | 853883 | A1 | |
| | | | | AU | 2979197 | A | |
| WO | 2005/006863 | A1 | 27 January 2005 | US | 2006/0235066 | A1 | |
| | | | | claims, examples | | | |

Form PCT/ISA/210 (patent family annex) (January 2015)

INTERNATIONAL SEARCH REPORT
Information on patent family members

International application No.

**PCT/JP2022/022264**

| Patent document cited in search report | Publication date (day/month/year) | Patent family member(s) | | Publication date (day/month/year) |
|---|---|---|---|---|
| | | EP | 1649748 A1 | |
| | | CA | 2532536 A | |
| | | KR | 10-2006-0033011 A | |
| | | CN | 1826052 A | |
| | | HK | 1093399 A | |
| | | EG | 24308 A | |
| | | BR | PI0412749 A | |
| | | IL | 172839 A | |
| | | AU | 2004257506 A | |
| | | TW | 200517056 A | |
| | | CL | 17462004 A | |
| | | ZA | 200600416 A | |
| | | AR | 45725 A | |
| | | AT | 522135 T | |
| | | MY | 141749 A | |
| | | CL | 2004001746 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010021121 A

- WO 2014142074 A

**Non-patent literature cited in the description**

- **RULIS, A. M.** Agency response letter GRAS notice No. GRN 000078. US Food and Drug Administration: Center for Food Safety and Applied Nutrition: Office of Food Additive Safety, 2001

- Joint FAO/WHO expert committee on food additives sixty-third meeting. *Joint FAO/WHO expert committee on food additives sixty-third meeting. Summary and conclusions,* 2004, http://www.fao.org/3/a-at878e.PDF
- The rare sugar D-Tagatose protects plants from downy mildews and is a safe fungicidal agrochemical. *Commun Biol.,* 05 August 2020, vol. 3 (1), 423